# EUROPEAN PATENT SPECIFICATION

(11) **EP 1 453 243 B1**
(45) Date of publication and mention of the grant of the patent: **15.01.2014**
(21) Application number: 04002302.0
(22) Date of filing: 03.02.2004
(51) Int. Cl.: H04L 12/24

(54) **An apparatus and a method for optimizing network resources in data communication**
Verfahren und Vorrichtung zur Optimierung von Netzwerkressourcen in einer Datenkommunikation
Méthode et système pour optimiser les ressources d'un réseau dans la communication de données

(30) Priority: 03.02.2003 JP 2003026374; 03.02.2003 JP 2003026375
(43) Date of publication of application: 01.09.2004
(73) Proprietor: NTT DoCoMo, Inc., Tokyo 100-6150 (JP)
(72) Inventor: Ishii, Kenji, 11-1, Nagatacho 2-chome, Chiyoda-ku Tokyo 100-6150 (JP); Miura, Akira, 11-1, Nagatacho 2-chome, Chiyoda-ku Tokyo 100-6150 (JP); Akinaga, Yoshikazu, 11-1, Nagatacho 2-chome, Chiyoda-ku Tokyo 100-6150 (JP); Yoshizumi, Masashi, 11-1, Nagatacho 2-chome, Chiyoda-ku Tokyo 100-6150 (JP)
(74) Representative: HOFFMANN EITLE

(56) References cited:
- WO-A-02/29427
- US-A- 4 756 019
- US-A- 5 488 609
- US-A- 6 011 780

## Description

### FIELD OF THE INVENTION

The present invention relates to an art for optimizing employment of network resources.

### BACKGROUND OF THE INVENTION

A communication network contains several kinds of nodes such as switches and routers. A node is a computer which can provide one or more node functions, and comprises resources for realizing its node functions, such as calculating means, communicating means and storing means. In the following explanation, resources for realizing node functions are referred to as "node resources".

In an ordinary communication network, node resources and node functions of each node are fixed. In such a network, load on a node sometimes exceeds the capacity of the node. For example, when a larger number of user terminals than expected concentrate in a certain area in a mobile communication network, load on a node which provides services for user terminals in the area may exceed the capacity of the node. To avoid such a problem, node resources of a node on which there is a heavy load are required to be increased even if other nodes have unused node resources, and the efficiency of employment of resources in the network is consequently reduced.

Mainly for the purpose of avoiding such inefficiency, some technologies for optimizing employment of node resources by adaptively changing locations of node functions in a communication network have been proposed. According to these technologies, programmable nodes are used for relocating node functions. Programmable nodes may be categorized into software programmable nodes and hardware programmable nodes. Software programmable nodes can change their functions by selecting certain software from pre-stored software, and hardware programmable nodes can change their functions by using programmable circuits such as FPGA (Field Programmable Gate Array).

Further, technologies of so-called "active network" have been proposed, where data to be transferred through a node contain programs, and the node receiving the data processes the data in accordance with the programs contained in the data (see, for example, Miki Yamamoto: "Trend of technologies of active network," Research Paper of IEICE (Institute of Electronics, Information and Communication Engineers), B, Vol. J84-B, No.8, pp.1401-1412, August 2001). According to the technologies of active network, it is possible to avoid inefficiency in a network as mentioned above, and it is also possible to realize more adaptive node controls.

On the other hand, there are known technologies for optimizing employment of link resources, which are resources used for structuring links such as communication bandwidths and communication channels, by structuring communication paths between nodes in a communication network in an adaptive manner. For example, some routing protocols used in the Internet can realize avoidances of failures and distributions of transfer load. Moreover, some organizations for standardization such as IETF (Internet Engineering Task Force) have proposed some link control technologies such as MPLS (Multi-Protocol Label Switching) and G-MPLS (Generalized Multi-Protocol Label Switching) which can provide means for establishing paths in any section in a network explicitly and dynamically (see, for example, Yoshihiro Nakahira, "Outline and standing point of GMPLS," Technical Report of IEICE, PS2002-2, April 2002).

Since technologies of WDM (Wavelength Division Multiplexing) communications and some new technologies of path controls have recently been developed, communication paths with high speed and large bandwidth may be established flexibly and at low cost in communication networks. However, since these technologies require complicated processes for analyzing headers and providing several kinds of services at data transferring nodes for transferring data and at service controlling nodes for providing services, it is difficult to achieve fundamental improvement of abilities for processing data while reducing costs in networks. Therefore, new technologies, which may provide means for employing limited node resources as efficiently as possible by utilizing link resources which are not fully used, are expected to be introduced for improving communication networks.

While there are the above expectations, recent ordinary communication networks are configured following a policy that limited link resources should be employed as efficiently as possible by investing plenty of resources in nodes. At the same time, ordinary communication networks are designed so that capacities for processing data at nodes do not become overloaded. Accordingly, each node is required to have node resources whose quantities are calculated by adding extra to the quantities which are determined on the basis of the maximum expected throughput or the maximum expected traffic. Moreover, some functions may be redundantly installed at each node to enable durability of the network. Therefore, redundancy of node resources required for a whole communication network becomes quite high, which results in high costs.

To solve the current problems explained above, it may be considered that the technologies of adaptive node control, which are mentioned above, should be applied to a communication network. However, when such technologies of adaptive node control are applied to a communication network and a location of node functions in the communication network is determined so as to solve problems which occur at certain nodes, some other problems may occur in some links since the location of node functions is determined on the basis of only the statuses of nodes in the communication network. To avoid such problems in links, it may also be considered that the above technologies of adaptive link control should be applied to a communication network. However, when the technologies of adaptive link control are applied to a communication network and' a location of link resources in the communication network is determined so as to solve problems which occur in certain links, some other problems may occur at some nodes since the location of link resources is determined on the basis of only the statuses of links in the communication network.

Japanese patent application laid-open No. H11-308337 discloses a distributed cooperative network model, which can realize both functions of controlling location of node resources and of controlling location of link resources. In the distributed network model, plural service providing devices are distributed in a network, and when the network receives a request for a connection from a user terminal, certain service providing devices are selected for providing the requested service to the user terminal (control of location of node resources), and certain paths which are necessary for the selected devices to provide the requested service are determined (control of location of link resources) on the basis of statuses of resources in the whole of the network and characters of the requested service. Accordingly, when the network receives a connection request from a user terminal, the network may achieve a load balancing control by selecting some service providing devices, which are, for example, near the user terminal and have enough unused capacities for processing data, and instructing them to provide a connection service for the user terminal.
However, in a communication network, quantities of data to be processed or communicated may change frequently without any relation with connection requests from user terminals. For example, when a mobile terminal moves in a mobile communication network, when congestion occurs at a node, when a new service is provided for a user terminal during communication, or when a failure occurs at a node, quantities of data to be processed or communicated may change. In the distributed cooperative network model disclosed in Japanese patent application laid-open No. H11-308337, some problems which may occur at nodes or in links in cases such as those above cannot be solved, since the functions of controlling location of node resources and link resources do not work if the network does not receive any trigger such as a connection request from a user terminal.

Document WO 02/29427 A1 refers to a method and a system of providing for central control and intelligent routing of data network traffic in real time or near real time where a server is operatively connected to a network. Herein, the server is capable of receiving information regarding network status and is specifically capable of recognizing network congestion and formulating a solution to the network congestion.
In this document, a reconfiguration of the network traffic is realized for data with different demands and priorities, wherein the rerouting is caused by occurring network problems, for example network congestion.

Document US 4,756,019 A discloses an adaptive, tariff dependent traffic routing system which controls routing of traffic and performs management of network resources in multi-node telecommunication networks. The cost for a communication depends on the type of service provided and on the distance between the originating node and the destination. Each node can originate traffic, receive and/or transmit traffic over inter-node trunks. The routing of traffic is realized such that the total revenue from handling traffic by the network is maximized and such that the revenues are automatically protected in case of overload in the network.
The invention of this document performs the control of traffic routing in the network based on the distance, service, time-of-day dependent tariffs and the actual traffic load.

### SUMMARY OF THE INVENTION

To solve the problems explained above, the present invention aims to provide a technology which enables network resources to be employed in an optimum condition in accordance with statuses of nodes and links in a communication network, where load of data processing and data communication may change, regardless of whether user terminals request connections.

The object of the present invention is achieved by the subject-matter defined by the independent claims 1, 4, 9 and 10.

Advantageous embodiments are defined by the dependent claims.

To achieve the above aim, the present invention provides a communication network system comprising a resource managing unit for managing statuses of node resources in a network and statuses of link resources in the network, a node function location controlling unit for relocating functions of functional nodes and data used for the functions in the network into an optimum condition, in accordance with the statuses of node resources which are managed by the resource managing unit, in response to an instruction of relocation, a path structure controlling unit for restructuring a structure of paths in the network into an optimum condition, in accordance with the statuses of link resources which are managed by the resource managing unit, in response to an instruction of restructuring, and an adaptive control determining unit for determining whether it is necessary to transmit the instruction of relocation to the node function location controlling unit or to transmit the instruction of restructuring to the path structure controlling unit on the basis of the statuses of node resources and the statuses of link resources which are managed by the resource managing unit, and transmitting the instruction of relocation when the transmission of the instruction of relocation is determined to be necessary or transmitting the instruction of restructuring when the transmission of the instruction of restructuring is determined to be necessary.

In a preferred embodiment, the communication network system may further comprise service controlling devices each of which is one of the functional nodes and is capable of changing its own functions and data used for the functions, and comprises resources for providing communication services or data transfer services, data transferring devices each of which is one of the functional nodes and is capable of changing its own functions, data used for the functions and connection statuses of paths for data communications, and comprises resources for providing communication services or data transfer services, and a network structure controlling device which is connected to the service controlling devices and to the data transferring devices, and wherein, the network structure controlling device may comprise the resource managing unit, the node function location controlling unit, the path structure controlling unit and the adaptive control determining unit.

In another preferred embodiment, the communication network system may further comprise service controlling devices each of which is one of the functional nodes and is capable of changing its own functions and data used for the functions, and comprises resources for providing communication services or data transfer services, data transferring devices each of which is one of the functional nodes and is capable of changing its own functions, data used for the functions and connection statuses of paths for data communications, and comprises resources for providing communication services or data transfer services, network structure controlling devices which are distributed in the network, each of which comprises the node function location controlling unit, the path structure controlling unit and the adaptive control determining unit, and a lock controlling unit for controlling locks of resources, when each of the resources should be controlled by only one of the network structure controlling devices to achieve the relocation or the restructuring, for avoiding each of the resources being controlled by more than one of the network structure controlling devices.

Moreover, the present invention also provides a network structure controlling device comprising a node function location controlling unit for relocating functions of functional nodes and data used for the functions in a network into an optimum condition, in accordance with statuses of node resources in the network, in response to an instruction of relocation, a path structure controlling unit for restructuring a structure of paths in the network into an optimum condition, in accordance with statuses of link resources in the network, in response to an instruction of restructuring, and an adaptive control determining unit for determining whether it is necessary to transmit the instruction of relocation to the node function location controlling unit or to transmit the instruction of restructuring to the path structure controlling unit on the basis of the statuses of node resources and the statuses of link resources in the network, and transmitting the instruction of relocation when the transmission of the instruction of relocation is determined to be necessary or transmitting the instruction of restructuring when the transmission of the instruction of restructuring is determined to be necessary.

In a preferred embodiment, in the network structure controlling device, the adaptive control determining unit may make the determination when the adaptive control determining unit receives a request for an adaptive control of the node resources or the link resources from an external device.

In another preferred embodiment, the network structure controlling device may further comprise a resource status collecting unit for collecting data on the statuses of node resources and data on the statuses of link resources in the network through the network, and a resource managing unit for storing the data on the statuses of node resources and the data on the statuses of link resources which are collected by the resource status collecting unit.

In another preferred embodiment, the network structure controlling device may further comprise a lock control requesting unit which transmits, when the instruction of relocation or the instruction of restructuring is transmitted and a certain resource is controlled by the network structure controlling device, a request for a lock control for avoiding the certain resource being controlled by another network structure controlling device, to a resource managing device for managing resources in the network.

In another preferred embodiment, in the network structure controlling device, the node function location controlling unit may an optimum plan of the relocation and the path structure controlling unit makes an optimum plan of the restructuring by exchanging with each other data on a draft plan of the relocation and data on a draft plan of the restructuring.

Moreover, the present invention also provides a network resource status managing device comprising a resource status collecting unit for collecting data on statuses of node resources and data on statuses of link resources in a network through the network, a network resource status storing unit for storing the data on statuses of node resources and the data on statuses of link resources which are collected by the resource status collecting unit, and a lock controlling unit for controlling a lock of a certain resource, when the certain resource is controlled by a certain network structure controlling device to achieve a relocation of functions of nodes and data used for the functions in the network or to achieve a restructuring of a structure of paths in the network, for avoiding the certain resource being controlled by another network structure controlling device, in response to a request for a lock control from the certain network structure controlling device.

Moreover, the present invention also provides an adaptive control method comprising a node resource status monitoring step for a service controlling device and a data transferring device, which are included in a communication network system, to monitor statuses of node resources, which are resources for providing communication services or data transfer services, and to transmit data indicating the statuses of node resources, a link resource status monitoring step for the data transferring device to monitor statuses of link resources, which are resources for providing data transfer services, and to transmit data indicating the statuses of link resources, a network resource status collecting step for a network resource status managing device in the communication network system to receive and store the data indicating the statuses of node resources transmitted in the node resource status monitoring step and to receive' and store the data indicating the statuses of link resources transmitted in the link resource status monitoring step, an adaptive control determining step for a network structure controlling device in the communication network system to determine whether it is necessary to relocate functions and data for the functions of the service controlling device or of the data transferring device, or to determine whether it is necessary to restructure paths connected to the data transferring device, on the basis of data indicating the statuses of node resources and data indicating the statuses of link resources which are stored in the network resource status managing device, or in accordance with a request for an adaptive control of the node resources or the link resources from an external device, a planning step where the network structure controlling device makes a plan of relocation of the functions and the data for the functions so that the node resources and the link resources can be used in an optimum condition, and transmits an instruction to instruct the relocation of the functions and the data for the functions to the service controlling device or to the data transferring device, when it is determined to be necessary to relocate the functions and the data for the functions in the adaptive control determining step, or, the network structure controlling device makes a plan of restructuring of the paths so that the node resources and the link resources can be used in an optimum condition, and transmits an instruction to instruct the restructuring of the paths to the service controlling device or to the data transferring device, when it is determined to be necessary to restructure the paths in the adaptive control determining step, and an optimizing step where the service controlling device or the data transferring device changes its functions and data for the functions in accordance with the instruction to instruct the relocation of the functions and the data for the functions, or, the data transferring device changes its paths in accordance with the instruction to instruct the restructuring of the paths.

In a preferred embodiment, in the planning step in the adaptive control method, the network structure controlling device may further transmit, to the network resource status managing device, a request for a lock control for avoiding the node resources and the link resources, which are controlled by the network structure controlling device after the relocation, being controlled by another network structure controlling device, when it is determined to be necessary to relocate the functions and the data for the functions in the adaptive control determining step, or, the network structure controlling device further transmits, to the network resource status managing device, a request for a lock control for avoiding the node resources and the link resources, which are controlled by the network structure controlling device after the restructuring, being controlled by another network structure controlling device, when it is determined to be necessary to restructure the paths in the adaptive control determining step, and the adaptive control method may further comprise a lock controlling step for the network resource status managing device to receive the request for a lock control which is transmitted in the planning step, and to control locks of the node resources and the link resources in accordance with the request for a lock control.

In another preferred embodiment, in the planning step in the adaptive control method explained above, the network structure controlling device may make an optimum plan of relocation of the functions and the data for the functions or an optimum plan of restructuring of the paths, on the basis of data on a draft plan of relocation of the functions and the data for the functions and data on a draft plan of restructuring of the paths.

Moreover, the present invention may be implemented, as an embodiment, by transmitting, to a user terminal through a network, a program which instructs a computer to function as the network structure controlling device described above, or a program which instructs a computer to function as the network resource status managing device described above. Moreover, storage media, each of which contains the program explained above, may be distributed to users, and the program may be executed by a computer of each user to implement the present invention.

### BRIEF DESCRIPTION OF THE DRAWINGS

Fig. 1 is a block diagram illustrating a communication network system according to the first embodiment of the present invention.
Fig. 2 is a block diagram illustrating a hardware structure of a network structure managing node according to the first embodiment of the present invention.
Fig. 3 is a block diagram illustrating a hardware structure of a service controlling node according to the first embodiment of the present invention.
Fig. 4 is a block diagram illustrating a hardware structure of a data transferring node according to the first embodiment of the present invention.
Fig. 5 is a block diagram for explaining functions of a network structure managing node according to the first embodiment of the present invention.
Fig. 6 is a block diagram for explaining functions of a service controlling node according to the first embodiment of the present invention.
Fig. 7 is a block diagram for explaining functions of a data transferring node according to the first embodiment of the present invention.
Fig. 8 is a flowchart for explaining a function of an adaptive control executed by a network structure managing node according to the first embodiment of the present invention.
Fig. 9 is a diagram for explaining a series of processes for collecting data with regard to statuses of node resources in a network resource status collecting sequence according to the first embodiment of the present invention.
Fig. 10 is a diagram for explaining a series of processes for collecting data with regard to statuses of link resources in a network resource status collecting sequence according to the first embodiment of the present invention.
Fig. 11 is a diagram for explaining a series of processes executed in a node event occurrence status notifying sequence according to the first embodiment of the present invention when an overload or a failure occurs as a node event.
Fig. 12 is a diagram for explaining a series of processes executed in a node event occurrence status notifying sequence according to the first embodiment of the present invention when an increase or a decrease of node resources occurs as a node event.
Fig. 13 is a diagram for explaining a series of processes executed in a link event occurrence status notifying sequence according to the first embodiment of the present invention when an overload or a failure occurs as a link event.
Fig. 14 is a diagram for explaining a series of processes executed in a link event occurrence status notifying sequence according to the first embodiment of the present invention when an increase or a decrease of link resources occurs as a link event.
Fig. 15 is a diagram for explaining a series of processes executed in a node function relocating sequence according to the first embodiment of the present invention.
Fig. 16 is a diagram for explaining a series of processes executed in a link-path restructuring sequence according to the first embodiment of the present invention.
Fig. 17 is a diagram for explaining a series of processes executed in a link-path restructuring sequence according to the first embodiment of the present invention.
Fig. 18 is a block diagram for explaining an operation of a communication network system according to the first embodiment of the present invention when a mobility control function is transferred when a user terminal moves between service controlling nodes.
Fig. 19 is a block diagram illustrating a communication network system according to the second embodiment of the present invention.
Fig. 20 is a block diagram for explaining an operation of a communication network system according to the second embodiment of the present invention when a call control function is relocated to avoid congestion at a node.
Fig. 21 is a block diagram for explaining an operation of a communication network system according to the second embodiment of the present invention when a data copy function is realized at a service controlling node.
Fig. 22 is a block diagram illustrating a communication network system according to the third embodiment of the present invention.
Fig. 23 is a block diagram illustrating a hardware structure of a network structure controlling node according to the third embodiment of the present invention.
Fig. 24 is a block diagram illustrating a hardware structure of a network resource status managing node according to the third embodiment of the present invention.
Fig. 25 is a block diagram for explaining functions of a network resource status managing node according to the third embodiment of the present invention.
Fig. 26 is a block diagram for explaining functions of a network structure controlling node according to the third embodiment of the present invention.
Fig. 27 is a block diagram for explaining functions of a service controlling node according to the third embodiment of the present invention.
Fig. 28 is a block diagram for explaining functions of a data transferring node according to the third embodiment of the present invention.
Fig. 29 is a flowchart for explaining a function of an adaptive control executed by a network resource status managing node and a network structure controlling node according to the third embodiment of the present invention.
Fig. 30 is a diagram for explaining a series of processes for collecting data with regard to statuses of node resources in a network resource status collecting sequence according to the third embodiment of the present invention.
Fig. 31 is a diagram for explaining a series of processes for collecting data with regard to statuses of link resources in a network resource status collecting sequence according to the third embodiment of the present invention.
Fig. 32 is a diagram for explaining a series of processes executed in a node event occurrence status notifying sequence according to the third embodiment of the present invention when an overload or a failure occurs as a node event.
Fig. 33 is a diagram for explaining a series of processes executed in a node event occurrence status notifying sequence according to the third embodiment of the present invention when an increase or a decrease of node resources occurs as a node event.
Fig. 34 is a diagram for explaining a series of processes executed in a link event occurrence status notifying sequence according to the third embodiment of the present invention when an overload or a failure occurs as a link event.
Fig. 35 is a diagram for explaining a series of processes executed in a link event occurrence status notifying sequence according to the third embodiment of the present invention when an increase or a decrease of link resources occurs as a link event.
Fig. 36 is a diagram for explaining a series of processes executed in a node function relocating sequence according to the third embodiment of the present invention.
Fig. 37 is a diagram for explaining a series of processes executed in a link-path restructuring sequence according to the third embodiment of the present invention.
Fig. 38 is a diagram for explaining a series of processes executed in a link-path restructuring sequence according to the third embodiment of the present invention.
Fig. 39 is a block diagram for explaining an operation of a communication network system according to the third embodiment of the present invention when a mobility control function is transferred when a user terminal moves between service controlling nodes.
Fig. 40 is a block diagram illustrating a communication network system according to the fourth embodiment of the present invention.
Fig. 41 is a block diagram for explaining an operation of a communication network system according to the fourth embodiment of the present invention when a call control function is relocated to avoid congestion at a node.
Fig. 42 is a block diagram for explaining an operation of a communication network system according to the fourth embodiment of the present invention when a data copy function is realized at a service controlling node in response to a request for an adaptive control from a user terminal.

### DESCRIPTION OF THE PREFERRED EMBODIMENTS

### A. The First Embodiment

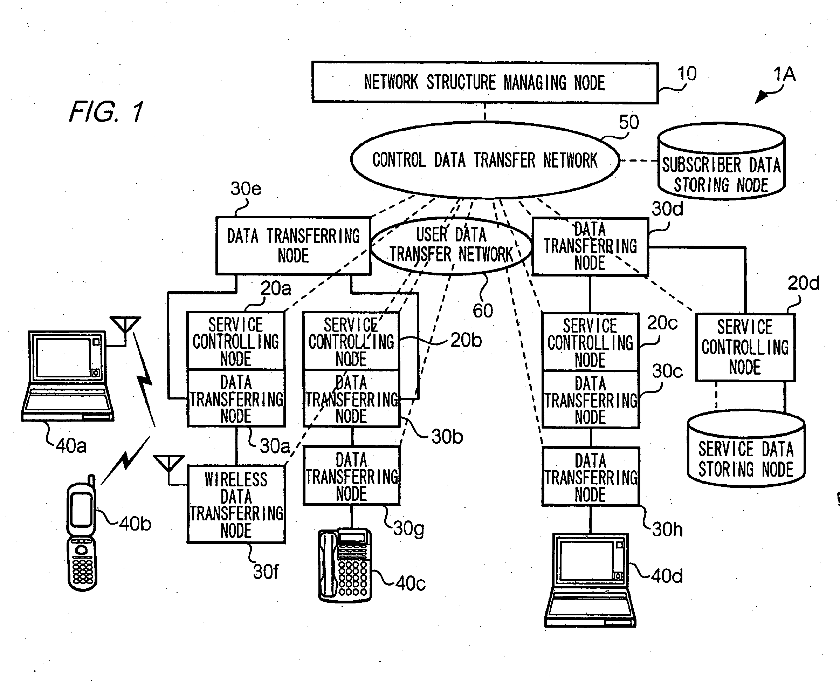

Fig. 1 is a block diagram showing a structure of communication network system 1A according to the first embodiment of the present invention. Communication network system 1A may be, for example, a mobile telecommunication network system.

In communication network system 1A, network structure managing node 10, service controlling nodes 20a to 20d, data transferring nodes 30a to 30h, some of which may be wireless data transferring nodes, and user terminals 40a to 40d, which are functional nodes, can communicate with one another through control data transfer network 50 or user data transfer network 60.

Between the nodes, wide band communication paths are established dynamically in accordance with a current status of network resource employment in communication network system 1A using, for example, a technology of label switch path such as VC/VP (Virtual Channel/Virtual Path) of ATM transfer mode, MPLS, and GMPLS.

Practically, communication network system 1A may include a large number of service controlling nodes, data transferring nodes and user terminals. However, for simplicity, Fig. 1 shows only four service controlling nodes, eight data transferring nodes and four user terminals.

Since service controlling nodes 20a to 20d have a common structure, data transferring nodes 30a to 30h have a common structure, and user terminals 40a to 40d have also a common structure, they will be referred to as service controlling node(s) 20, data transferring node(s) 30 and user terminal(s) 40 respectively, where it is not necessary to refer to them specifically in the following explanation.

Where it is necessary to specify each of service controlling nodes 20, and each of data transferring nodes 30, they will be referred to by their description followed by their number, for example, service controlling node 20a, 20b,···, data transferring node 30a, 30b, ···, and so on.

A hardware structure of each node will be explained below.

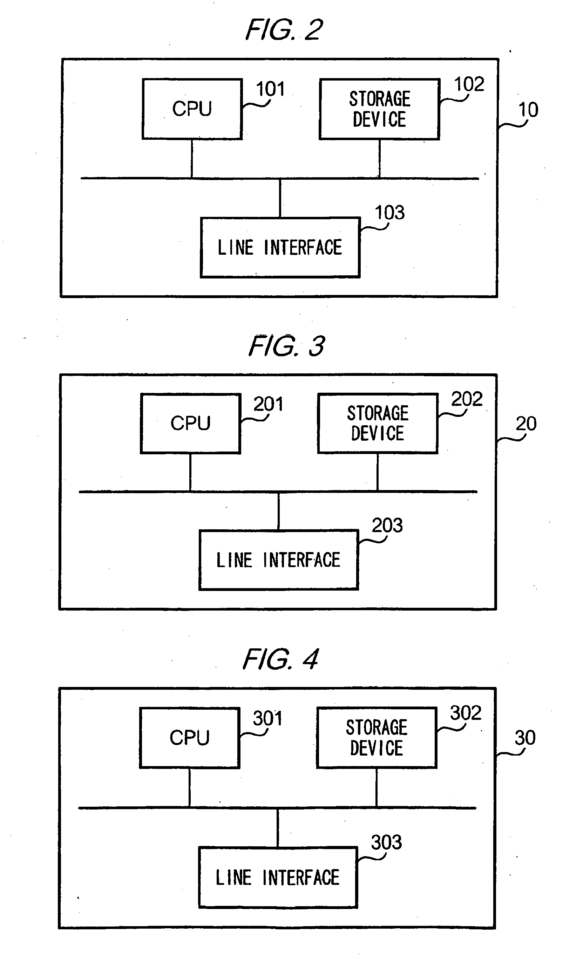

As shown in Fig. 2, network structure managing node 10 comprises CPU 101 for controlling each component of network structure managing node 10, storage device 102 for storing programs and data, and line interface 103 for communicating data with other nodes.

Storage device 102 of network structure managing node 10 stores programs for collecting and storing statuses of employment of network resources (node resources and link resources) at each node in communication network system 1A. Storage device 102 also stores programs for instructing network structure managing node 10 to function as a network structure controlling device according to the present invention. More concretely, Storage device 102 stores: programs for collecting and storing resource status data indicating occurrences of events such as overloads, failures, hardware increases, and hardware decreases; programs for determining whether it is necessary to relocate node functions, and whether it is necessary to restructure links and paths; and programs for planning relocation of node functions and planning restructuring of links and paths so as to employ network resources in communication network system 1A in an optimum condition. Storage device 102 also stores resource status data indicating statuses of network resources and occurrences of events.

In this description, "a relocation of node functions" means a series of modifications of functions realized by each of the nodes by transferring node functions and data for the node functions from one node to another. "A restructuring of paths" means a series of modifications of routes of paths connecting nodes. "A restructuring of links" means a series of modifications of employed link resources.

In the following explanation, "a restructuring of links and paths" or "a link-path restructuring" means a series of modifications of employed link resources in accordance with a series of modifications of paths.

"An establishment of links and paths" or "A link-path establishment" means a series of reservations of necessary link resources in accordance with a series of reservations of paths, and "a release of links and paths" or "a link-path release" means a series of releases of reserved link resources in accordance with a series of releases of paths.

As shown in Fig. 3, service controlling node 20 comprises CPU 201 for controlling each component of service controlling node 20, storage device 202 for storing programs and data, and line interface 203 for communicating data with other nodes.

Storage device 202 of service controlling node 20 stores the following:
Programs for establishing functions of service controlling node 20 in accordance with instruction data from network structure managing node 10;
Programs for monitoring statuses of node resources of service controlling node 20 such as a CPU usage ratio, and monitoring occurrences of node events such as overloads, failures, hardware increases, and hardware decreases at service controlling node 20;
Node function definition data for defining functions of service controlling node 20 (software for realizing node functions and several kinds of data to be processed, such as site-specific data, subscriber-specific data, and so on).

Node function definition data may be received from or transmitted to another node in accordance with instruction data transmitted from network structure managing node 10. Service controlling node 20 is a so-called programmable node, which is able to realize its functions by executing software contained in node function definition data to process data also contained in node function definition data.

As shown in Fig. 4, data transferring node 30 comprises CPU 301 for controlling each component of data transferring node 30, storage device 302 for storing programs and data, and line interface 303 for communicating data with other nodes.

Storage device 302 of data transferring node 30, similarly to service controlling node 20, stores the following:
Programs for establishing functions of data transferring node 30 in accordance with instruction data from network structure managing node 10;
Programs for monitoring statuses of node resources of data transferring node 30 such as a packet transaction quantity, and monitoring occurrences of node events such as overloads, failures, hardware increases, and hardware decreases at data transferring node 30;
Node function definition data for defining functions of data transferring node 30.

Storage device 302 further stores the following:
Programs for restructuring links and paths;
Programs for monitoring statuses of link resource employment such as link usage ratio;
Link structure definition data for defining structures of links and paths (data indicating conditions for structuring paths such as a single path or a dual path, data indicating bandwidths of links, packet transaction capacities and a type of line interface 303, data indicating connection statuses such as current destinations of paths).

Line interface 303 of data transferring node 30 establishes a path to one of data transferring nodes 30 and releases a path to another of data transferring nodes 30 for changing a destination of connection. By such a function of line interface 303, paths in communication network system 1A may be restructured dynamically and flexibly as a whole, and link resources may be employed efficiently.

CPU 101 realizes the functions of network structure managing node 10 explained below by executing programs stored in storage device 102 of network structure managing node 10. Similarly, CPU 201 realizes the functions of service controlling node 20 explained below by executing programs stored in storage device 202 of service controlling node 20. Similarly, CPU 301 realizes the functions of data transferring node 30 explained below by executing programs stored in storage device 302 of data transferring node 30.

### [Functional structure of network structure managing node]

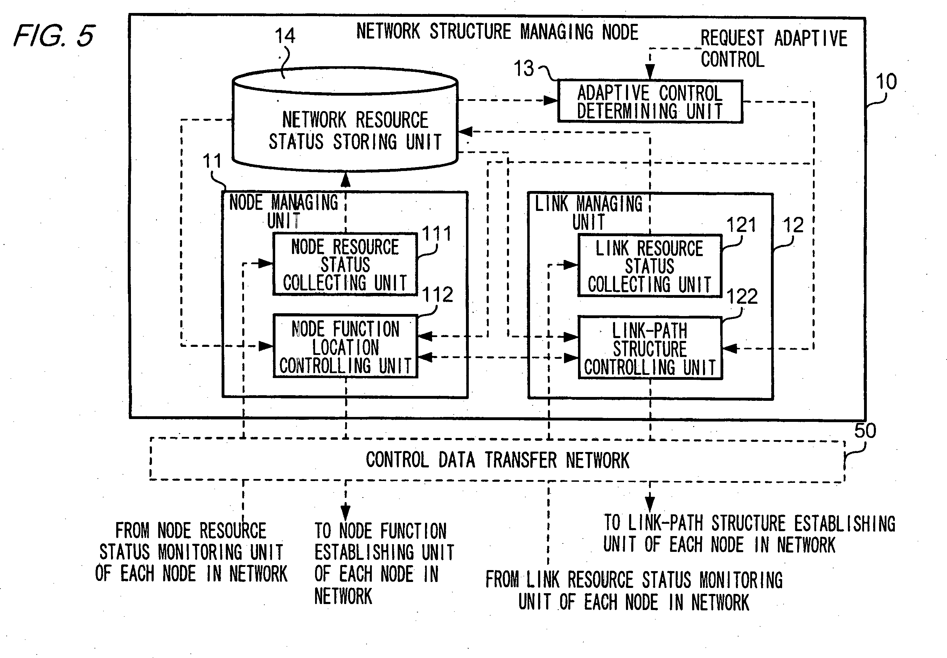

Functional structure of network structure managing node 10 will be explained below with reference to Fig. 5.

Network structure managing node 10 is a managing node for managing network resources (node resources and link resources) of all nodes in communication network system 1A as well as planning relocations of node functions and restructuring of links and paths.

More concretely, network structure managing node 10 receives, from nodes 20 and 30, data which indicate operation statuses and employment statuses of node resources and link resources at nodes 20 and 30, and stores the data. Network structure managing node 10 relocates node functions and efficiently restructures links and paths in real time on the basis of the stored data, so that network resources may be employed in an optimum condition.

Node managing unit 11 comprises node resource status collecting unit 111 and node function location controlling unit 112. Node resource status collecting unit 111 receives, from service controlling node 20 through control data transfer network 50, resource status data which indicate employment statuses of resources and several kinds of events such as an overload at service controlling node 20. Similarly, node resource status collecting unit 111 also receives resource status data from data transferring node 30 through control data transfer network 50. Node resource status collecting unit 111 analyzes received resource status data, processes the data by adjusting parameters contained in the data, and so on, and transmits the processed data to network resource status storing unit 14. Network resource status storing unit 14 receives and stores the data.

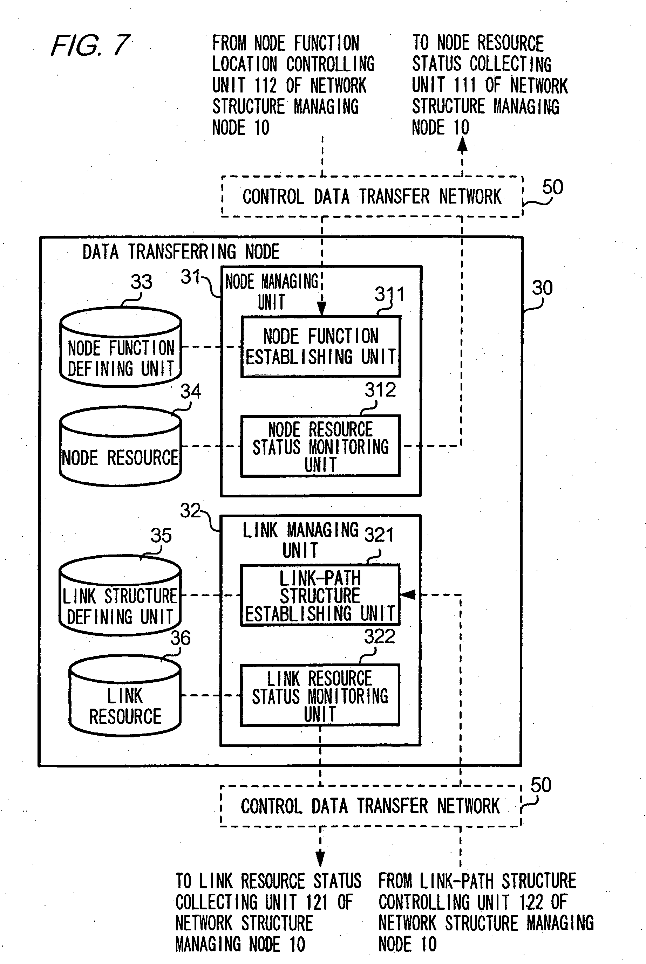

Link managing unit 12 comprises link resource status collecting unit 121 and link-path structure controlling unit 122. Link resource status collecting unit 121 receives resource status data from link resource status monitoring unit 322 of data transferring node 30 (refer to Fig. 7) through control data transfer network 50. Link resource status collecting unit 121 analyzes received resource status data, processes the data by adjusting parameters contained in the data, and so on, and transmits the processed data to network resource status storing unit 14. Network resource status storing unit 14 receives and stores the data.

Adaptive control determining unit 13 analyzes data indicating operation statuses and employment statuses of each of the resources in the whole of communication network system 1A, which are stored in network resource status storing unit 14. Then, adaptive control determining unit 13 determines whether it is necessary to conduct a relocation of node functions and a restructuring of links and paths by analyzing occurrences of failures, congestion statuses, overload statuses, and so on, with regard to node resources and link resources, as well as changes of available resources caused by increases and decreases of node resources and link resources.

Further, adaptive control determining unit 13 receives from external devices instruction data for instructing a relocation of node functions or instruction data for instructing a restructuring of links and paths. These instruction data may be transmitted from one of service controlling nodes 20, for example, when the node provides an advanced network service in communication network system 1A using an active network technology.

A firewall, an anchor point for controlling mobile communication terminals, a buffering point for buffering mobile communication data, and a multipath establishing point for enabling a multicast communication service are examples of node functions which are realized in an advanced network service.

When adaptive control determining unit 13 determines that it is necessary to conduct a relocation of node functions, for example, on the basis of a usage status of a node resource, adaptive control determining unit 13 transmits, to node function location controlling unit 112 of node managing unit 11, instruction data of node function relocation to instruct a relocation of node functions at the node. Similarly, when adaptive control determining unit 13 determines that it is necessary to conduct a restructuring of paths between nodes, adaptive control determining unit 13 transmits, to link-path structure controlling unit 122 of link managing unit 12, instruction data of link-path restructuring to instruct a restructuring of links and paths.

Node function location controlling unit 112 receives instruction data of node function relocation from adaptive control determining unit 13, and plans a relocation of node functions taking into account conditions of the whole of communication network system 1A.

More concretely, node function location controlling unit 112 analyzes the current available node resources and link resources, and determines new locations of node functions, by referring to data stored in network resource status storing unit 14. Then, node function location controlling unit 112 exchanges data with link-path structure controlling unit 122, namely, transmits data of node function relocation, which indicates the determined relocation plan, to link-path structure controlling unit 122, and receives data of link-path restructuring, which is not yet finalized, from link-path structure controlling unit 122, so that node function location controlling unit 112 finalizes the node function locations which may achieve an optimum condition in the whole of communication network system 1A.

After node function location controlling unit 112 finalizes the plan of node function relocation, node function location controlling unit 112 transmits instruction data of node function/data transfer, for instructing each of transmitting nodes which transfer their node functions and each of receiving nodes to which the node functions are transferred, to transfer the node functions.

Link-path structure controlling unit 122 receives instruction data of link-path restructuring from adaptive control determining unit 13, and plans a new structure of links and paths taking into account conditions of the whole of communication network system 1A.

More concretely, link-path structure controlling unit 122 analyzes the current available link resources and node resources, and determines a new structure of links and paths, by referring to data stored in network resource status storing unit 14. Then, link-path structure controlling unit 122 exchanges data with node function location controlling unit 112, namely, transmits data of link-path restructuring, which indicates the determined restructuring plan, to node function location controlling unit 112, and receives data of node function relocation, which is not yet finalized, from node function location controlling unit 112, so that link-path structure controlling unit 122 finalizes the node function relocation and the link-path restructuring, thereby achieving an optimum condition in the whole of communication network system 1A.

After link-path structure controlling unit 122 finalizes the plan of link-path restructuring, link-path structure controlling unit 122 transmits to data transferring nodes 30, which can establish links, instruction data of link-path establishment/release, for instructing the node to establish new links and paths.

### [Structures of service controlling node and data transferring node]

Service controlling node 20 and data transferring node 30 are programmable nodes which are able to change their functions and data to be processed by their functions. Therefore, it is possible to distribute and relocate functions and resources to realize required network services, which may change continuously, in the whole of communication network system 1A, in accordance with requests from network structure managing node 10 and user terminal 40.

Structures of service controlling node 20 and data transferring node 30 will be explained below.

### [Functional structure of service controlling node]

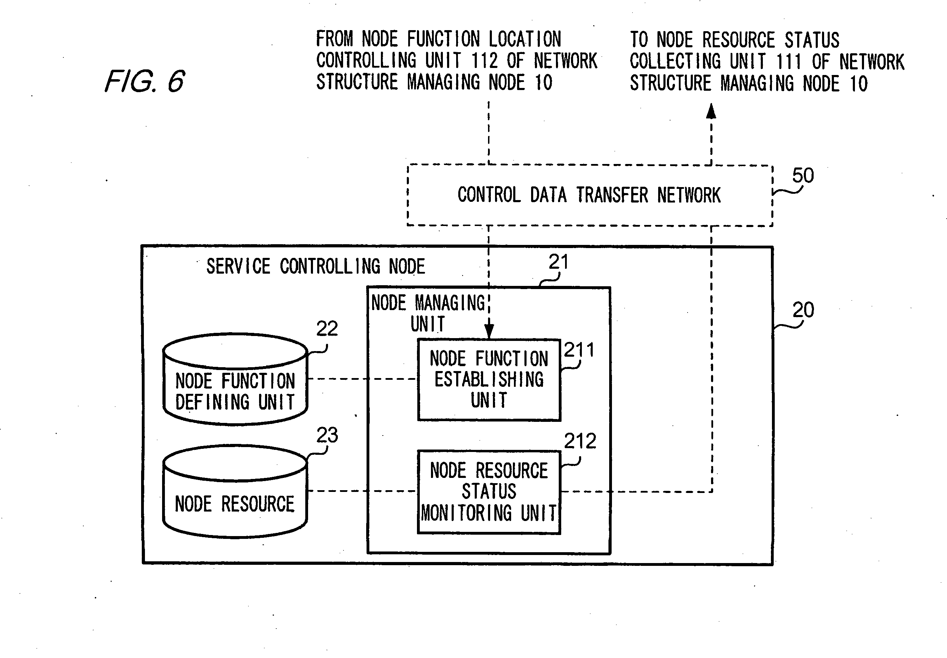

Fig. 6 is a block diagram for explaining functions of service controlling node 20.

Service controlling node 20 is a node which provides several network services such as a call control function, a firewall function, and a mobility control function for mobile communication.

As shown in Fig. 6, service controlling node 20 comprises node managing unit 21 for managing service controlling node 20. Node managing unit 21 comprises node function establishing unit 211 and node resource status monitoring unit 212.

Node function establishing unit 211 receives, from node function location controlling unit 112 of network structure managing node 10, instruction data of node function/data transfer or instruction data of node function/data acceptance. In accordance with these data, node function establishing unit 211 establishes its functions by obtaining software for realizing node functions and node function definition data containing data to be processed, such as station data and user data, from node function defining unit 22 or other nodes. "User data" may contain, for example, data such as numbers for identifying users, information on services used by each user, information on users' locations, and information on state transitions.

Node resource status monitoring unit 212 monitors employment statuses and operation statuses of node resource 23, such as usage ratio of CPU 201, continuously. Node resource status monitoring unit 212 successively transmits, to node resource status collecting unit 111 of network structure managing node 10, resource status data indicating monitored employment statuses and monitored operation statuses of node resource 23.

At the same time, node resource status monitoring unit 212 detects occurrences of node events at node resource 23 such as overloads, failures and increases/decreases of resources, and transmits, to node resource status collecting unit 111 of network structure managing node 10, resource status data indicating detected overloads, failures, increases of CPU capability, and so on.

### [Functional structure of data transferring node]

A functional structure of data transferring node 30 will be explained below with reference to Fig. 7.

Data transferring node 30 is a node for relaying data, such as data packets and voice data, which are received from user terminal 40.

Data transferring node 30 comprises node managing unit 31 and link managing unit 32. Node managing unit 31 comprises node function establishing unit 311 and node resource status monitoring unit 312.

Node function establishing unit 311 receives, from node function location controlling unit 112 of network structure managing node 10, through control data transfer network 50, instruction data of node function/data transfer or instruction data of node function/data acceptance, for instructing a relocation of node functions. In accordance with these data, node function establishing unit 311 establishes its functions by obtaining node function definition data for realizing node functions from node function defining unit 33 or other nodes.

Node resource status monitoring unit 312 continuously monitors employment statuses and operation statuses of node resource 34. A quantity of processed data packets is one of the statuses which node resource status monitoring unit 312 monitors. Node resource status monitoring unit 312 successively transmits resource status data indicating monitored employment statuses and operation statuses of node resource 34 to node resource status collecting unit 111 of network structure managing node 10.

At the same time, node resource status monitoring unit 312 detects occurrences of node events at node resource 34 such as overloads, failures and changes of data packet throughput caused by increases/decreases of resources, and transmits, to node resource status collecting unit 111 of network structure managing node 10, resource status data indicating detected overloads, failures, changes of data packet throughput, and so on.

Link managing unit 32 comprises link-path structure establishing unit 321 and link resource status monitoring unit 322.

Link-path structure establishing unit 321 receives instruction data of link-path establishment/release to instruct a link-path restructuring from link-path structure controlling unit 122 of network structure managing node 10 through control data transfer network 50, and restructures links and paths by referring to link structure definition data stored in link structure defining unit 35.

Link resource status monitoring unit 322 continuously monitors employment statuses and operation statuses of link resource 36. A usage ratio of links is one of the statuses which link resource status monitoring unit 322 monitors. Link resource status monitoring unit 322 successively transmits link status data indicating monitored employment statuses and operation statuses of link resource 36 to link resource status collecting unit 121 of network structure managing node 10.

At the same time, link resource status monitoring unit 322 detects occurrences of link events at link resource 36 such as overloads, failures and changes of bandwidth for the link caused by increases/decreases of resources, and transmits, to link resource status collecting unit 121 of network structure managing node 10, link status data indicating detected overloads, failures, changes of bandwidth for the link, and so on.

### [Function of adaptive control]

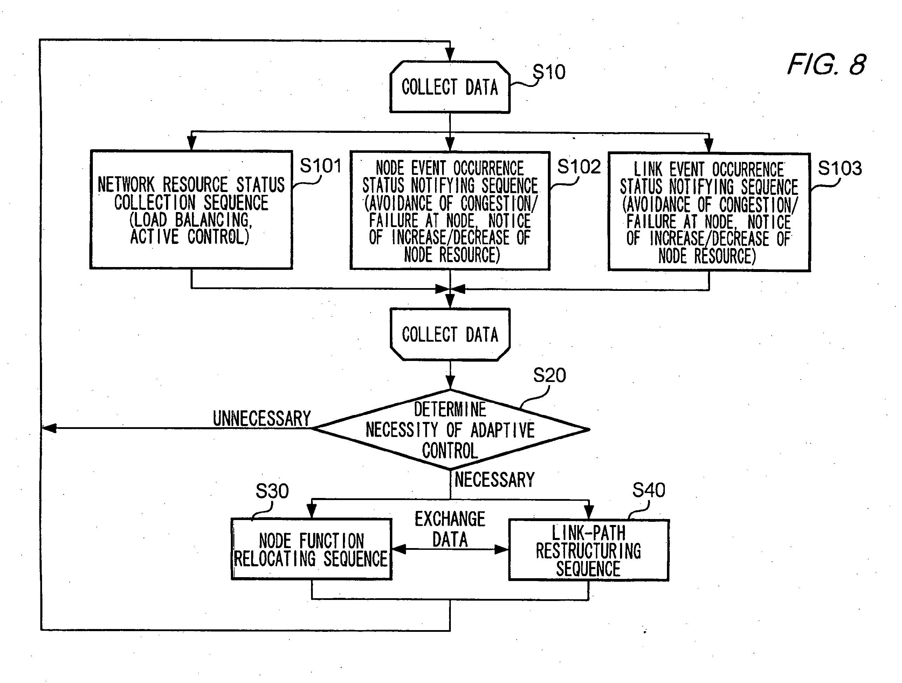

A function of adaptive control achieved by network structure managing node 10 will be explained below with reference to Fig. 8.

As shown in Fig. 8, network structure managing node 10 conducts an information collecting process (step S10). In the information collecting process, the following sequences are executed simultaneously.

A network resource status collection sequence (S101) for collecting data required for conducting load distributions and active controls among nodes.

A node event occurrence status notifying sequence (S102) for collecting data required for conducting congestion/failure avoidances at each node and resource increases/decreases of each node.

A link event occurrence status notifying sequence (S103) for collecting data required for conducting congestion/failure avoidances in each link and resource increases/decreases of each link.

In the sequences of S101-S103, network structure managing node 10 analyzes and processes collected data to generate network resource status data indicating employment statuses and event occurrences of network resources in communication network system 1A, and stored generated network resource status data in network resource status storing unit 14 of network structure managing node 10.

Next, adaptive control determining unit 13 of network structure managing node 10 determines whether it is necessary to conduct an adaptive control in communication network system 1A, namely whether it is necessary to relocate node functions and restructure links and paths (step S20). More concretely, the determination in step S20 is conducted as follows. First, an event occurs as a trigger of a relocation of node functions or a restructuring of links and paths. The following are examples of such events.
(a) A mobile terminal moving in a mobile communication network.
(b) Congestion at a node.
(c) A provision of a new service for a terminal during a communication.
(d) A failure at a node.
(e) An arrival of a connection request from a terminal.

When (a), (c) or (e) occurs, an adaptive control request indicating the event is transmitted to adaptive control determining unit 13. In such a case, adaptive control determining unit 13 determines that it is necessary to relocate node functions or restructure links and paths.

When (b) occurs, adaptive control determining unit 13 detects the congestion by checking that, for example, a certain sort of resource employment status stored in network resource data storing unit 14 exceeds a predetermined threshold level, and determines that it is necessary to conduct a relocation and a restructuring. Instead of comparing a status with a threshold level, adaptive control determining unit 13 may monitor load balances among nodes by continuously checking data stored in network resource data storing unit 14, and conduct relocations and restructurings at any time when they are required so that load balances among nodes may be maintained in an optimum condition.

When (e) occurs, warning data indicating the event are stored in network resource data storing unit 14, and on the basis of the warning data, adaptive control determining unit 13 determines that it is necessary to conduct a relocation and a restructuring.

In a case that adaptive control determining unit 13 determines that it is unnecessary to relocate node functions or restructure links and paths (step S20; unnecessary), adaptive control determining unit 13 repeats the information collecting process (step S10). On the other hand, in a case that adaptive control determining unit 13 determines that it is necessary to conduct a relocation and a restructuring (step S20; necessary), adaptive control determining unit 13 executes the succeeding sequences, namely a node function relocating sequence (step S30) or a link-path restructuring sequence (step S40). Actual processes executed in these sequences may change on a case-by-case basis. In case it is necessary to relocate node functions for overcoming existing problems, adaptive control determining unit 13 transmits instruction data to instruct a relocation of node functions. In case it is necessary to restructure links and paths for overcoming existing problems, adaptive control determining unit 13 transmits instruction data to instruct a restructuring of links and paths.

### [Network resource status collecting sequence]

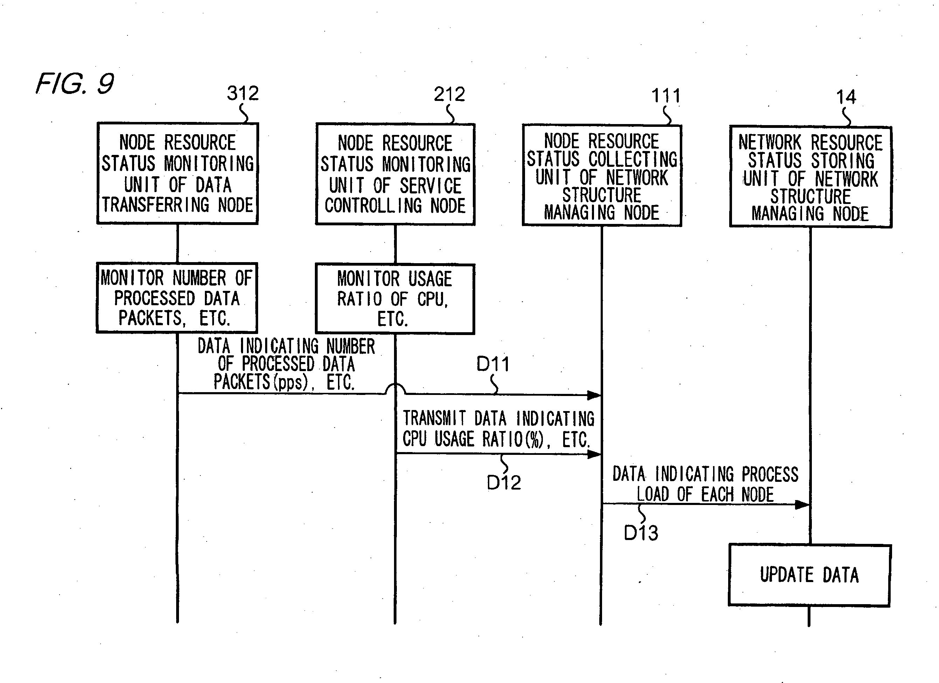

Fig. 9 is a diagram for explaining a series of processes for collecting data with regard to statuses of node resources, which are executed in the network resource status collecting sequence (S101) shown in the flowchart of Fig. 8.

Fig. 9 shows, as an example, a series of processes in which node resource status collecting unit 111 of network structure managing node 10 receives data indicating quantities of processed data packets (a number of data packets to be processed in a second, which is referred to as PPS: Packets Per Second) from data transferring node 30, and also receives data indicating usage ratios (%) of CPU 201 from service controlling node 20, as indexes of employment status of node resources.

Node resource status monitoring unit 312 of data transferring node 30 monitors quantities of data packets processed at data transferring node 30, and successively transmits data D11 indicating monitored quantities of processed data packets to node resource status collecting unit 111 of network structure managing node 10.

At the same time, node resource status monitoring unit 212 of service controlling node 20 monitors usage ratios of CPU 201, and successively transmits data D12 indicating monitored usage ratios of CPU to node resource status collecting unit 111 of network structure managing node 10.

Node resource status collecting unit 111 of network structure managing node 10 receives data D11 indicating quantities of processed data packets from data transferring node 30 and data D12 indicating usage ratios of CPU from service controlling node 20 as resource status data, analyzes relations between data contained in the received resource status data, adjusts parameters of the data, and calculates loads for processing data at each of the node resources. Then, node resource status collecting unit 111 transmits data D13 indicating the calculated loads of each node resource to network resource status storing unit 14. Network resource status storing unit 14 stores data D13 indicating the loads.

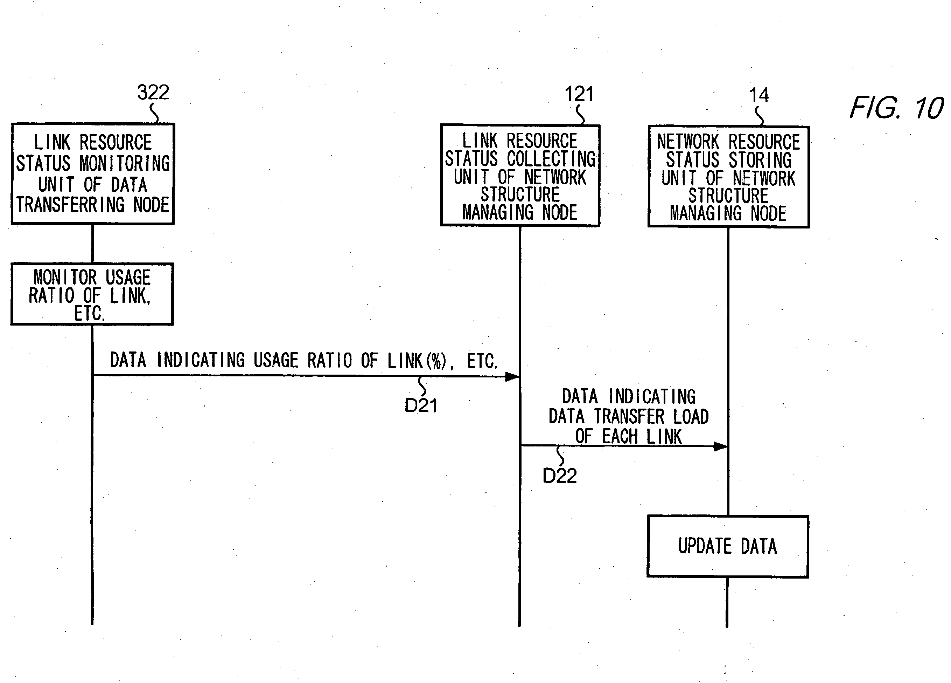

Fig. 10 is a diagram for explaining a series of processes for collecting data with regard to statuses of link resources, which are executed in the network resource status collecting sequence (S101) shown in the flowchart of Fig. 8.

Fig. 10 shows, as an example, a series of processes in which link resource status collecting unit 121 of network structure managing node 10 receives data indicating usage ratios (%) of links from data transferring node 30, as indexes of employment status of link resources.

Link resource status monitoring unit 322 of data transferring node 30 monitors usage ratios of links established at data transferring node 30, and successively transmits data D21 indicating monitored usage ratios of links to link resource status collecting unit 121 of network structure managing node 10.

Link resource status collecting unit 121 of network structure managing node 10 receives data D21 indicating usage ratios of links (which may be obtained at both of data transferring nodes 30 located at each end of a link) from data transferring node 30, analyzes relations between the received data, adjusts parameters of the data, and calculates loads for transferring data through each of the link resources. Then, link resource status collecting unit 121 transmits data D22 indicating the calculated loads of each link resource to network resource status storing unit 14. Network resource status storing unit 14 stores data D22 indicating the loads.

### [Node event occurrence status notifying sequence]

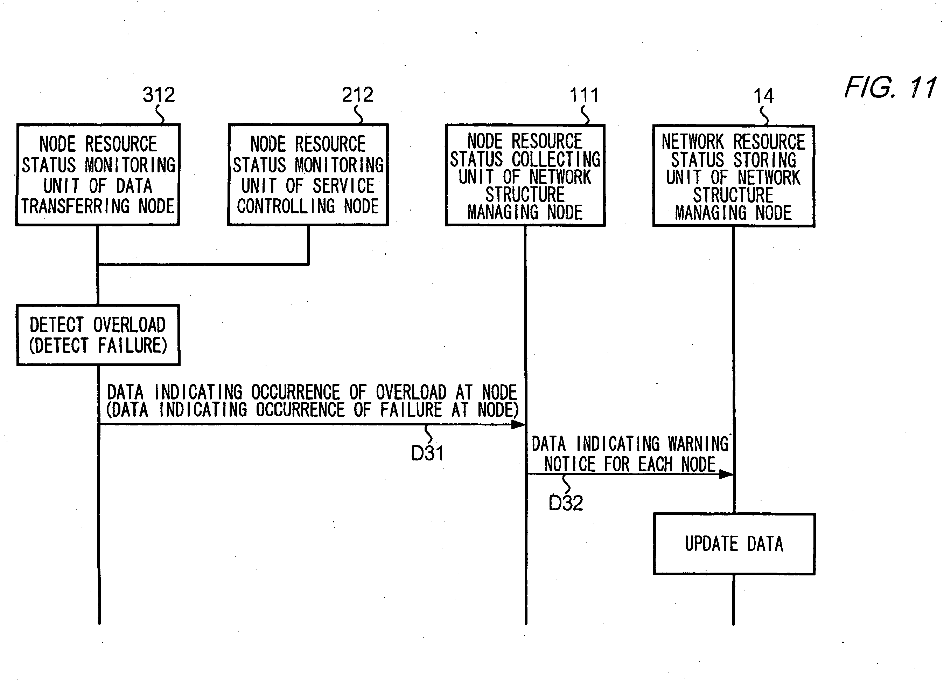

Fig. 11 shows a series of processes in the node event occurrence status notifying sequence (S102) shown in the flowchart of Fig. 8, which are executed when a node event of overload or a node event of failure occurs.

Node resource status monitoring unit 212 of service controlling node 20 and node resource status monitoring unit 312 of data transferring node 30 transmit data D31 indicating an occurrence of an overload or a failure to node resource status collecting unit 111 of network structure managing node 10 when they detect an overload or a failure. Node resource status collecting unit 111 receives data D31 (which may be obtained at both of data transferring nodes 30 located at each side of a communication) from data transferring node 30, analyzes relations between the received data, and specifies a location where the overload or the failure occurred. Then, node resource status collecting unit 111 transmits data D32 indicating warning notices for each node to network resource status storing unit 14. Network resource status storing unit 14 stores data D32 containing the warning notices.

Though a sequence for canceling the warning notices is also necessary in an actual implementation, for simplicity the sequence is omitted in Fig. 11.

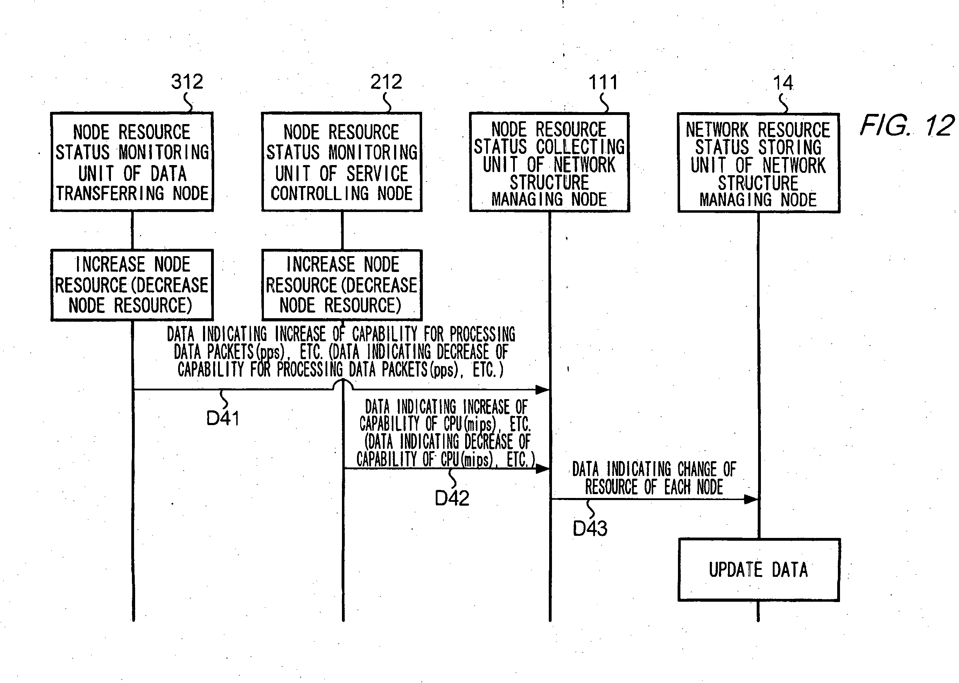

Fig. 12 shows another series of processes in the node event occurrence status notifying sequence (S102) shown in the flowchart of Fig. 8, which are executed when a node event of increase/decrease of node resource occurs.

Fig. 12 shows, as an example, a series of processes in which node resource status collecting unit 111 of network structure managing node 10 receives data indicating capabilities of processing data packets (PPS: Packets Per Second) from data transferring node 30, and also receives data indicating capabilities of processing data of CPU (MIPS: Millions of Instructions Per Second) from service controlling node 20, which reflect increases or decreases of node resources at each node, as indexes of changes of node resources caused by the increases or decreases.

Node resource status monitoring unit 312 of data transferring node 30 monitors occurrences of node events at data transferring node 30.

When node resource status monitoring unit 312 detects an increase or a decrease of a node resource at data transferring node 30, node resource status monitoring unit 312 calculates capabilities for processing data packets after the increase/decrease, and transmits data D41 indicating the calculated capabilities for processing data packets reflecting the increase/decrease, to node resource status collecting unit 111 of network structure managing node 10.

Similarly, node resource status monitoring unit 212 of service controlling node 20 monitors occurrences of node events at service controlling node 20.

When node resource status monitoring unit 212 detects an increase or a decrease of a node resource at service controlling node 20, node resource status monitoring unit 212 calculates capabilities for processing data of CPUs after the increase/decrease, and transmits data D42 indicating the calculated capabilities for processing data of CPUs reflecting the increase/decrease, to node resource status collecting unit 111 of network structure managing node 10.

Node resource status collecting unit 111 of network structure managing node 10 receives data D41 indicating capabilities for processing data packets from data transferring node 30 and data D42 indicating capabilities for processing data of CPUs from service controlling node 20 which reflect an increase/decrease of node resources, analyzes relations between the received data, adjusts parameters of the data, and specifies what changes of node resources have been made at each node. Then, node resource status collecting unit 111 transmits data D43 indicating the specified changes of resource statuses at each node to network resource status storing unit 14. Network resource status storing unit 14 stores data D43.

### [Link event occurrence status notifying sequence]

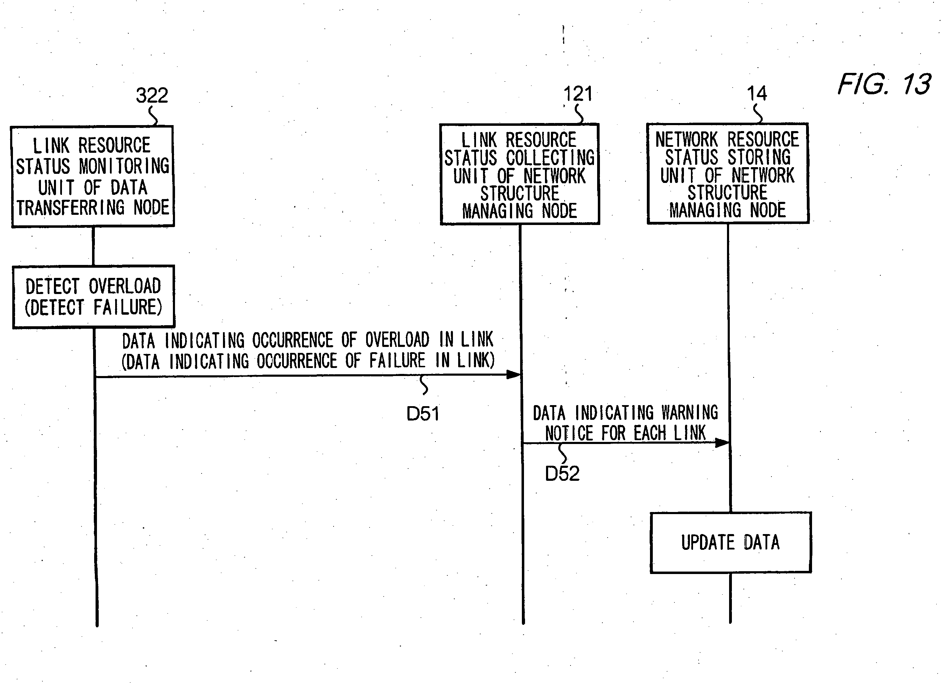

Fig. 13 shows a series of processes in the link event occurrence status notifying sequence (S103) shown in the flowchart of Fig. 8, which are executed when a link event of overload or a link event of failure occurs.

Link resource status monitoring unit 322 of data transferring node 30 transmits data D51 indicating an occurrence of an overload or a failure to link resource status collecting unit 121 of network structure managing node 10 when link resource status monitoring unit 322 detects an overload or a failure in a link. Link resource status collecting unit 121 receives data D51 indicating an occurrence of an overload or a failure (which may be obtained at both of data transferring nodes 30 located at each side of a link) from data transferring node 30, specifies a link in which the overload or the failure occurred and a level of seriousness of the overload or the transaction by analyzing the received data, and generate a warning notice containing the specified information. Then, link resource status collecting unit 121 transmits data D52 indicating warning notices for each link to network resource status storing unit 14. Network resource status storing unit 14 stores data D52 indicating the warning notices for each link.

Though a sequence for canceling the warning notices is also necessary in an actual implementation, for simplicity the sequence is omitted in Fig. 13.

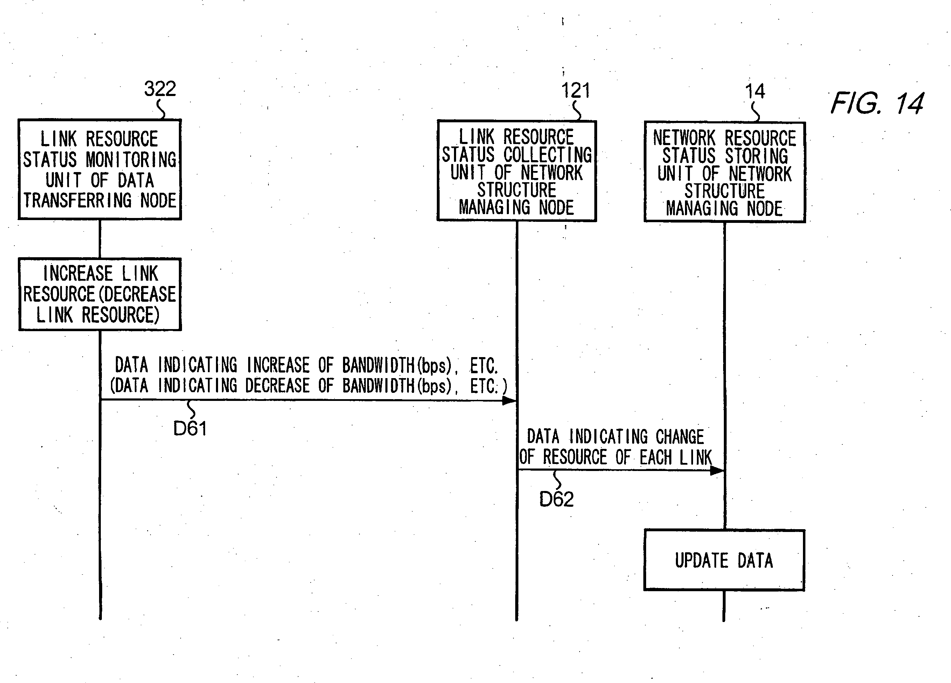

Fig. 14 shows another series of processes in the link event occurrence status notifying sequence (S103) shown in the flowchart of Fig. 8, which are executed when a node event of increase/decrease of link resource occurs. In Fig. 14, a bandwidth for a link (bps; bit per second) is used as an example index of a change of link resource caused by an increase or a decrease of a link resource.

When link resource status monitoring unit 322 of data transferring node 30 detects an increase or a decrease of a link resource, link resource status monitoring unit 322 calculates a bandwidth for the link after the increase/decrease. Then, link resource status monitoring unit 322 transmits data D61 indicating the calculated bandwidth for the link reflecting the increase/decrease, to link resource status collecting unit 121 of network structure managing node 10.

Link resource status collecting unit 121 receives data D61, and specifies a level of change of link resource analyzing relations between the received data. Then, link resource status collecting unit 121 transmits data D62 indicating the specified changes of link resource for each link to network resource status storing unit 14. Network resource status storing unit 14 stores data D62.

### [Node function relocating sequence]

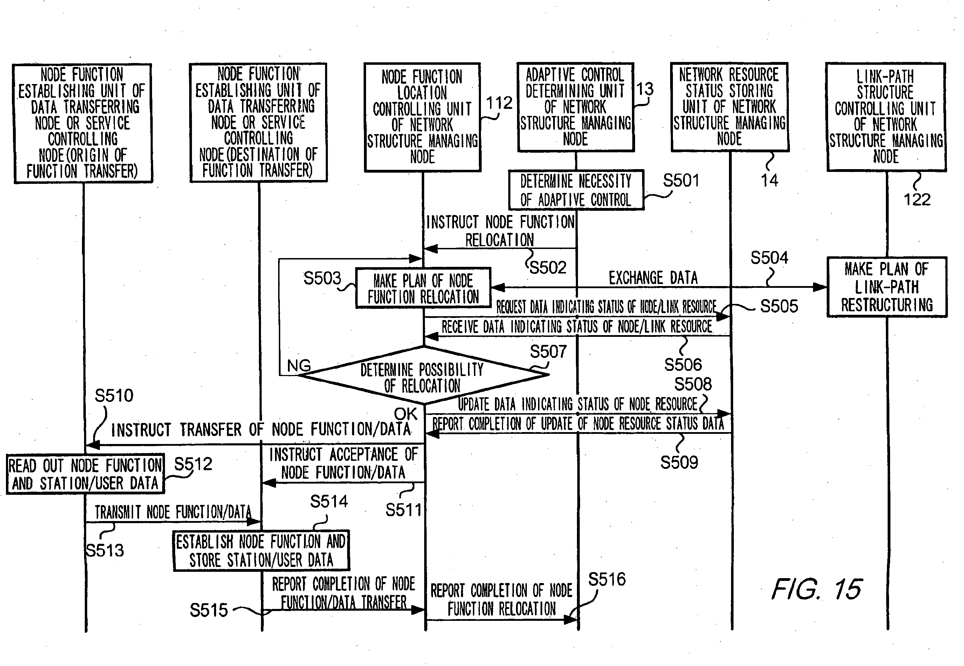

The node function relocating sequence (S30) shown in the flowchart of Fig. 8 will be explained below with reference to Fig. 15.

As shown in Fig. 15, adaptive control determining unit 13 of network structure managing node 10 executes a process for determining necessity of an adaptive control (step S501). When adaptive control determining unit 13 determines that an adaptive control of node functions is necessary, adaptive control determining unit 13 transmits, to node function location controlling unit 112 of network structure managing node 10, instruction data to instruct a node function relocation (Step S502).

Node function location controlling unit 112 receives the instruction data to instruct a node function relocation, and makes a plan for relocating node functions (step S503). Then, node function location controlling unit 112 transmits data indicating an arrangement of node functions which are newly planned to link-path structure controlling unit 122, and exchanges data with link-path structure controlling unit 122 (step S504).

In the process of exchanging data, node function location controlling unit 112 may receive data indicating a draft plan of restructuring of links and paths from link-path structure controlling unit 122. In such cases, node function location controlling unit 112 analyzes the draft plan of restructuring of links and paths, and reports to link-path structure controlling unit 122 whether any problems regarding nodes may occur and what kinds of problems may occur if the draft plan is implemented. At the same time, link-path structure controlling unit 122 analyzes the data from node function location controlling unit 112, and reports to node function location controlling unit 112 whether a draft plan of relocation of nodes contains any potential problems and what kinds of problems may occur. Through the data exchange explained above, node function location controlling unit 112 can make an optimum plan of relocation of node functions in cooperation with link-path structure controlling unit 122.

Node function location controlling unit 112 transmits a request for data indicating statuses of network resources which are stored in network resource status storing unit 14 (step S505). In response to the request, node function location controlling unit 112 receives data indicating operation statuses and employment statuses of each resource in the whole of communication network system 1A from network resource status storing unit 14 (step S506). Then, node function location controlling unit 112 determines whether it is possible to transfer node function definition data from some nodes to some other nodes following the plan of relocation of node functions taking into account the available resources (step S507).

When node function location controlling unit 112 determines that it is impossible to implement the plan (step S507; NG), node function location controlling unit 112 again makes a plan of relocation of node functions (step S503). Conversely, when node function location controlling unit 112 determines that it is possible to implement the plan (step S507; OK), node function location controlling unit 112 updates data stored in network resource status storing unit 14 in accordance with the plan of relocation of node functions (step S508). Node function location controlling unit 112 receives data reporting a completion of update from network resource status storing unit 14 (step S509).

Next, node function location controlling unit 112 transfers node function definition data from some nodes to some other nodes following the plan of relocation of node functions.

More concretely, node function location controlling unit 112 transmits, to nodes from which node functions should be transferred, instruction data of node function/data transfer for instructing transfer of their node function definition data (step S510), and transmits, to nodes to which node functions should be transferred, instruction data of node function/data acceptance for instructing to accept certain node function definition data (step S511).

Each of the nodes from which node functions should be transferred receives instruction data of node function/data transfer, and reads out its node function definition data (software for realizing node functions and data to be processed such as site-specific data, and user data) (step S512). Then, the node transmits the data, which are read out, to each of the nodes, to which node functions should be transferred (step S513).

Each of the nodes to which node functions should be transferred receives node function definition data from other nodes, stores the node function definition data in node function definition unit, and sets parameters for enabling node functions indicated by the node function definition data (step S514). As a result, node functions and data to be processed by the node functions are changed at the node. Each of the nodes which have completed the process of changing their functions, transmits, to node function location controlling unit 112 of network structure managing node 10, data for reporting a completion of transfer of node functions and necessary data (step S515).

Node function location controlling unit 112 transmits, to adaptive control determining unit 13, data for reporting a completion of relocation of node functions (step S516).

When a problem such as a failure in a link occurs, but there is no need to relocate node functions since another path can be established between the same nodes, the sequence explained above may be skipped.

### [Link-path restructuring sequence]

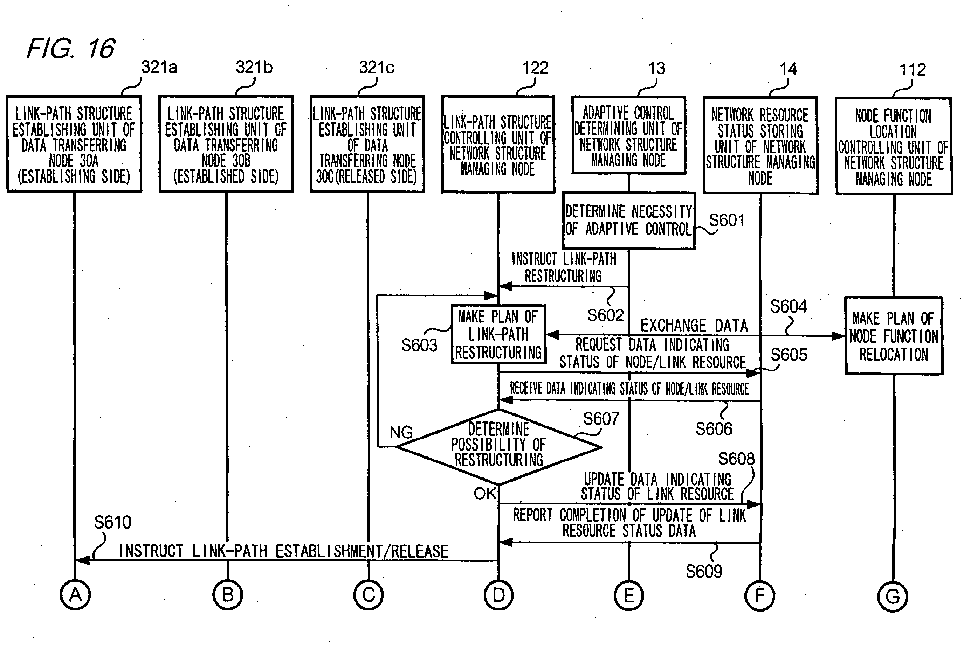

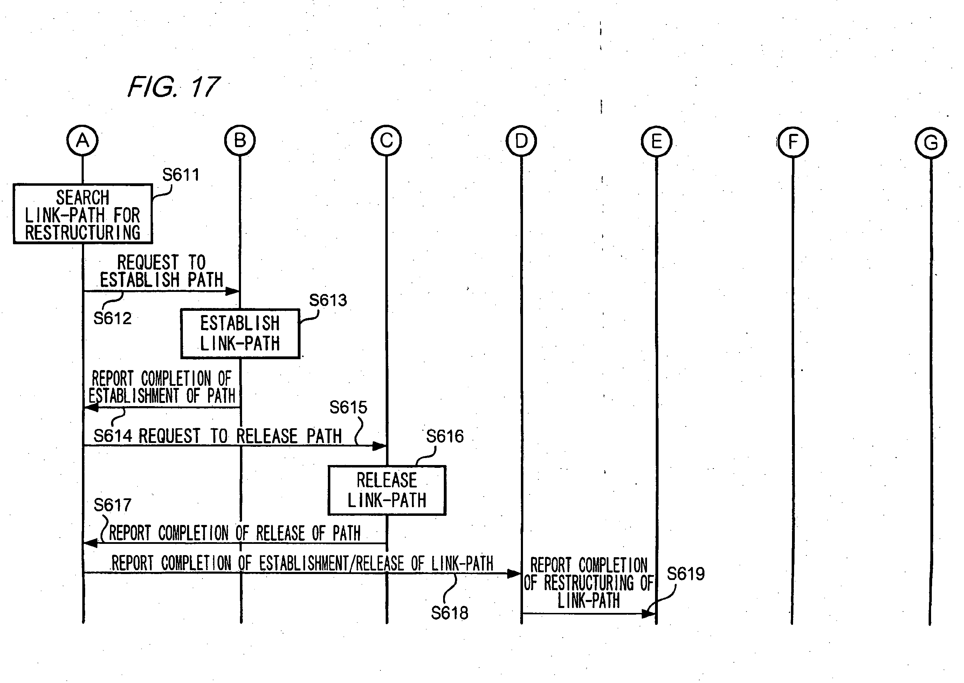

The link-path restructuring sequence (S40) shown in the flowchart of Fig. 8 will be explained below with reference to Fig. 16 and Fig. 17.

As shown in Fig. 16, adaptive control determining unit 13 of network structure managing node 10 executes a process for determining necessity of an adaptive control (step S601). When adaptive control determining unit 13 determines that an adaptive control of links and paths is necessary, adaptive control determining unit 13 transmits, to link-path structure controlling unit 122 of network structure managing node 10, instruction data to instruct a link-path restructuring (Step S602).

Link-path structure controlling unit 122 makes a plan for restructuring links and paths (step S603). Then, link-path structure controlling unit 122 exchanges data with node function location controlling unit 112, namely transmits data indicating an arrangement of links and paths which are newly planned to node function location controlling unit 112 and receives data indicating a draft plan of relocation of node functions from node function location controlling unit 112 (step S604). This data exchange between node function location controlling unit 112 and link-path structure controlling unit 122 is implemented as explained in the section of [node function relocation sequence]. Through the data exchange, link-path structure controlling unit 122 can make an optimum plan of restructuring of links and paths in cooperation with node function location controlling unit 112.

Link-path structure controlling unit 122 transmits a request for data indicating statuses of network resources which are stored in network resource status storing unit 14 (step S605). In response to the request, link-path structure controlling unit 122 receives data indicating operation statuses and employment statuses of each resource in the whole of communication network system 1A from network resource status storing unit 14 (step S606). Then, link-path structure controlling unit 122 determines whether it is possible to establish links and paths following the plan of restructuring of links and paths taking into account the current available resources (step S607).

When link-path structure controlling unit 122 determines that it is impossible to implement the plan (step S607; NG), link-path structure controlling unit 122 again makes a plan of restructuring of links and paths (step S603). On the other hand, when link-path structure controlling unit 122 determines that it is possible to implement the plan (step S607; OK), link-path structure controlling unit 122 updates data stored in network resource status storing unit 14 in accordance with the plan of restructuring of links and paths (step S608). Link-path structure controlling unit 122 receives data reporting a completion of update from network resource status storing unit 14 (step S609).

Next, link-path structure controlling unit 122 establishes some links and paths and releases other links and paths following the plan of restructuring of links and paths.

More concretely, link-path structure controlling unit 122 transmits, to data transferring node 30a which starts procedures for establishing or releasing links and paths, instruction data of link-path establishment/release (step S610). Link-path structure establishing unit 321a of data transferring node 30a searches data transferring node 30b, which is indicated as the node located at the opposite side of new links and paths, or data transferring node 30c, which are indicated as the nodes located at the opposite side of existing links and paths to be released (step S611).

Link-path structure establishing unit 321a transmits, to data transferring node 30b, instruction data for instructing to establish links and paths (step S612). Link-path structure establishing unit 321b of data transferring node 30b receives the instruction data, and executes necessary procedures for establishing links and paths with data transferring node 30a employing link resources of data transferring node 30b (step S613). After link-path structure establishing unit 321 b completes the procedures for establishing links and paths, link-path structure establishing unit 321b transmits, to data transferring node 30a, data for reporting a completion of establishment of links and paths (step S614).

Link-path structure establishing unit 321 a of data transferring node 30a transmits, to data transferring node 30c, instruction data for instructing to release links and paths with data transferring node 30a (step S615). Link-path structure establishing unit 321c of data transferring node 30c receives the instruction data, and releases existing links and paths to release link resources which are employed for the links and paths (step S616), and transmits, to data transferring node 30a, data for reporting a completion of release of links and paths (step S617).

Link-path structure establishing unit 321 a of data transferring node 30a transmits, to link-path structure controlling unit 122 of network structure managing node 10, data for reporting a completion of establishment and release of links and paths (step S618). Link-path structure controlling unit 122 transmits, to adaptive control determining unit 13, data for reporting a completion of restructuring of links and paths (step S619).

### [Example of operation]

An example of operation of the present embodiment will be explained below.

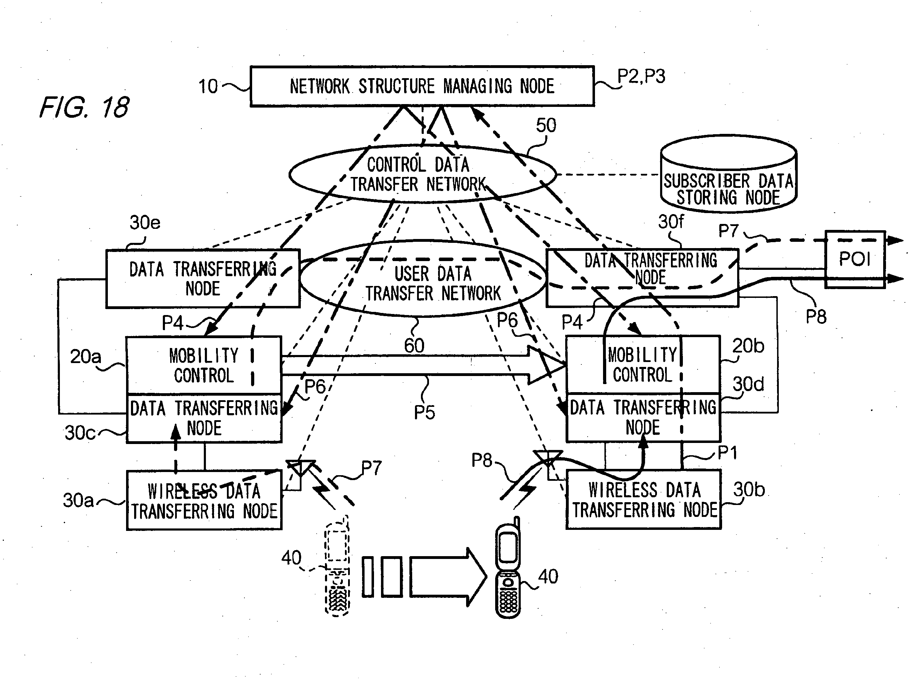

Fig. 18 is a diagram for explaining a series of operations where a mobility control function, which enables user terminal 40 such as a cellular phone to communicate with another terminal while user terminal 40 is moving from one location to another location, is transferred from one of service controlling nodes 20 to another of service controlling nodes 20, in accordance with locations of a user who is in possession of user terminal 40.

In the following explanation, as an example, it is supposed that user terminal 40 moves from an area coved by data transferring node 30a to an area coved by data transferring node 30b.

As shown in Fig. 18, when data transferring node 30b, which is the nearest to user terminal 40, recognizes a move of user terminal 40, data transferring node 30b transmits a request for an adaptive control to network structure managing node 10 (P1).

Adaptive control determining unit 13 of network structure managing node 10 determines whether it is necessary to conduct an adaptive control as explained above (P2). In this case, adaptive control determining unit 13 determines that it is necessary to conduct a node function relocation. Therefore, adaptive control determining unit 13 transmits instruction data of node function relocation to node function location controlling unit 112, and instruction data of link-path restructuring to link-path structure controlling unit 122.

Node function location controlling unit 112 and link-path structure controlling unit 122 analyze current statuses of network resources referring to data indicating employment statuses of network resources, which are stored in network resource status storing unit 14, data indicating draft plans of node function relocations made by node function location controlling unit 112, and data indicating draft plans of link-path restructurings made by link-path structure controlling unit 122 (P3), and make optimum plans of relocation and restructuring.

More concretely, node function location controlling unit 112 determines that node function definition data managed by service controlling node 20a, such as data indicating transitions of statuses of user terminal 40 which are required for executing a mobility control function and a continuous mobility control, should be transferred to service controlling node 20b. At the same time, link-path structure controlling unit 122 determines that a path for wireless communications of user terminal 40 through data transferring nodes 30a, 30c, 30e and 30f, should be replaced with a path through data transferring nodes 30b, 30d and 30f. Then, node function location controlling unit 112 transmits instruction data of node function/data transfer to service controlling node 20a and instruction data of node function/data acceptance to service controlling node 20b (P4). As a result, node function definition data are transferred from service controlling node 20a to service controlling node 20b through user data transfer network 60 (P5).

Then, link-path structure controlling unit 122 of network structure managing node 10 transmits instruction data of link-path establishment/release to data transferring node 30c and data transferring node 30d (P6). As a result, data transferring node 30c and data transferring node 30d release the path between user terminal 40 and the partner terminal of user terminal 40 through data transferring nodes 30a, 30c, 30e and 30f (P7), and establish the path between user terminal 40 and the partner terminal through data transferring nodes 30b, 30d and 30f (P8) by changing employed link resources. Through the processes explained above, a relocation of mobility control function is achieved.

In a case that service controlling node 20b is already executing a mobility control function, it is unnecessary to transfer node function definition data. In a usual mobile communication network, some sorts of user data (numbers for identifying users, information on services which each user uses, information on users locations, and so on) may be centralized and managed by a certain node. Therefore, only user data regarding transition of statuses required for a seamless mobility control for user terminal 40, such as data indicating voice communication statuses and data for billing of user terminal 40, may be transferred. When communication network system 1A comprises both of user data transfer network 60 and control data transfer network 50, as shown in Fig. 18, either one of user data transfer network 60 and control data transfer network 50, or both of user data transfer network 60 and control data transfer network 50 may be used for establishing a communication channel for transferring node function definition data.

The method for transferring a node function as explained above can be applied to transfers of other kinds of functions such as a firewall function for protecting communication terminals from intrusions of unauthorized data and a buffering function for buffering data for mobile communications.

### B. The Second Embodiment

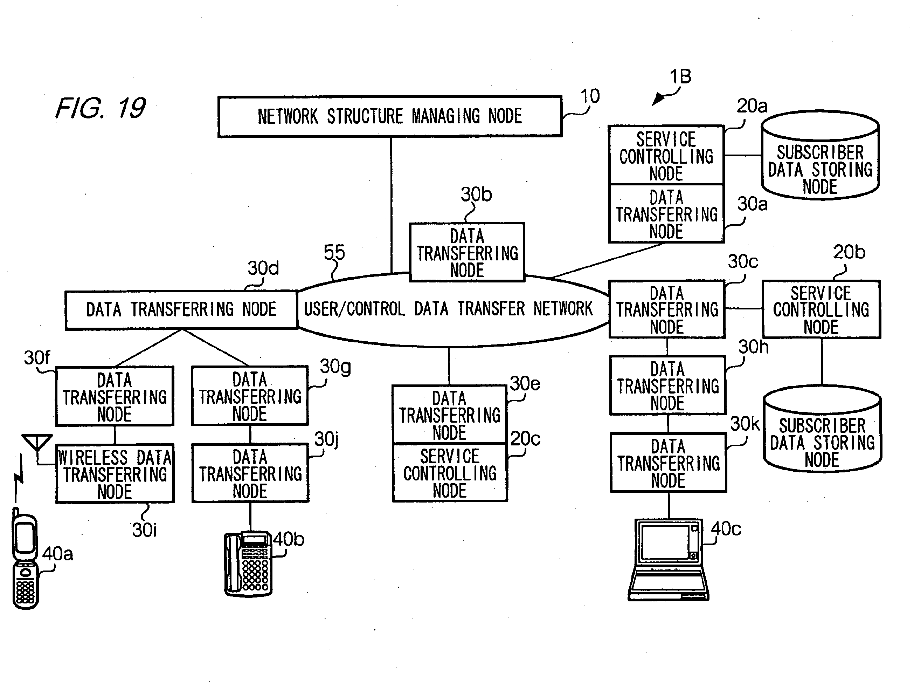

Fig. 19 is a block diagram showing a structure of communication network system 1B according to the second embodiment of the present invention. Communication network system 1B may be, for example, the Internet. All data are communicated through user/control data transfer network 55 in the second embodiment, though control data are communicated through control data transfer network 50 and other data are communicated through user data transfer network 60 in the first embodiment.

Moreover, data from user terminal 40 may be transmitted without passing through service controlling node 20 in the second embodiment, though all data from user terminal 40 are always transmitted through service controlling node 20, such as a switching equipment, in the first embodiment.

The structural features of the second embodiment, other than the points explained above, are the same as those of the first embodiment, and explanations of them are not repeated here.

An operation in the second embodiment will be explained below.

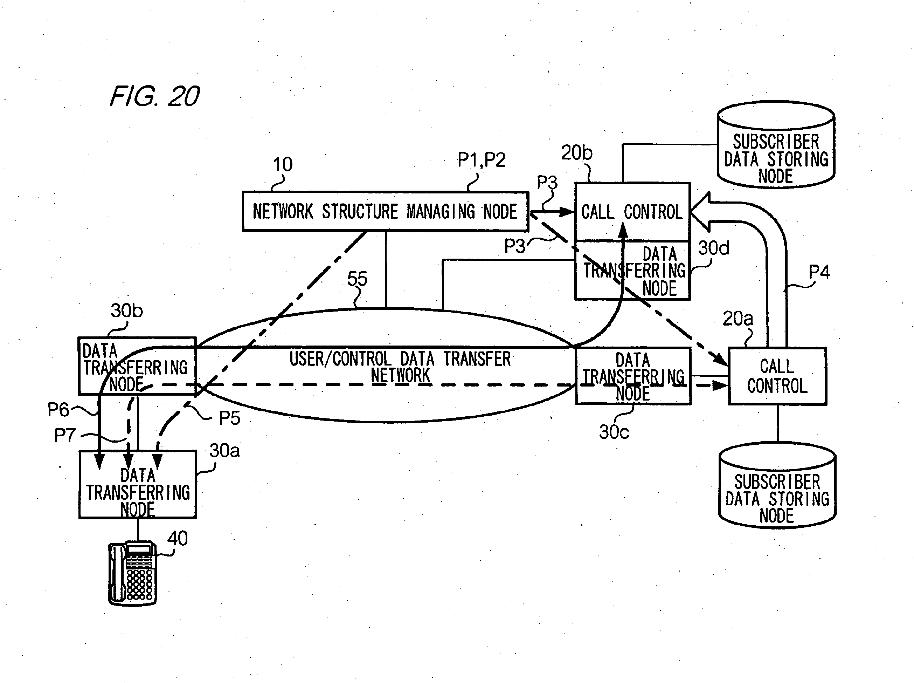

Fig. 20 is a diagram for explaining an operation for transferring a call control function so as to avoid congestion occurring at a node.

In the following explanation, as an example, it is supposed that congestion caused by a lack of network resources for transactions of a call control executed at service controlling node 20a is detected by network structure managing node 10, and it is determined whether an adaptive control is necessary.

Adaptive control determining unit 13 of network structure managing node 10 monitors data indicating statuses of network resources, which are stored in network resource status storing unit 14 (P1), and determines that network resources employed for a call control at service controlling node 20a are in a congested state. Then, adaptive control determining unit 13 executes a process for determining necessity of an adaptive control and determines that it is necessary to conduct a relocation of node functions and a restructuring of links and paths (P2). Then, adaptive control determining unit 13 transmits instruction data of node function relocation to node function location controlling unit 112, and instruction data of link-path restructuring to link-path structure controlling unit 122.

Node function location controlling unit 112 and link-path structure controlling unit 122 analyze current statuses of network resources referring to data indicating statuses of network resources, which are stored in network resource status storing unit 14, data indicating draft plans of node function relocations made by node function location controlling unit 112, and data indicating draft plans of link-path restructurings made by link-path structure controlling unit 122, and make optimum plans of relocation and restructuring.

More concretely, node function location controlling unit 112 checks that node resources at service controlling node 20b are available, and determines that node function definition data managed by service controlling node 20a (software for realizing node functions, station data and user data) should be transferred to service controlling node 20b. At the same time, link-path structure controlling unit 122 determines that a path between user terminal 40 and service controlling node 20a through data transferring nodes 30a, 30b and 30c should be replaced with a path through data transferring nodes 30a, 30b and 30d. Then, node function location controlling unit 112 transmits instruction data of node function/data transfer to service controlling node 20a and instruction data of node function/data acceptance to service controlling node 20b (P3). As a result, node function definition data are transferred from service controlling node 20a to service controlling node 20b through user/control data transfer network 55 (P4).

Then, link-path structure controlling unit 122 of network structure managing node 10 transmits instruction data of link-path establishment/release to data transferring node 30a, which is the nearest to user terminal 40 (P5). In accordance with the instruction data, data transferring node 30a establishes the path through data transferring nodes 30a, 30b and 30d (P6) and releases the path between data transferring node 30a and data transferring node 30c (P7).

Through the processes explained above, a relocation of call control function is achieved, and the congestion at the node is solved.

When communication network system 1B has a structure as shown in Fig. 20, user data should be stored in service controlling node 20 which provides its service for user terminals 40. Therefore, user data such as numbers for identifying users and information on services which each user uses should be transferred as well as user data regarding transition of statuses.

The method for controlling network structure as explained above can be applied to other kinds of controls such as a control for avoiding failures occurring at nodes and a control for load distribution among nodes.

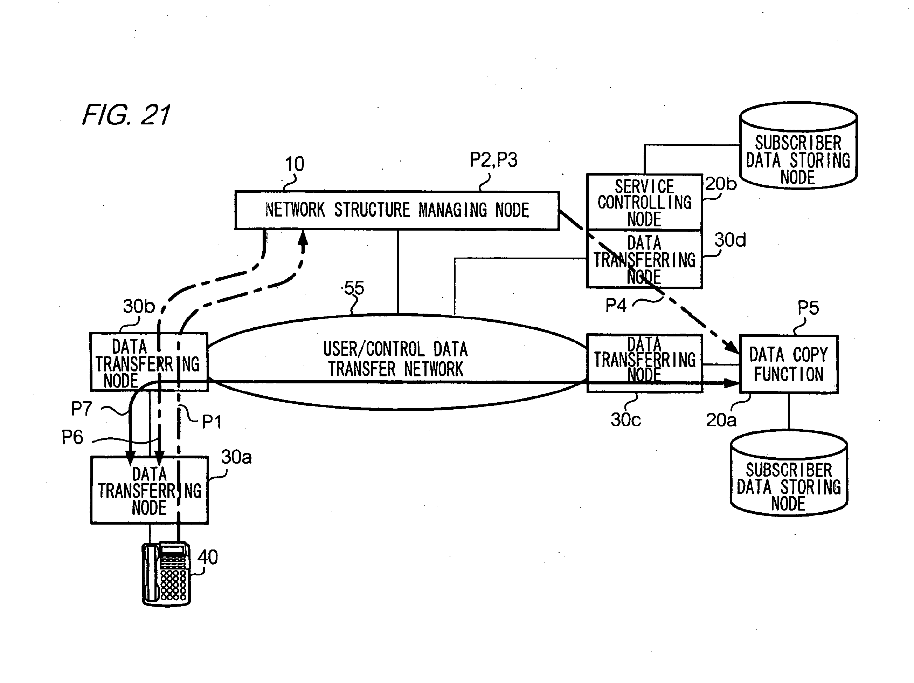

Fig. 21 is a diagram for explaining a series of operations executed in the second embodiment when a data copy function is realized at service controlling node 20a in response to data for requesting an adaptive control from user terminal 40. This type of adaptive control is required, for example, for a multicast service with a high efficiency which is realized by an active network technology. Namely, when user terminal 40 of a new user connects with service controlling node 20 which belongs to a multicast tree, the adaptive control is useful.

User terminal 40 transmits data for requesting an adaptive control in response to its user's operation (P1). When adaptive control determining unit 13 of network structure managing node 10 receives the data for requesting an adaptive control, adaptive control determining unit 13 executes a process for determining necessity of an adaptive control and determines that it is necessary to conduct a relocation of node functions and a restructuring of links and paths (P2). Then, adaptive control determining unit 13 transmits instruction data of node function relocation to node function location controlling unit 112, and instruction data of link-path restructuring to link-path structure controlling unit 122.

Node function location controlling unit 112 and link-path structure controlling unit 122 analyze current statuses of network resources referring to data indicating statuses of network resources, which are stored in network resource status storing unit 14, data indicating draft plans of node function relocations made by node function location controlling unit 112, and data indicating draft plans of link-path restructurings made by link-path structure controlling unit 122 (P3), and make optimum plans of relocation and restructuring.

More concretely, node function location controlling unit 112 checks that service controlling node 20a belongs to a multicast tree and has available resources for processing data. Then, node function location controlling unit 112 determines to transfer a data copy function to service controlling node 20a. At the same time, link-path structure controlling unit 122 determines to establish a path between user terminal 40 and service controlling node 20a through data transferring nodes 30a, 30b and 30c. Node function location controlling unit 112 transmits instruction data of node function/data acceptance to service controlling node 20a (P4). Service controlling node 20a prepares node function definition data for defining a data copy function to provide a multicast service for user terminal 40 (P5).

Link-path structure controlling unit 122 transmits instruction data of link-path establishment/release to data transferring node 30a (P6). In response to the instruction data, data transferring node 30a establishes a path between user terminal 40 and service controlling node 20a through data transferring nodes 30b and 30c (P7).

According to the operations explained above, when, for example, a data transfer function of data transferring node 30 or a service control function of service controlling node 20 halts because of an overload or a failure in communication network system 1A or 1B, the function can be relocated to an other node which has enough data processing capacity. As a result, load can be distributed among nodes, and congestion can be avoided. Moreover, since a statistical multiplexing of network resources can be achieved in the whole of communication network system 1A or 1B, required node resources and equipment cost may be reduced. Since load can be distributed among nodes in the whole of communication network system 1A or 1B, some sorts of restrictions, such as a maximum transaction number, may be mitigated. Moreover, since information on node events such as increases and decreases of node resources and link resources are collected, stored and managed automatically by network structure managing node 10, the information can be utilized for further effective employment of network resources.

The first and second embodiments provide methods for managing and controlling resources where network resources are controlled in an adaptive way in communication network system 1A or 1B, which can be applied to any kinds of network services and applications in a common way. Namely, according to the present invention, an adaptive network, which can achieve an optimum employment of network resources, is realized by controlling both node functions and link-path structures in an adaptive and cooperative way.

### [Modifications]

Some examples of modifications of the first and second embodiments will be explained below.
(1) In the embodiments explained above, service controlling nodes 20 and data transferring nodes 30 are programmable nodes which can replace their software and data to be processed by the software. However, service controlling nodes 20 and data transferring nodes 30 are not limited to programmable nodes.
   Flexibility of distribution of transactions for data communications in a network depends on how flexibly each node can change its node functions. For example, if all nodes included in communication network system 1A or 1B are perfect programmable nodes, namely nodes which can define and realize any kinds of node functions, any kinds of transactions for data communications can be realized at any node, namely communication network system 1A or 1B is in a state of being so-called "location-free". On the contrary, if nodes in communication network system 1A or 1B are nodes which can replace only data to be processed but cannot replace their functions, transactions for data communications can be transferred only among the nodes which can realize the common functions.
(2) In the embodiments explained above, network resource status storing unit 14 is located in network structure managing node 10. However, a location of network resource status storing unit 14 is not limited, and network resource status storing unit 14 may be located in another node other than network structure managing node 10.
(3) In the embodiments explained above, network resources are categorized into node resources and link resources. However, network resources are not limited to those may be categorized in such a way, and network resources may include other kinds of resources. Moreover, usage ratios of CPU, congestion, and so on which are mentioned in the embodiments explained above are examples of indexes of statuses of node resources and link resources, or node resources and link resources, and other kinds of indexes or events, such as occurrence ratios of paging and latencies, may also be used.
(4) In the embodiments explained above, when network resources in the whole of communication network system 1A or 1B are controlled in an adaptive way so that the network resources are employed in an optimum condition, numbers of service controlling nodes 20 and data transferring nodes 30 in communication network system 1A or 1B does not change. However, the adaptive control according to the present invention can be applied to a case where new nodes may be added to communication network system 1A or 1B.

More concretely, when a new node is added to the system, the new node or a node which is a partner of the new node transmits data indicating statuses of network resources of the new node to network structure managing node 10. Network structure managing node 10 receives the data indicating statuses of network resources of the new node, and on the basis of the data, executes an adaptive control of network resources in the whole of communication network system 1A or 1B which includes the new node.

### C. The Third Embodiment

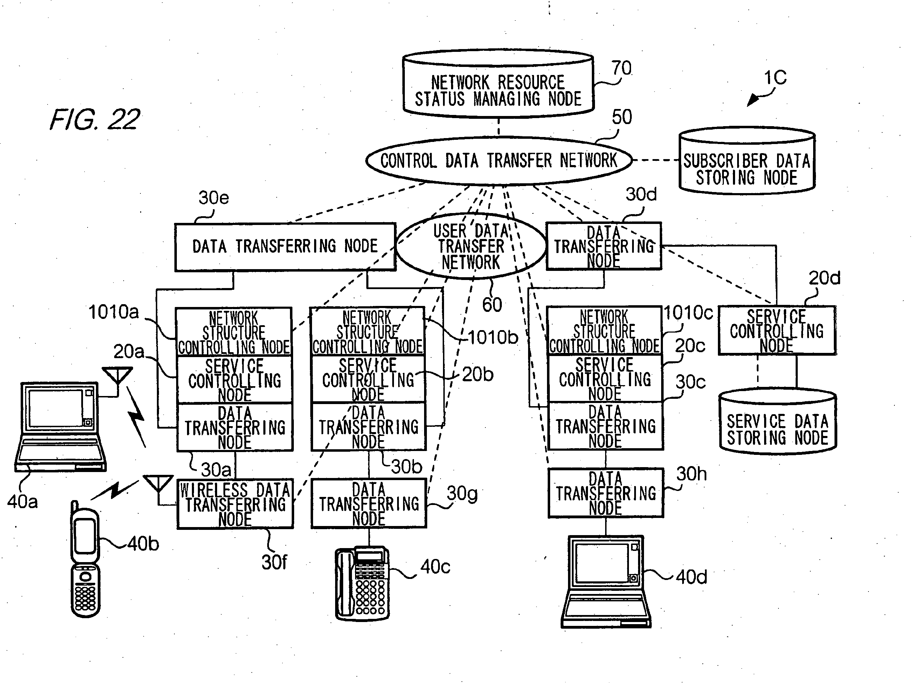

Fig. 22 is a block diagram showing a structure of communication network system 1C according to the third embodiment of the present invention. Communication network system 1A in the first embodiment comprises, as explained above, network structure managing node 10 which executes management of network resource statuses, relocation of functions of functional nodes and data used for the functions, and restructuring of links and paths in a network synthetically. In the third embodiment, however, communication network system 1C comprises network resource status managing node 70 instead of network structure managing node 10. Network resource status managing node 70 mainly executes management of network resources. However, network resource status managing node 70 does not execute relocation of functions of functional nodes and data used for the functions, or restructuring of links and paths in the network, which are executed by network structure managing node 10 in the first embodiment. On the other hand, communication network system 1C comprises plural network structure controlling nodes, namely network structure controlling nodes 1010a to 1010c, which are distributed in the network, and each of these network structure controlling nodes executes relocation of functions of functional nodes and data used for the functions, and restructuring of links and paths in the network.

Similarly to the first embodiment, since network structure controlling nodes 1010a to 1010c have a common structure, service controlling nodes 20a to 20d have a common structure, data transferring nodes 30a to 30h have a common structure, and user terminals 40a to 40d also have a common structure, they will be referred to as network structure controlling node(s) 1010, service controlling node(s) 20, data transferring node(s) 30 and user terminal(s) 40 respectively, where it is not necessary to refer to them specifically in the following explanation.

Where it is necessary to specify each of network structure controlling nodes 1010, each of service controlling nodes 20, and each of data transferring nodes 30, they will be referred to by their description followed by their number, for example, network structure controlling node 1010a, 1010b, ··· , service controlling node 20a, 20b,···, data transferring node 30a, 30b,···, and so on.

In the third embodiment, to each of network structure controlling nodes 1010, a coverage scope is assigned in advance. A coverage scope means certain nodes and certain links in the network, which may be determined on the basis of logical locations of nodes and links in the network, whose problems are to be managed by each of network structure controlling nodes 1010. Each of network structure controlling nodes 1010 makes plans of relocation of node functions and plans of restructuring of links and paths taking into account statuses of network resources in a coverage scope, which is assigned to each of network structure controlling nodes 1010, to solve problems occurring in the coverage scope.

Some coverage scopes, which are taken into account by network structure controlling nodes 1010 for making plans of relocation of node functions and plans of restructuring of links and paths, may overlap. For example, some coverage scopes assigned to network structure controlling nodes 1010 cover narrow areas from a viewpoint of logical locations in the network, and, on the other hand, some coverage scopes cover, for example, an entire network. Network structure controlling node 1010, whose coverage scope covers an entire network, makes plans of relocation of node functions and plans of restructuring of links and paths taking all of the resources in the network into account. Under the circumstances, while one of network structure controlling nodes 1010 executes an adaptive control employing certain network resources to solve a problem, another of network structure controlling nodes 1010 may try to employ the same network resources to solve another problem for executing another adaptive control, if no countermeasure is taken against such a redundant control. Therefore, a countermeasure against such a redundant control using lock controls, namely exclusive access controls, is adopted in the third embodiment.

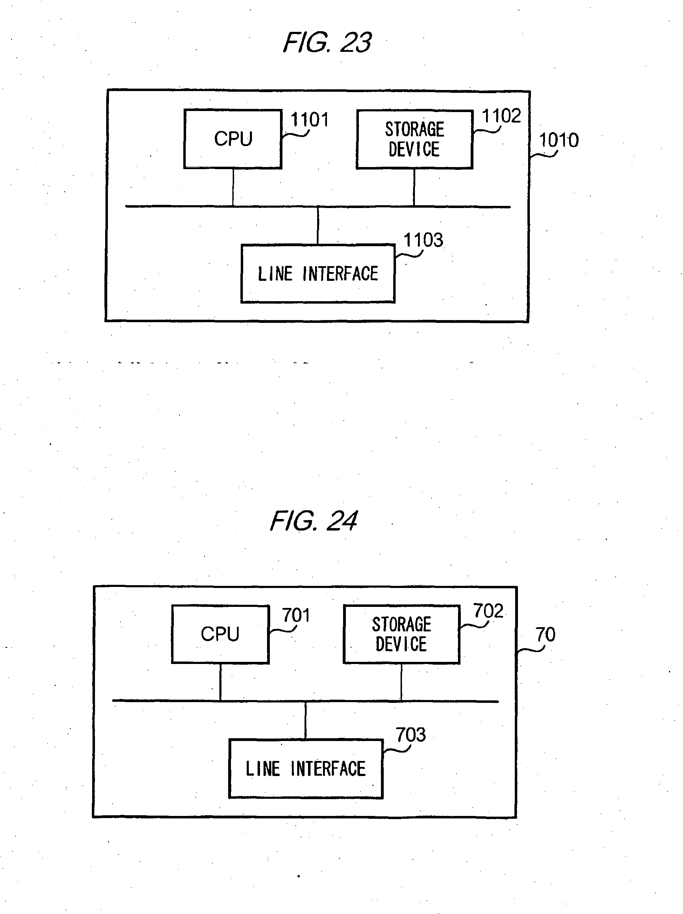

As shown in Fig. 23, network structure controlling node 1010 comprises CPU 1101 for controlling each component of network structure controlling node 1010, storage device 1102 for storing programs and data, and line interface 1103 for communicating data with other nodes.

Storage device 1102 of network structure controlling node 1010 stores programs for determining whether it is necessary for relocating node functions, and whether it is necessary for restructuring links and paths, programs for planning relocations of node functions and planning restructurings of links and paths so as to employ network resources in communication network system 1C in an optimum condition, and programs for transmitting requests for lock controls for locking certain network resources employed for adaptive controls to avoid the network resources being employed for other adaptive controls.

Structures of service controlling node 20 and data transferring node 30 are the same as those in the first embodiment which are explained above with references to Fig. 3 and Fig. 4. Service controlling node 20 and data transferring node 30 in the first embodiment execute their operations in accordance with instruction data from network structure managing node 10 (see Fig. 1). Similarly, service controlling node 20 and data transferring node 30 in the third embodiment execute their operations in accordance with instruction data from network structure controlling nodes 1010.

As shown in Fig. 24, network resource status managing node 70 comprises CPU 701 for controlling each component of network resource status managing node 70, storage device 702 for storing programs and data, and line interface 703 for communicating data with other nodes.

Storage device 702 of network resource status managing node 70 stores programs for collecting and storing statuses of employment of network resources (node resources and link resources) of each of service controlling nodes 20 and data transferring nodes 30, programs for receiving requests for lock controls for locking network resources employed for adaptive controls from network structure controlling nodes 1010 and locking the network resources in accordance with the requests, and data indicating statuses of resources which are collected.

CPU 1101 realizes the functions of network structure controlling node 1010 explained below by executing programs stored in storage device 1102 of network structure controlling node 1010. Similarly, CPU 201 realizes the functions of service controlling node 20 explained below by executing programs stored in storage device 202 of service controlling node 20. Similarly, CPU 301 realizes the functions of data transferring node 30 explained below by executing programs stored in storage device 302 of data transferring node 30. Similarly, CPU 701 realizes the functions of network resource status managing node 70 explained below by executing programs stored in storage device 702 of network resource status managing node 70.

### [Functional structure of network resource status managing node]

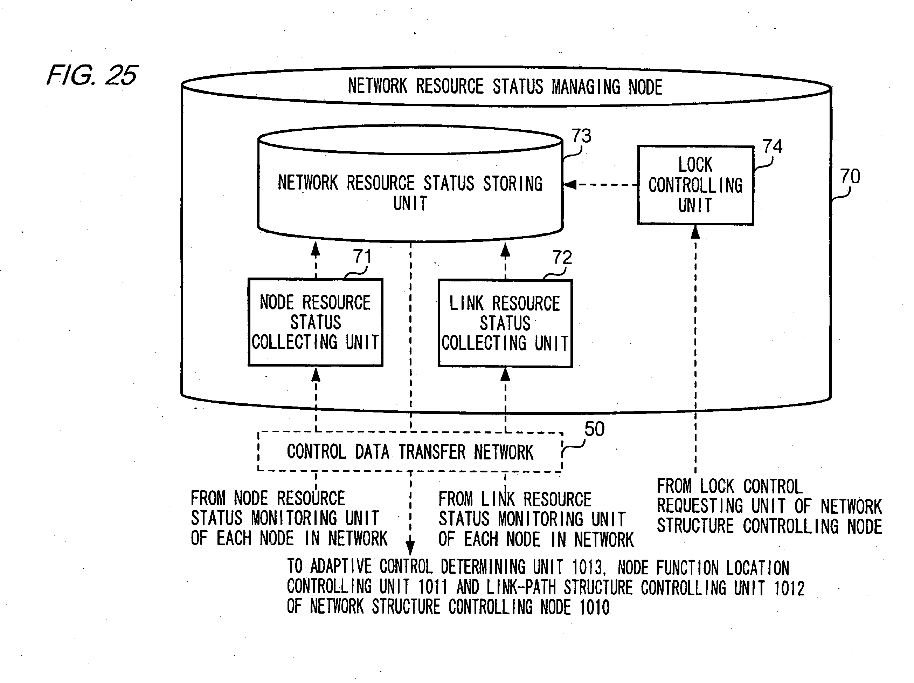

Functional structure of network resource status managing node 70 will be explained below with reference to Fig. 25.

Network resource status managing node 70 comprises node resource status collecting unit 71, link resource status collecting unit 72, network resource status storing unit 73 and lock controlling unit 74.

Node resource status collecting unit 71 receives, from service controlling node 20 through control data transfer network 50, resource status data which indicate employment statuses of node resources and several kinds of node events such as an overload at service controlling node 20. Similarly, node resource status collecting unit 71 also receives resource status data from data transferring node 30 through control data transfer network 50. Node resource status collecting unit 71 analyzes received resource status data, processes the data by adjusting parameters contained in the data, and so on, and transmits the processed data to network resource status storing unit 73. Network resource status storing unit 73 receives and stores the data.

Link resource status collecting unit 72 receives resource status data from link resource status monitoring unit 322 of data transferring node 30 through control data transfer network 50. Link resource status collecting unit 72 analyzes received resource status data, processes the data by adjusting parameters contained in the data, and so on, and transmits the processed data to network resource status storing unit 73. Network resource status storing unit 73 receives and stores the data.

Lock controlling unit 74 executes lock controls for each of network resources not to be controlled by more than one of network structure controlling nodes 1010 redundantly.

More concretely, lock controlling unit 74 receives notices of locks of controlled node resources and notices of locks of controlled link resources from network structure controlling nodes 1010, which indicate node resources and link resources under control of network structure controlling nodes 1010. In accordance with the notices, lock controlling unit 74 locks certain network resources whose statuses are managed by data stored in network resource status storing unit 73. Namely, lock controlling unit 74 stores data which indicate that the certain network resources are locked, in relation to data which indicate statuses of the certain network resources and which are stored in network resource status storing unit 73.

### [Functional structure of network structure controlling node]

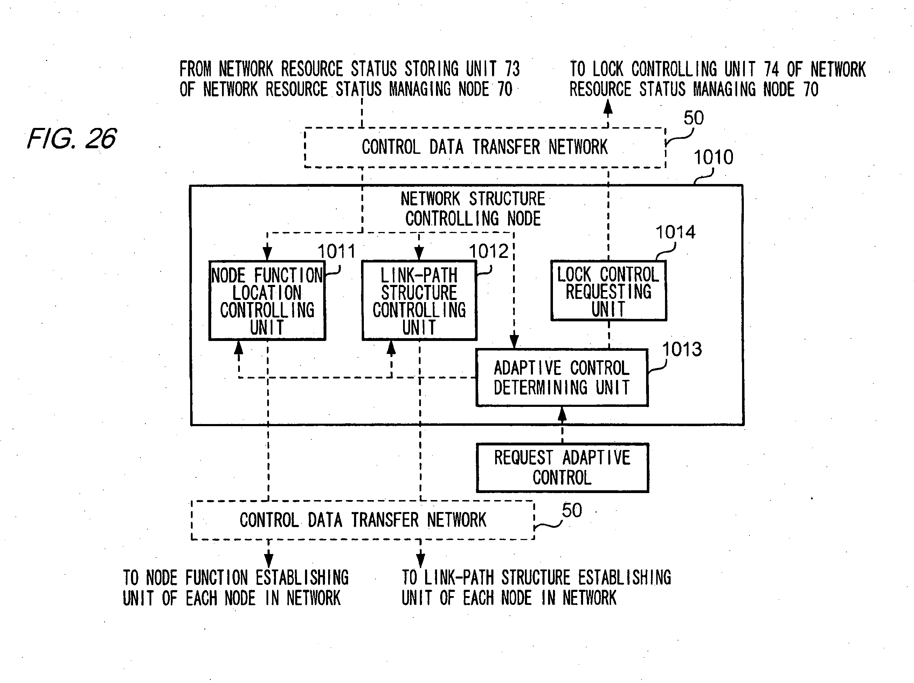

Functional structure of network structure controlling node 1010 will be explained below with reference to Fig. 26.

Network structure controlling node 1010 comprises node function location controlling unit 1011, link-path structure controlling unit 1012, adaptive control determining unit 1013 and lock control requesting unit 1014.

Adaptive control determining unit 1013 analyzes data indicating operation statuses and employment statuses of each of the resources in the whole of communication network system 1C, which are stored in network resource status storing unit 73. Then, adaptive control determining unit 1013 determines whether it is necessary to conduct a relocation of node functions and a restructuring of links and paths by analyzing occurrences of failures, congestion statuses, overload statuses, and so on, with regard to node resources and link resources, as well as changes of available resources caused by increases and decreases of node resources and link resources.

Further, adaptive control determining unit 1013 receives from external devices instruction data for instructing a relocation of node functions or instruction data for instructing a restructuring of links and paths. These instruction data may be transmitted from one of service controlling nodes 20, for example, when the node provides an advanced network service in communication network system 1C using an active network technology.

A firewall, an anchor point for controlling mobile communication terminals, a buffering point for buffering mobile communication data, and a multipath establishing point for enabling a multicast communication service are examples of node functions which are realized in an advanced network service.

When adaptive control determining unit 1013 determines that it is necessary to conduct a relocation of node functions, for example, on the basis of a usage status of a node resource, adaptive control determining unit 1013 transmits, to node function location controlling unit 1011, instruction data of node function relocation to instruct a relocation of node functions at the node. Similarly, when adaptive control determining unit 1013 determines that it is necessary to conduct a restructuring of paths between nodes, adaptive control determining unit 1013 transmits, to link-path structure controlling unit 1012, instruction data of link-path restructuring to instruct a restructuring of links and paths.

Node function location controlling unit 1011 receives instruction data of node function relocation from adaptive control determining unit 1013, and plans a relocation of node functions taking into account conditions of the whole of communication network system 1C.

More concretely, node function location controlling unit 1011 analyzes the current available node resources and link resources, and determines new locations of node functions, by referring to data stored in network resource status managing node 70. Then, node function location controlling unit 1011 exchanges data with link-path structure controlling unit 1012, namely, transmits data of node function relocation, which indicates the determined relocation plan, to link-path structure controlling unit 1012, and receives data of link-path restructuring, which is not yet finalized, from link-path structure controlling unit 1012, so that node function location controlling unit 1011 finalizes the node function locations which may achieve an optimum condition in the whole of communication network system 1C.

After node function location controlling unit 1011 finalizes the plan of node function relocation, node function location controlling unit 1011 transmits instruction data of node function/data transfer, for instructing each of transmitting nodes which transfer their node functions and each of receiving nodes to which the node functions are transferred, to transfer the node functions.

Link-path structure controlling unit 1012 receives instruction data of link-path restructuring from adaptive control determining unit 1013, and plans a new structure of links and paths taking into account conditions of the whole of communication network system 1C.

More concretely, link-path structure controlling unit 1012 analyzes the current available link resources and node resources, and determines a new structure of links and paths, by referring to data stored in network resource status storing unit 73. Then, link-path structure controlling unit 1012 exchanges data with node function location controlling unit 1011, namely, transmits data of link-path restructuring, which indicates the determined restructuring plan, to node function location controlling unit 1011, and receives data of node function relocation, which is not yet finalized, from node function location controlling unit 1011, so that link-path structure controlling unit 1012 finalizes the node function relocation and the link-path restructuring, thereby achieving an optimum condition in the whole of communication network system 1C.

After link-path structure controlling unit 1012 finalizes the plan of link-path restructuring, link-path structure controlling unit 1012 transmits to data transferring nodes 30 which can establish links, instruction data of link-path establishment/release, for instructing the node to establish new links and paths.

Then, lock control requesting unit 1014 transmit a request for a lock control for locking network resources employed for the adaptive control so as to avoid the network resources being controlled by any other network structure controlling nodes 1010 redundantly, to lock controlling unit 74 of network resource status managing node 70.

### [Structures of service controlling node and data transferring node]

Service controlling node 20 and data transferring node 30 are programmable nodes which have the same functions as those in the first embodiment. Therefore, it is possible to distribute and relocate functions and resources to realize required network services, which may change continuously, in the whole of communication network system 1C, in accordance with requests from network structure controlling node 1010 and user terminal 40.

Structures of service controlling node 20 and data transferring node 30 will be explained below.

### [Functional structure of service controlling node]

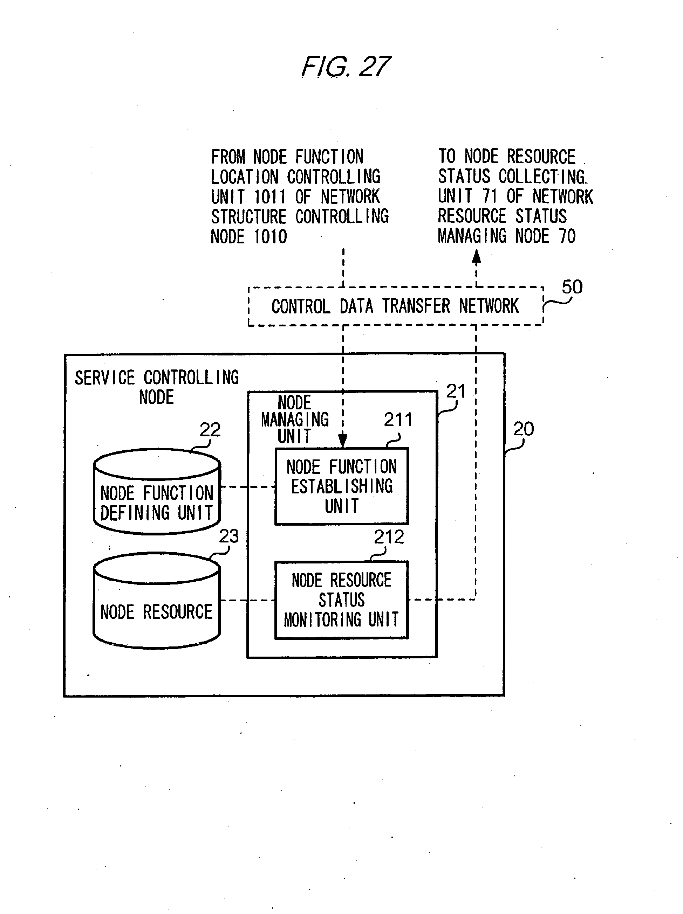

Fig. 27 is a block diagram for explaining functions of service controlling node 20.

As explained in the first embodiment, service controlling node 20 is a node which provides several network services such as a call control function, a firewall function, and a mobility control function for mobile communication.

As shown in Fig. 27, node function establishing unit 211 receives, from node function location controlling unit 1011 of network structure controlling node 1010, instruction data of node function/data transfer or instruction data of node function/data acceptance. In accordance with these data, node function establishing unit 211 establishes its functions by obtaining software for realizing node functions and node function definition data containing data to be processed, such as station data and user data, from node function defining unit 22 or other nodes. "User data" may contain, for example, data such as numbers for identifying users, information on services used by each user, information on users' locations, and information on state transitions.

Node resource status monitoring unit 212 monitors employment statuses and operation statuses of node resource 23, such as usage ratio of CPU 201, continuously. Node resource status monitoring unit 212 successively transmits, to node resource status collecting unit 71 of network resource status managing node 70, resource status data indicating monitored employment statuses and monitored operation statuses of node resource 23.

At the same time, node resource status monitoring unit 212 detects occurrences of node events at node resource 23 such as overloads, failures and increases/decreases of resources, and transmits, to node resource status collecting unit 71 of network resource status managing node 70, resource status data indicating detected overloads, failures, increases of CPU capability, and so on.

### [Functional structure of data transferring node]

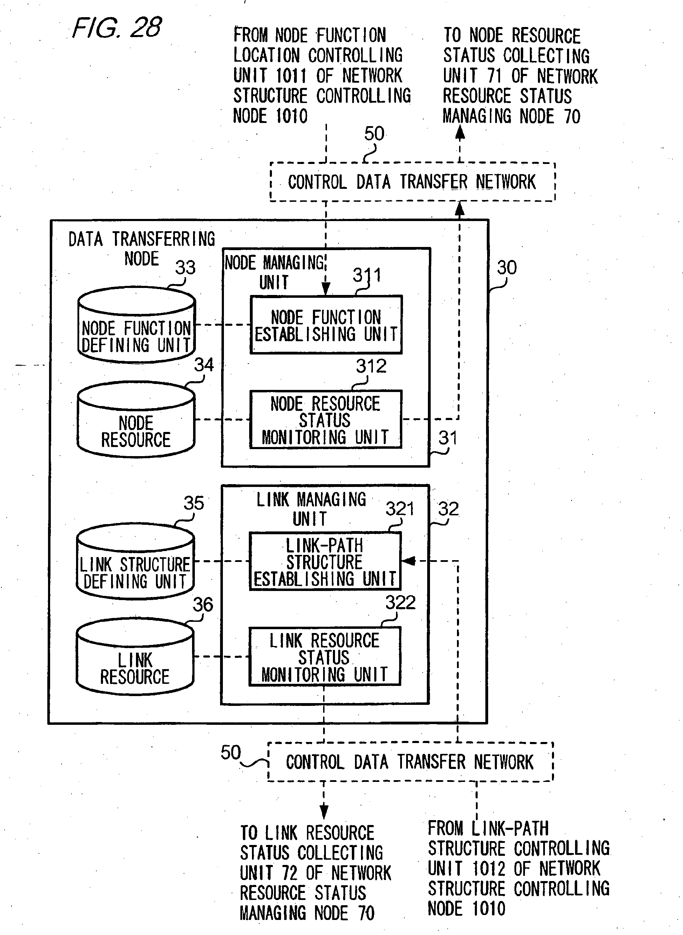

A functional structure of data transferring node 30 will be explained below with reference to Fig. 28.

Data transferring node 30 is a node for relaying data, such as data packets and voice data, which are received from user terminal 40.

Data transferring node 30 comprises node managing unit 31 and link managing unit 32. Node managing unit 31 comprises node function establishing unit 311 and node resource status monitoring unit 312.

Node function establishing unit 311 receives, from node function location controlling unit 1011 of network structure controlling node 1010, through control data transfer network 50, instruction data of node function/data transfer or instruction data of node function/data acceptance, for instructing a relocation of node functions. In accordance with these data, node function establishing unit 311 establishes its functions by obtaining node function definition data for realizing node functions from node function defining unit 33 or other nodes.

Node resource status monitoring unit 312 continuously monitors employment statuses and operation statuses of node resource 34. A quantity of processed data packets is one of the statuses which node resource status monitoring unit 312 monitors. Node resource status monitoring unit 312 successively transmits resource status data indicating monitored employment statuses and operation statuses of node resource 34 to node resource status collecting unit 71 of network resource status managing node 70.

At the same time, node resource status monitoring unit 312 detects occurrences of node events at node resource 34 such as overloads, failures and changes of data packet throughput caused by increases/decreases of resources, and transmits, to node resource status collecting unit 71 of network resource status managing node 70, resource status data indicating detected overloads, failures, changes of data packet throughput, and so on.

Link managing unit 32 comprises link-path structure establishing unit 321 and link resource status monitoring unit 322.

Link-path structure establishing unit 321 receives instruction data of link-path establishment/release to instruct a link-path restructuring from link-path structure controlling unit 1012 of network structure controlling node 1010 through control data transfer network 50, and restructures links and paths by referring to link structure definition data stored in link structure defining unit 35.

Link resource status monitoring unit 322 continuously monitors employment statuses and operation statuses of link resource 36. A usage ratio of links is one of the statuses which link resource status monitoring unit 322 monitors. Link resource status monitoring unit 322 successively transmits link status data indicating monitored employment statuses and operation statuses of link resource 36 to link resource status collecting unit 72 of network resource status managing node 70.

At the same time, link resource status monitoring unit 322 detects occurrences of link events at link resource 36 such as overloads, failures and changes of bandwidth for the link caused by increases/decreases of resources, and transmits, to link resource status collecting unit 72 of network resource status managing node 70, link status data indicating detected overloads, failures, changes of bandwidth for the link, and so on.

### [Function of adaptive control]

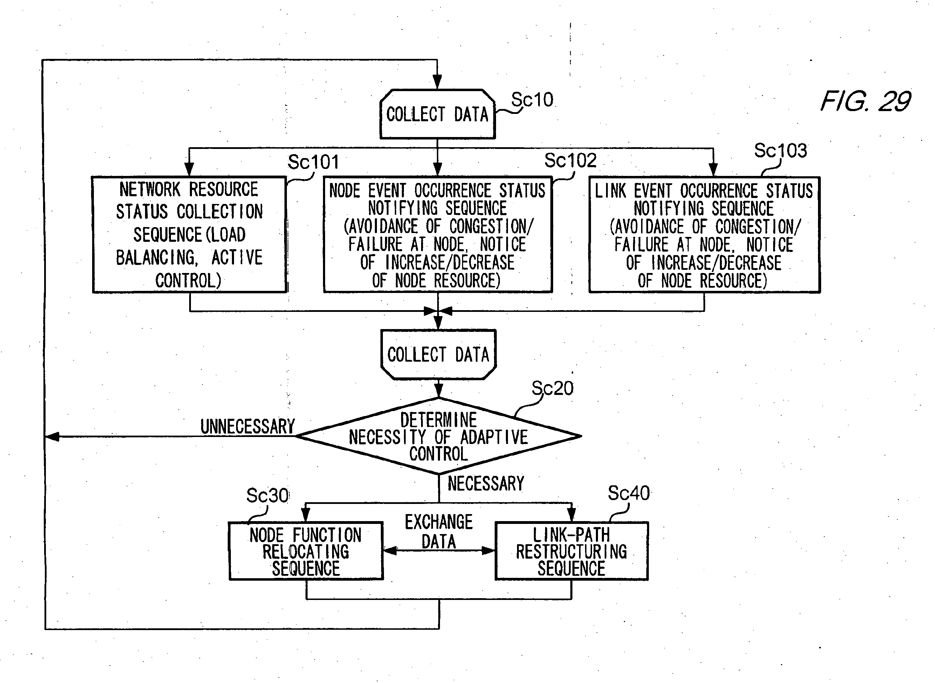

A function of adaptive control achieved by network resource status managing node 70 and network structure controlling nodes 1010 will be explained below with reference to Fig. 29.

As shown in Fig. 29, network resource status managing node 70 conducts an information collecting process (step Sc10). In the information collecting process, the following sequences are executed simultaneously.

A network resource status collection sequence (Sc101) for collecting data required for conducting load distributions and active controls among nodes.

A node event occurrence status notifying sequence (Sc102) for collecting data required for conducting congestion/failure avoidances at each node and resource increases/decreases of each node.

A link event occurrence status notifying sequence (Sc103) for collecting data required for conducting congestion/failure avoidances in each link and resource increases/decreases of each link.

In the sequences of Sc 101-Sc 103, network resource status managing node 70 analyzes and processes collected data to generate network resource status data indicating employment statuses and event occurrences of network resources in communication network system 1C, and stored generated network resource status data in network resource status storing unit 73.

Next, adaptive control determining unit 1013 of each of network structure controlling nodes 1010 analyzes data indicating operation statuses and employment statuses of each resource in the whole of communication network system 1C, which are stored in network resource status storing unit 73, and determines whether it is necessary to conduct an adaptive control in communication network system 1C, namely whether it is necessary to relocate node functions and restructure links and paths (step Sc20). The details of the determination process are the same as those in the first embodiment.

In a case that adaptive control determining unit 1013 determines that it is unnecessary to relocate node functions or restructure links and paths (step Sc20; unnecessary), adaptive control determining unit 1013 repeats the information collecting process (step Sc10). On the other hand, in a case that adaptive control determining unit 1013 determines that it is necessary to conduct a relocation and a restructuring (step S20; necessary), adaptive control determining unit 1013 executes the succeeding sequences, namely a node function relocating sequence (step Sc30) or a link-path restructuring sequence (step Sc40).

### [Network resource status collecting sequence]

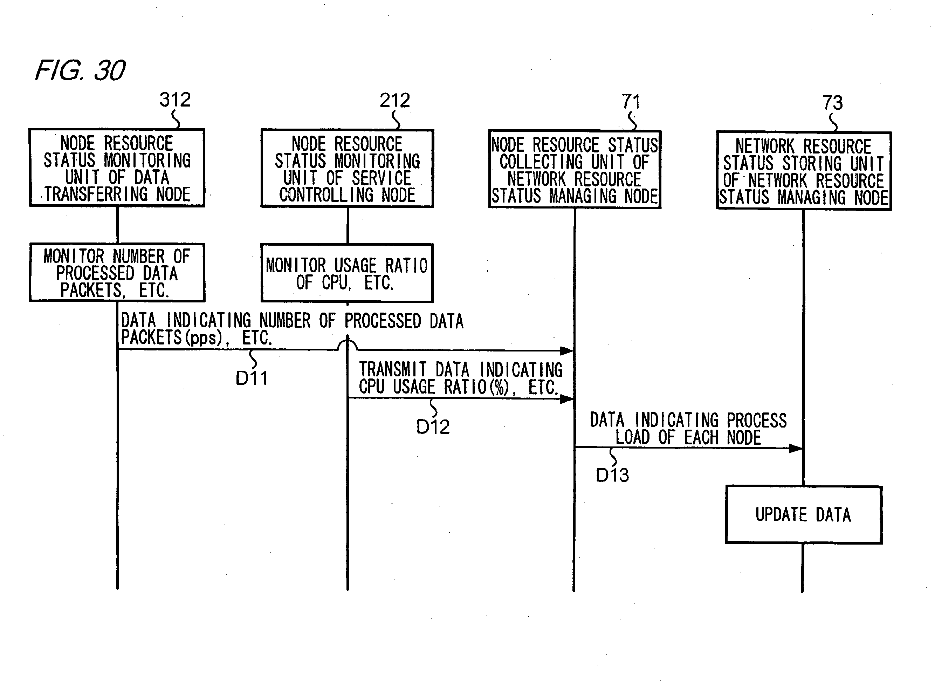

Fig. 30 is a diagram for explaining a series of processes for collecting data with regard to statuses of node resources, which are executed in the network resource status collecting sequence (Sc101) shown in the flowchart of Fig. 29.

Fig. 30 shows, as an example, a series of processes in which node resource status collecting unit 71 of network resource status managing node 70 receives data indicating quantities of processed data packets (a number of data packets to be processed in a second, which is referred to as PPS: Packets Per Second) from data transferring node 30, and also receives data indicating usage ratios (%) of CPU 201 from service controlling node 20, as indexes of employment status of node resources.

Node resource status monitoring unit 312 of data transferring node 30 monitors quantities of data packets processed at data transferring node 30, and successively transmits data D11 indicating monitored quantities of processed data packets to node resource status collecting unit 71 of network resource status managing node 70.

At the same time, node resource status monitoring unit 212 of service controlling node 20 monitors usage ratios of CPU 201, and successively transmits data D12 indicating monitored usage ratios of CPU to node resource status collecting unit 71 of network resource status managing node 70.

Node resource status collecting unit 71 of network resource status managing node 70 receives data D11 indicating quantities of processed data packets from data transferring node 30 and data D12 indicating usage ratios of CPU from service controlling node 20 as resource status data, analyzes relations between data contained in the received resource status data, adjusts parameters of the data, and calculates loads for processing data at each of the node resources. Then, node resource status collecting unit 71 transmits data D13 indicating the calculated loads of each node resource to network resource status storing unit 73. Network resource status storing unit 73 stores data D13 indicating the loads.

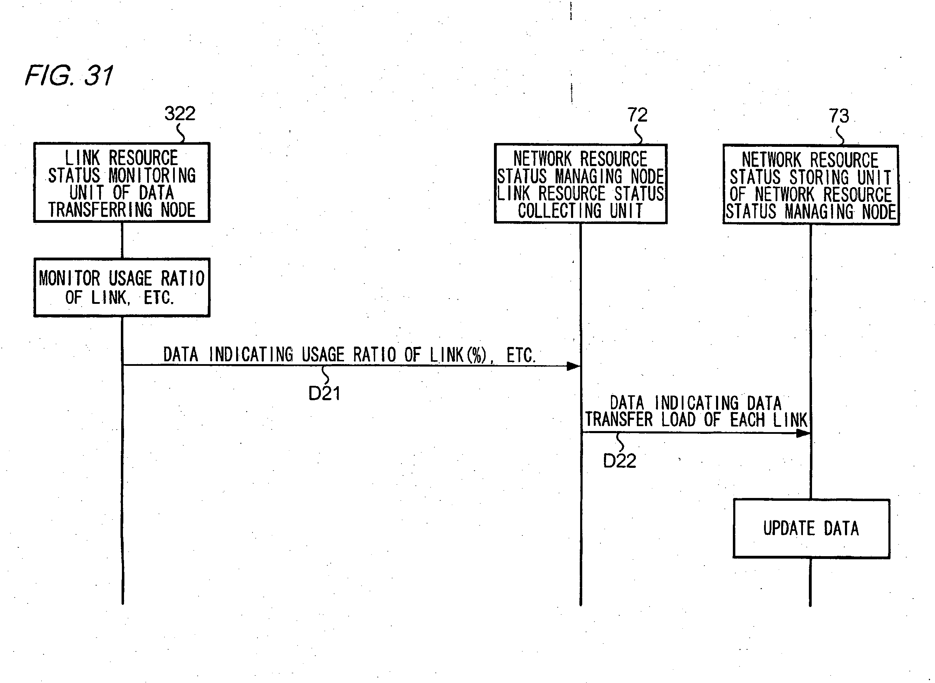

Fig. 31 is a diagram for explaining a series of processes for collecting data with regard to statuses of link resources, which are executed in the network resource status collecting sequence (Sc101) shown in the flowchart of Fig. 29.

Fig. 31 shows, as an example, a series of processes in which link resource status collecting unit 72 of network resource status managing node 70 receives data indicating usage ratios (%) of links from data transferring node 30, as indexes of employment status of link resources.

Link resource status monitoring unit 322 of data transferring node 30 monitors usage ratios of links established at data transferring node 30, and successively transmits data D21 indicating monitored usage ratios of links to link resource status collecting unit 72 of network resource status managing node 70.

Link resource status collecting unit 72 of network resource status managing node 70 receives data D21 indicating usage ratios of links (which may be obtained at both of data transferring nodes 30 located at each end of a link) from data transferring node 30, analyzes relations between the received data, adjusts parameters of the data, and calculates loads for transferring data through each of the link resources. Then, link resource status collecting unit 72 transmits data D22 indicating the calculated loads of each link resource to network resource status storing unit 73. Network resource status storing unit 73 stores data D22 indicating the loads.

### [Node event occurrence status notifying sequence]

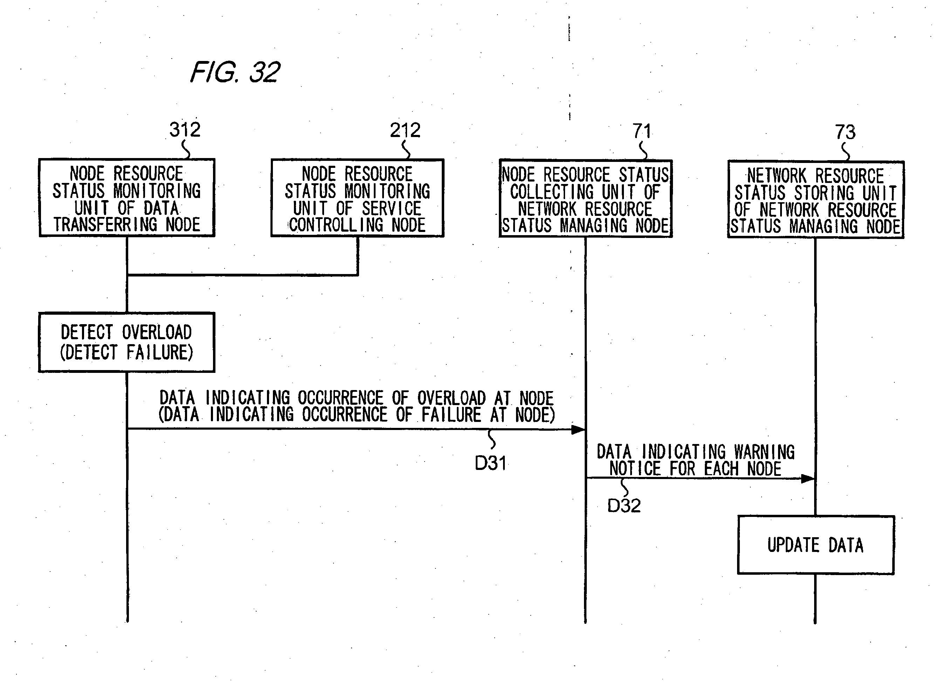

Fig. 32 shows a series of processes in the node event occurrence status notifying sequence (Sc102) shown in the flowchart of Fig. 29, which are executed when a node event of overload or a node event of failure occurs.

Node resource status monitoring unit 212 of service controlling node 20 and node resource status monitoring unit 312 of data transferring node 30 transmit data D31 indicating an occurrence of an overload or a failure to node resource status collecting unit 71 of network resource status managing node 70 when they detect an overload or a failure. Node resource status collecting unit 71 receives data D31 (which may be obtained at both of data transferring nodes 30 located at each side of a communication) from data transferring node 30, analyzes relations between the received data, and specifies a location where the overload or the failure occurred. Then, node resource status collecting unit 71 transmits data D32 indicating warning notices for each node to network resource status storing unit 73. Network resource status storing unit 73 stores data D32 containing the warning notices.

Though a sequence for canceling the warning notices is also necessary in an actual implementation, for simplicity the sequence is omitted in Fig. 32.

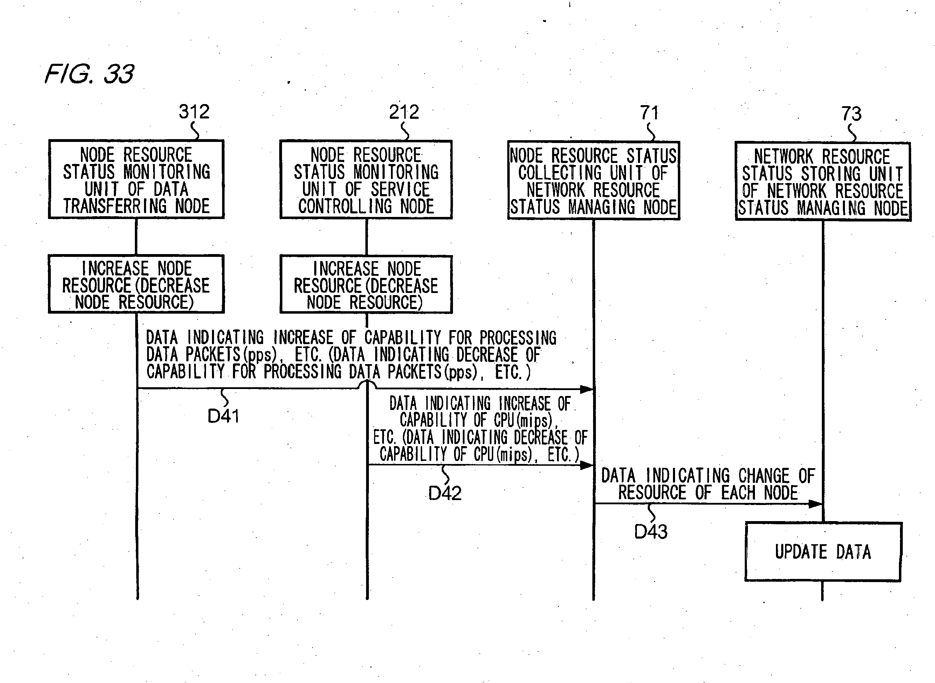

Fig. 33 shows another series of processes in the node event occurrence status notifying sequence (Sc102) shown in the flowchart of Fig. 29, which are executed when a node event of increase/decrease of node resource occurs.

Fig. 33 shows, as an example, a series of processes in which node resource status collecting unit 71 of network resource status managing node 70 receives data indicating capabilities of processing data packets (PPS: Packets Per Second) from data transferring node 30, and also receives data indicating capabilities of processing data of CPU (MIPS: Millions of Instructions Per Second) from service controlling node 20, which reflect increases or decreases of node resources at each node, as indexes of changes of node resources caused by the increases or decreases.

Node resource status monitoring unit 312 of data transferring node 30 monitors occurrences of node events at data transferring node 30.

When node resource status monitoring unit 312 detects an increase or a decrease of a node resource at data transferring node 30, node resource status monitoring unit 312 calculates capabilities for processing data packets after the increase/decrease, and transmits data D41 indicating the calculated capabilities for processing data packets reflecting the increase/decrease, to node resource status collecting unit 71 of network resource status managing node 70.

Similarly, node resource status monitoring unit 212 of service controlling node 20 monitors occurrences of node events at service controlling node 20.

When node resource status monitoring unit 212 detects an increase or a decrease of a node resource at service controlling node 20, node resource status monitoring unit 212 calculates capabilities for processing data of CPUs after the increase/decrease, and transmits data D42 indicating the calculated capabilities for processing data of CPUs reflecting the increase/decrease, to node resource status collecting unit 71 of network resource status managing node 70.

Node resource status collecting unit 71 of network resource status managing node 70 receives data D41 indicating capabilities for processing data packets from data transferring node 30 and data D42 indicating capabilities for processing data of CPUs from service controlling node 20 which reflect an increase/decrease of node resources, analyzes relations between the received data, adjusts parameters of the data, and specifies what changes of node resources have been made at each node. Then, node resource status collecting unit 71 transmits data D43 indicating the specified changes of resource statuses at each node to network resource status storing unit 73. Network resource status storing unit 73 stores data D43.

### [Link event occurrence status notifying sequence]

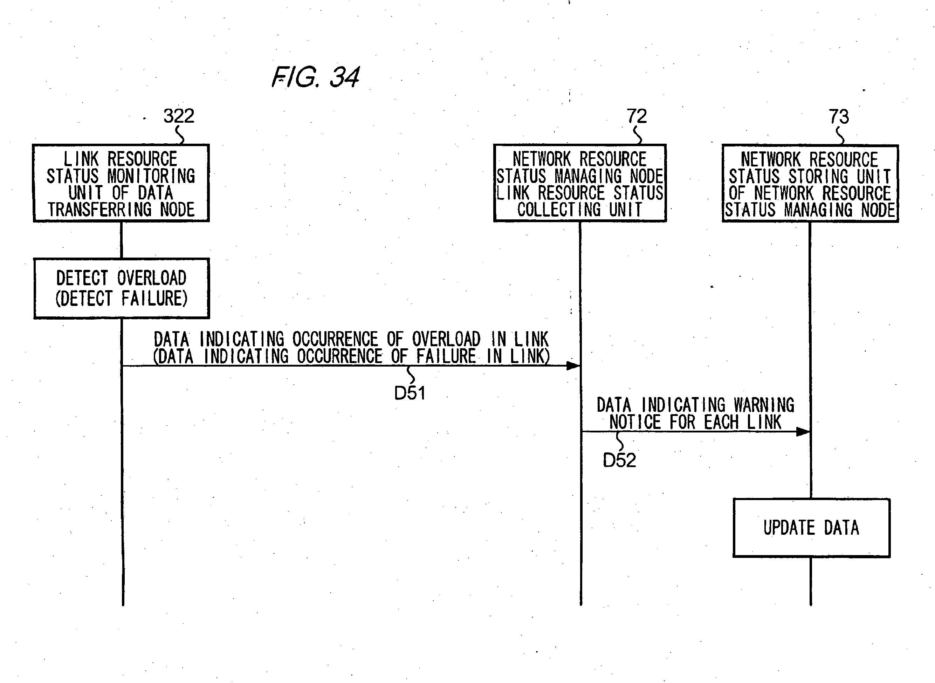

Fig. 34 shows a series of processes in the link event occurrence status notifying sequence (Sc103) shown in the flowchart of Fig. 29, which are executed when a link event of overload or a link event of failure occurs.

Link resource status monitoring unit 322 of data transferring node 30 transmits data D51 indicating an occurrence of an overload or a failure to link resource status collecting unit 72 of network resource status managing node 70 when link resource status monitoring unit 322 detects an overload or a failure in a link. Link resource status collecting unit 72 receives data D51 indicating an occurrence of an overload or a failure (which may be obtained at both of data transferring nodes 30 located at each side of a link) from data transferring node 30, specifies a link in which the overload or the failure occurred and a level of seriousness of the overload or the transaction by analyzing the received data, and generate a warning notice containing the specified information. Then, link resource status collecting unit 72 transmits data D52 indicating warning notices for each link to network resource status storing unit 73. Network resource status storing unit 73 stores data D52 indicating the warning notices for each link.

Though a sequence for canceling the warning notices is also necessary in an actual implementation, for simplicity the sequence is omitted in Fig. 34.

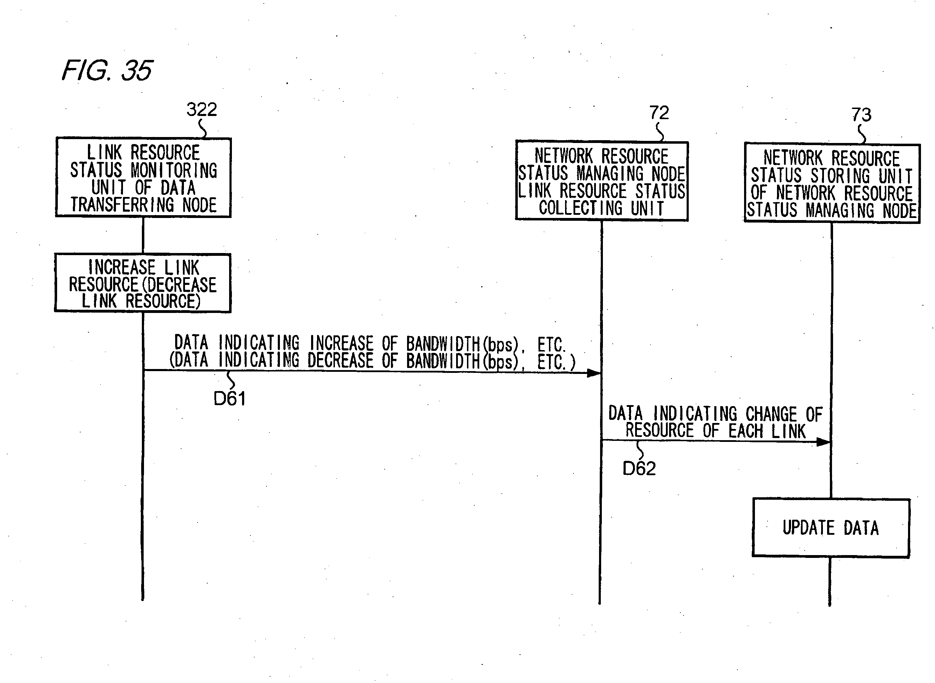

Fig. 35 shows another series of processes in the link event occurrence status notifying sequence (Sc103) shown in the flowchart of Fig. 29, which are executed when a node event of increase/decrease of link resource occurs. In Fig. 35, a bandwidth for a link (bps; bit per second) is used as an example index of a change of link resource caused by an increase or a decrease of a link resource.

When link resource status monitoring unit 322 of data transferring node 30 detects an increase or a decrease of a link resource, link resource status monitoring unit 322 calculates a bandwidth for the link after the increase/decrease. Then, link resource status monitoring unit 322 transmits data D61 indicating the calculated bandwidth for the link reflecting the increase/decrease, to link resource status collecting unit 72 of network resource status managing node 70.

Link resource status collecting unit 72 receives data D61, and specifies a level of change of link resource analyzing relations between the received data. Then, link resource status collecting unit 72 transmits data D62 indicating the specified changes of link resource for each link to network resource status storing unit 73. Network resource status storing unit 73 stores data D62.

### [Node function relocating sequence]

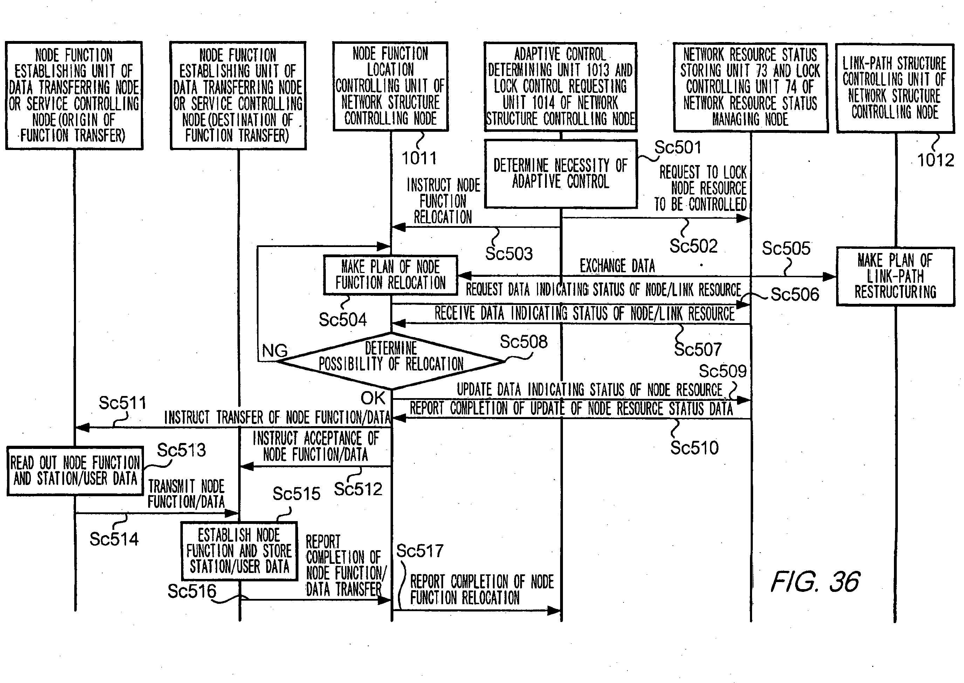

The node function relocating sequence (Sc30) shown in the flowchart of Fig. 29 will be explained below with reference to Fig. 36.

As shown in Fig. 36, adaptive control determining unit 1013 of network structure controlling node 1010 executes a process for determining necessity of an adaptive control (step Sc501). When adaptive control determining unit 1013 determines that an adaptive control is necessary, lock control requesting unit 1014 transmits a request for a lock control for locking network resources employed for the adaptive control and events monitored in the adaptive control, so as to avoid the network resources being controlled and the events being monitored by any other network structure controlling nodes 1010 redundantly, to lock controlling unit 74 of network resource status managing node 70 (Step Sc502). Then, adaptive control determining unit 1013 transmits, to node function location controlling unit 1011 of network structure controlling node 1010, instruction data to instruct a node function relocation (Step Sc503).

Node function location controlling unit 1011 receives the instruction data to instruct a node function relocation, and makes a plan for relocating node functions (step Sc504). Then, node function location controlling unit 1011 exchanges data with link-path structure controlling unit 1012 by transmitting data indicating an arrangement of node functions which are newly planned to link-path structure controlling unit 1012, and receiving data of link-path restructuring, which has not been finalized, from link-path structure controlling unit 1012 (step Sc505). The details of the data exchange are the same as those in the first embodiment. Through the data exchange explained above, node function location controlling unit 1011 can make an optimum plan of relocation of node functions in cooperation with link-path structure controlling unit 1012.

Node function location controlling unit 1011 transmits a request for data indicating statuses of network resources which are stored in network resource status storing unit 73 (step Sc506). In response to the request, node function location controlling unit 1011 receives data indicating operation statuses and employment statuses of each resource in the whole of communication network system 1C from network resource status storing unit 73 (step Sc507). Then, node function location controlling unit 1011 determines whether it is possible to transfer node function definition data from some nodes to some other nodes following the plan of relocation of node functions taking into account the resources which are available and not locked by any other network structure controlling nodes 1010 (step Sc508).

When node function location controlling unit 1011 determines that it is impossible to implement the plan (step Sc508; NG), node function location controlling unit 1011 again makes a plan of relocation of node functions (step Sc504). Conversely, when node function location controlling unit 1011 determines that it is possible to implement the plan (step Sc508; OK), node function location controlling unit 1011 updates data stored in network resource status storing unit 73 and unlocks resources in accordance with the plan of relocation of node functions (step Sc509). Node function location controlling unit 1011 receives data reporting a completion of update from network resource status storing unit 73 (step Sc510).

Next, node function location controlling unit 1011 transfers node function definition data from some nodes to some other nodes following the plan of relocation of node functions.

More concretely, node function location controlling unit 1011 transmits, to nodes from which node functions should be transferred, instruction data of node function/data transfer for instructing transfer of their node function definition data (step Sc511), and transmits, to nodes to which node functions should be transferred, instruction data of node function/data acceptance for instructing to accept certain node function definition data (step Sc512).

Each of the nodes from which node functions should be transferred, receives instruction data of node function/data transfer, and reads out its node function definition data (software for realizing node functions and data to be processed such as site-specific data, and user data) (step Sc513). Then, the node transmits the data, which are read out, to each of the nodes, to which node functions should be transferred (step Sc514).

Each of the nodes to which node functions should be transferred, receives node function definition data from other nodes, stores the node function definition data in node function definition unit, and sets parameters for enabling node functions indicated by the node function definition data (step Sc515). As a result, node functions and data to be processed by the node functions are changed at the node. Each of the nodes which have completed the process of changing their functions, transmits, to node function location controlling unit 1011 of network structure controlling node 1010, data for reporting a completion of transfer of node functions and necessary data (step Sc516).

Node function location controlling unit 1011 transmits, to adaptive control determining unit 1013, data for reporting a completion of relocation of node functions (step Sc517).

When a problem such as a failure in a link occurs, but there is no need to relocate node functions since another path can be established between the same nodes, the sequence explained above may be skipped.

### [Link-path restructuring sequence]

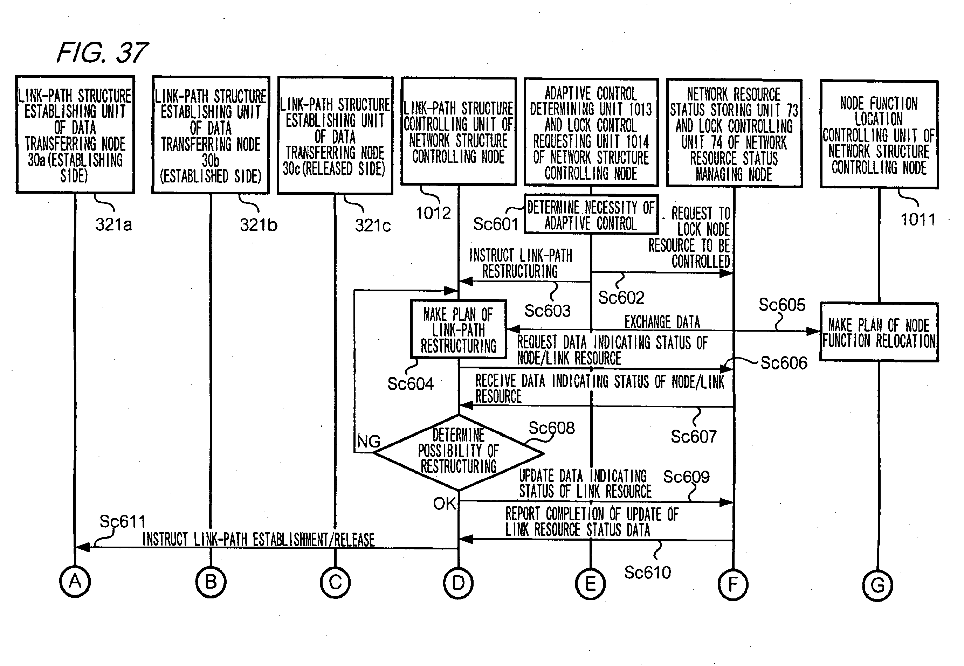

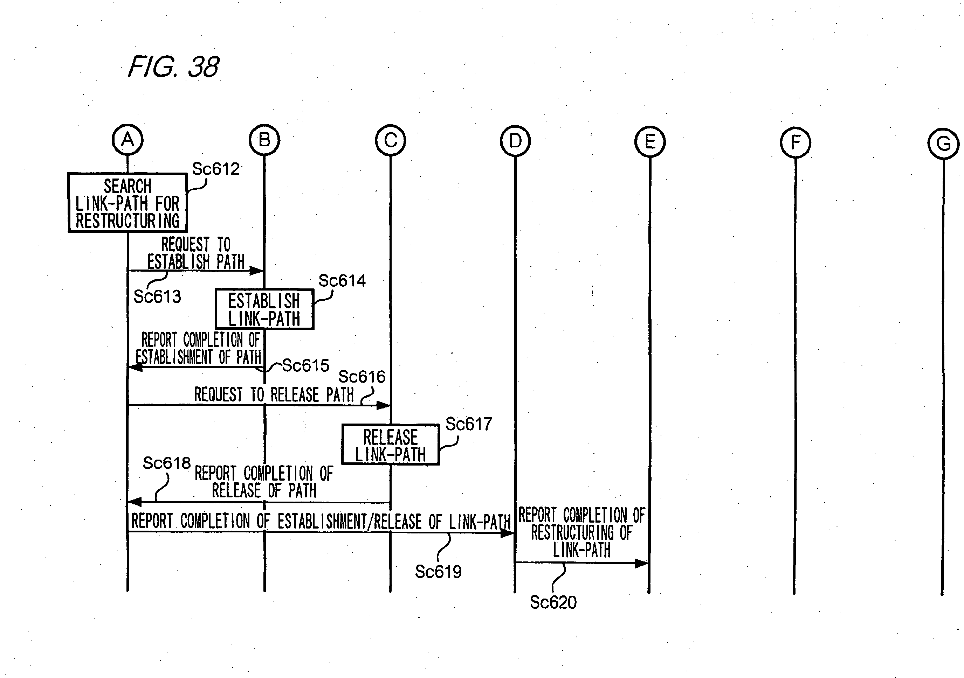

The link-path restructuring sequence (Sc40) shown in the flowchart of Fig. 29 will be explained below with reference to Fig. 37 and Fig. 38.

As shown in Fig. 37, adaptive control determining unit 1013 of network structure controlling node 1010 executes a process for determining necessity of an adaptive control (step Sc601). When adaptive control determining unit 1013 determines that an adaptive control is necessary, lock control requesting unit 1014 transmits a request for a lock control for locking network resources employed for the adaptive control and events monitored in the adaptive control, so as to avoid the network resources being controlled and the events being monitored by any other network structure controlling nodes 1010 redundantly, to lock controlling unit 74 of network resource status managing node 70 (Step Sc602). Then, adaptive control determining unit 1013 transmits, to link-path structure controlling unit 1012 of network structure controlling node 1010, instruction data to instruct a link-path restructuring (Step Sc603).

Link-path structure controlling unit 1012 makes a plan for restructuring links and paths (step Sc604). Then, link-path structure controlling unit 1012 exchanges data with node function location controlling unit 1011, namely transmits data indicating an arrangement of links and paths which are newly planned to node function location controlling unit 1011 and receives data indicating a draft plan of relocation of node functions from node function location controlling unit 1011 (step Sc605). The details of the data exchange are the same as those in the first embodiment. Through the data exchange, link-path structure controlling unit 1012 can make an optimum plan of restructuring of links and paths in cooperation with node function location controlling unit 1011.

Link-path structure controlling unit 1012 transmits a request for data indicating statuses of network resources which are stored in network resource status storing unit 73 (step Sc606). In response to the request, link-path structure controlling unit 1012 receives data indicating operation statuses and employment statuses of each resource in the whole of communication network system 1C from network resource status storing unit 73 (step Sc607). Then, link-path structure controlling unit 1012 determines whether it is possible to establishes links and paths following the plan of restructuring of links and paths taking into account resources which are available and unlocked by any other network structure controlling nodes 1010 (step Sc608).

When link-path structure controlling unit 1012 determines that it is impossible to implement the plan (step Sc608; NG), link-path structure controlling unit 1012 again makes a plan of restructuring of links and paths (step Sc604). On the other hand, when link-path structure controlling unit 1012 determines that it is possible to implement the plan (step Sc608; OK), link-path structure controlling unit 1012 updates data stored in network resource status storing unit 73 and unlocks resources in accordance with the plan of restructuring of links and paths (step Sc608). Link-path structure controlling unit 1012 receives data reporting a completion of update from network resource status storing unit 73 (step Sc610).

Next, link-path structure controlling unit 1012 establishes some links and paths and releases other links and paths following the plan of restructuring of links and paths.

More concretely, link-path structure controlling unit 1012 transmits, to data transferring node 30a which starts procedures for establishing or releasing links and paths, instruction data of link-path establishment/release (step Sc611). Link-path structure establishing unit 321a of data transferring node 30a searches data transferring node 30b, which is indicated as the node located at the opposite side of new links and paths, or data transferring node 30c, which is indicated as the node located at the opposite side of existing links and paths to be released (step Sc612).

Link-path structure establishing unit 321a transmits, to data transferring node 30b, instruction data for instructing to establish links and paths (step Sc613). Link-path structure establishing unit 321b of data transferring node 30b receives the instruction data, and executes necessary procedures for establishing links and paths with data transferring node 30a employing link resources of data transferring node 30b (step Sc614). After link-path structure establishing unit 321b completes the procedures for establishing links and paths, link-path structure establishing unit 321b transmits, to data transferring node 30a, data for reporting a completion of establishment of links and paths (step Sc615).

Link-path structure establishing unit 321 a of data transferring node 30a transmits, to data transferring node 30c, instruction data for instructing to release links and paths with data transferring node 30a (step Sc616). Link-path structure establishing unit 321c of data transferring node 30c receives the instruction data, and releases existing links and paths to release link resources which are employed for the links and paths (step Sc617), and transmits, to data transferring node 30a, data for reporting a completion of release of links and paths (step Sc618).

Link-path structure establishing unit 321a of data transferring node 30a transmits, to link-path structure controlling unit 1012 of network structure controlling node 1010, data for reporting a completion of establishment and release of links and paths (step Sc619). Link-path structure controlling unit 1012 transmits, to adaptive control determining unit 1013, data for reporting a completion of restructuring of links and paths (step Sc620).

### [Example of operation]

An example of operation of the present embodiment will be explained below.

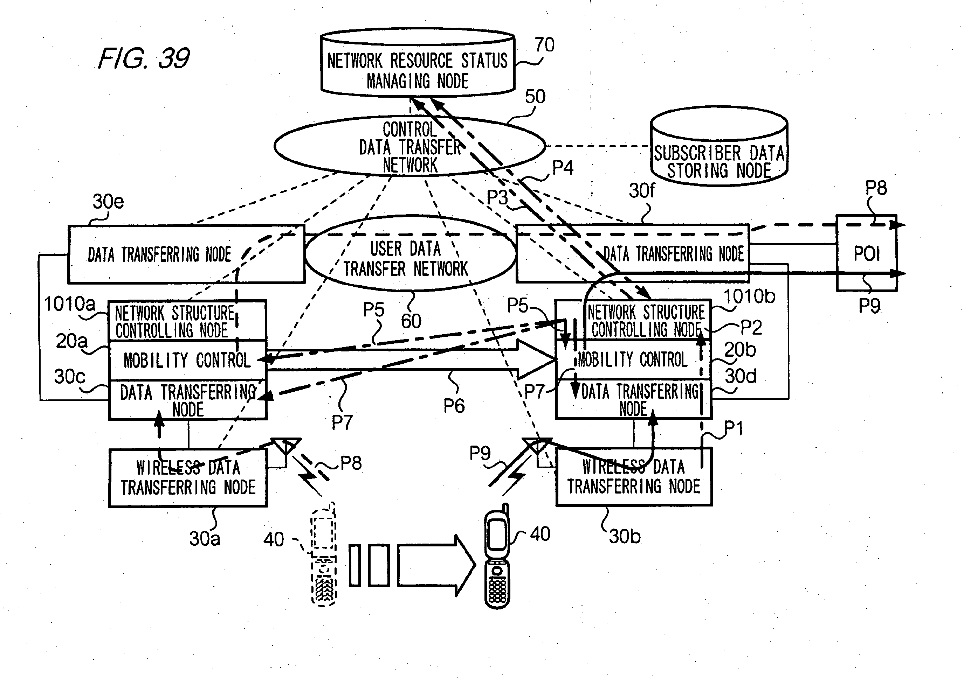

Fig. 39 is a diagram for explaining a series of operations where a mobility control function, which enables user terminal 40 such as a cellular phone to communicate with another terminal while user terminal 40 is moving from one location to another location, is transferred from one of service controlling nodes 20 to another of service controlling nodes 20, in accordance with locations of a user who is in possession of user terminal 40.

In the following explanation, as an example, it is supposed that user terminal 40 moves from an area coved by data transferring node 30a to an area coved by data transferring node 30b.

As shown in Fig. 39, when data transferring node 30b, which is the nearest to user terminal 40, recognizes a move of user terminal 40, data transferring node 30b transmits a request for an adaptive control to network structure controlling node 1010b (P1).

Adaptive control determining unit 1013 of network structure controlling node 1010b determines whether it is necessary to conduct an adaptive control as explained above (P2). In this case, adaptive control determining unit 1013 determines that it is necessary to conduct a node function relocation. Lock control requesting unit 1014 of network structure controlling node 1010b transmits, to network resource status managing node 70, a request for locking network resources which are employed when a relocation or a restructuring is implemented (P3). In accordance with the request, lock controlling unit 74 of network resource status managing node 70 locks the network resources and avoids the network resources being controlled by any other network structure controlling nodes 1010 redundantly. Then, adaptive control determining unit 1013 of network structure controlling node 1010b transmits instruction data of node function relocation to node function location controlling unit 1011, and instruction data of link-path restructuring to link-path structure controlling unit 1012.

Node function location controlling unit 1011 and link-path structure controlling unit 1012 of network structure controlling node 1010b analyze current statuses of network resources referring to data indicating employment statuses of network resources, which are stored in network resource status storing unit 73, data indicating draft plans of node function relocations made by node function location controlling unit 1011, and data indicating draft plans of link-path restructurings made by link-path structure controlling unit 1012 (P4), and make optimum plans of relocation and restructuring.

More concretely, node function location controlling unit 1011 of network structure controlling node 1010b determines that node function definition data managed by service controlling node 20a, such as data indicating transitions of statuses of user terminal 40 which are required for executing a mobility control function and a continuous mobility control, should be transferred to service controlling node 20b. At the same time, link-path structure controlling unit 1012 of network structure controlling node 1010b determines that a path for wireless communications of user terminal 40 through data transferring nodes 30a, 30c, 30e and 30f, should be replaced with a path through data transferring nodes 30b, 30d and 30f. Then, node function location controlling unit 1011 of network structure controlling node 1010b transmits instruction data of node function/data transfer to service controlling node 20a and instruction data of node function/data acceptance to service controlling node 20b (P5). As a result, node function definition data are transferred from service controlling node 20a to service controlling node 20b through user data transfer network 60 (P6).

Then, link-path structure controlling unit 1012 of network structure controlling node 1010b transmits instruction data of link-path establishment/release to data transferring node 30c and data transferring node 30d (P7). As a result, data transferring node 30c and data transferring node 30d release the path between user terminal 40 and the partner terminal of user terminal 40 through data transferring nodes 30a, 30c, 30e and 30f (P8), and establish the path between user terminal 40 and the partner terminal through data transferring nodes 30b, 30d and 30f (P9) by changing employed link resources. Through the processes explained above, a relocation of mobility control function is achieved.

In a case that service controlling node 20b is already executing a mobility control function, it is unnecessary to transfer node function definition data. In a usual mobile communication network, some sorts of user data (numbers for identifying users, information on services which each user uses, information on users locations, and so on) may be centralized and managed by a certain node. Therefore, only user data regarding transition of statuses required for a seamless mobility control for user terminal 40, such as data indicating voice communication statuses and data for billing of user terminal 40, may be transferred. When communication network system 1C comprises both of user data transfer network 60 and control data transfer network 50, as shown in Fig. 18, either one of user data transfer network 60 and control data transfer network 50, or both of user data transfer network 60 and control data transfer network 50 may be used for establishing a communication channel for transferring node function definition data.

The method for transferring a node function as explained above can be applied to transfers of other kinds of functions such as a firewall function for protecting communication terminals from intrusions of unauthorized data and a buffering function for buffering data for mobile communications.

### D. The Fourth Embodiment

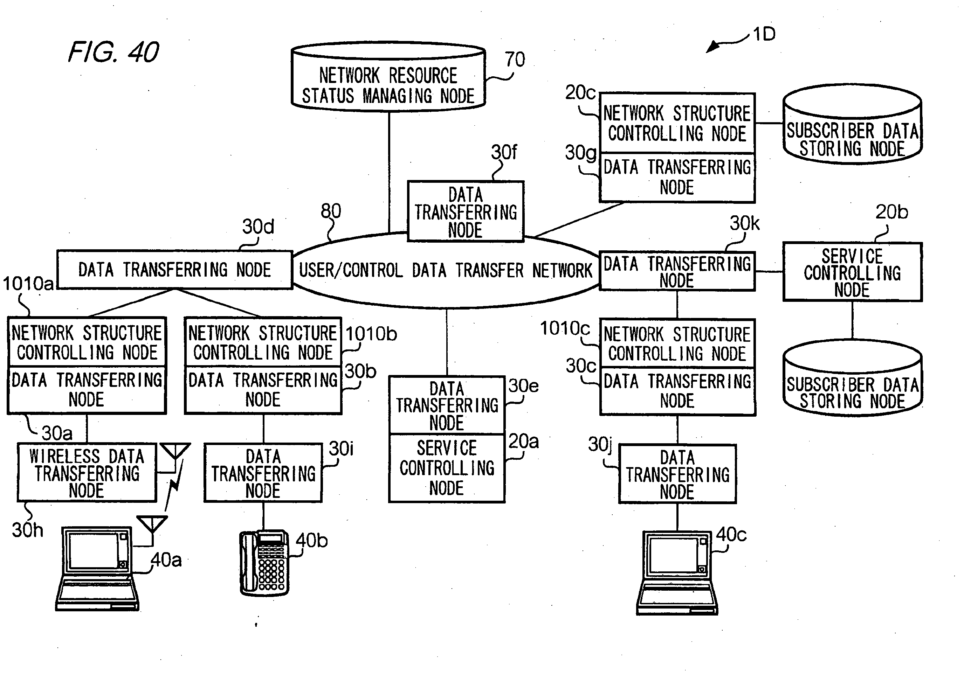

Fig. 40 is a block diagram showing a structure of communication network system 1D according to the fourth embodiment of the present invention. Communication network system 1D may be, for example, the Internet. All data are communicated through user/control data transfer network 80 in the fourth embodiment, though control data are communicated through control data transfer network 50 and other data are communicated through user data transfer network 60 in the third embodiment.

Moreover, data from user terminal 40 may be transmitted without passing through service controlling node 20 in the fourth embodiment, though all data from user terminal 40 are always transmitted through service controlling node 20, such as a switching center, in the third embodiment.

The structural features of the fourth embodiment other than the points explained above are the same as those of the third embodiment, and explanations of them are not repeated here.

An operation in the fourth embodiment will be explained below.

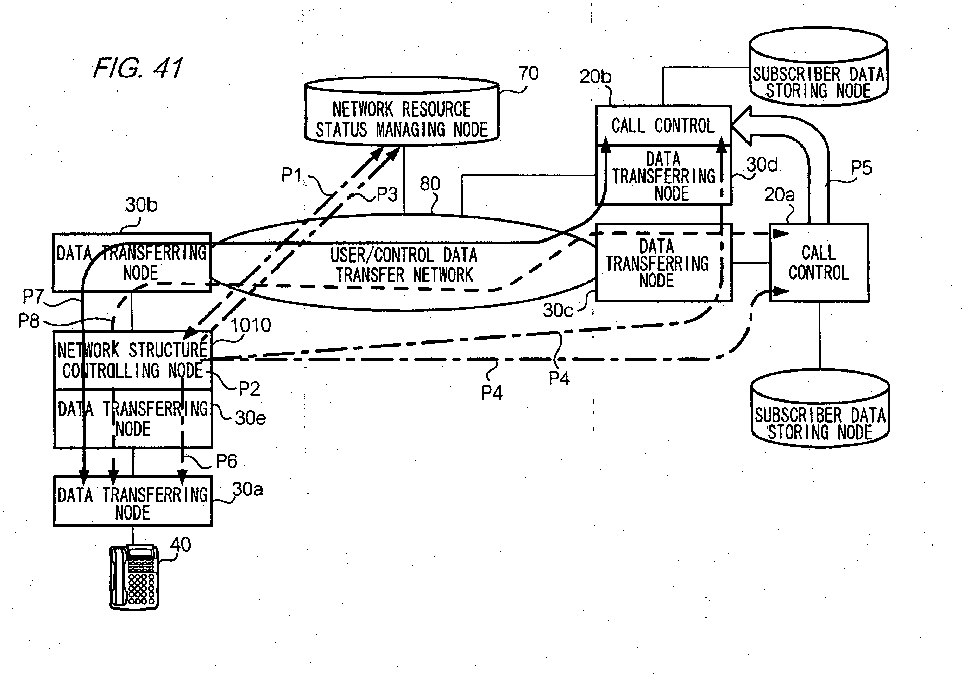

Fig. 41 is a diagram for explaining an operation for transferring a call control function so as to avoid congestion occurring at a node.

In the following explanation, as an example, it is supposed that congestion caused by a lack of network resources for transactions of a call control executed at service controlling node 20a is detected by network structure controlling node 1010, and it is determined whether an adaptive control is necessary.

Adaptive control determining unit 1013 of network structure controlling node 1010 monitors data indicating statuses of network resources, which are stored in network resource status storing unit 73 (P1), and determines that network resources employed for a call control at service controlling node 20a are in a congested state. Then, adaptive control determining unit 1013 executes a process for determining necessity of an adaptive control and determines that it is necessary to conduct a relocation of node functions and a restructuring of links and paths (P2). Lock control requesting unit 1014 of network structure controlling node 1010 transmits, to network resource status managing node 70, a request for locking network resources which are employed when a relocation or a restructuring is implemented (P3). In accordance with the request, lock controlling unit 74 of network resource status managing node 70 locks the network resources and avoids the network resources being controlled by any other network structure controlling nodes 1010 redundantly. Then, adaptive control determining unit 1013 transmits instruction data of node function relocation to node function location controlling unit 1011, and instruction data of link-path restructuring to link-path structure controlling unit 1012.

Node function location controlling unit 1011 and link-path structure controlling unit 1012 analyze current statuses of network resources referring to data indicating statuses of network resources, which are stored in network resource status storing unit 73, data indicating draft plans of node function relocations made by node function location controlling unit 1011, and data indicating draft plans of link-path restructurings made by link-path structure controlling unit 1012, and make optimum plans of relocation and restructuring.

More concretely, node function location controlling unit 1011 checks that node resources at service controlling node 20b are available and not locked by any other network structure controlling nodes 1010, and determines that node function definition data managed by service controlling node 20a (software for realizing node functions, station data and user data) should be transferred to service controlling node 20b. At the same time, link-path structure controlling unit 1012 determines that a path between user terminal 40 and service controlling node 20a through data transferring nodes 30a, 30e, 30b and 30c should be replaced with a path through data transferring nodes 30a, 30e, 30b and 30d. Then, node function location controlling unit 1011 transmits instruction data of node function/data transfer to service controlling node 20a and instruction data of node function/data acceptance to service controlling node 20b (P4). As a result, node function definition data are transferred from service controlling node 20a to service controlling node 20b through user/control data transfer network 80 (P5).

Then, link-path structure controlling unit 1012 of network structure controlling node 1010 transmits instruction data of link-path establishment/release to data transferring node 30a, which is the nearest to user terminal 40 (P6). In accordance with the instruction data, data transferring node 30a establishes the path through data transferring nodes 30a, 30e, 30b and 30d (P7) and releases the path between data transferring node 30a and data transferring node 30c (P8).

Through the processes explained above, a relocation of call control function is achieved, and the congestion at the node is solved.

When communication network system 1D has a structure as shown in Fig. 41, user data should be stored in service controlling node 20 which provides its service for user terminals 40. Therefore, user data such as numbers for identifying users and information on services which each user uses should be transferred as well as user data regarding transitions of statuses.

The method for controlling network structure as explained above can be applied to other kinds of controls such as a control for avoiding failures occurring at nodes and a control for load distribution among nodes.

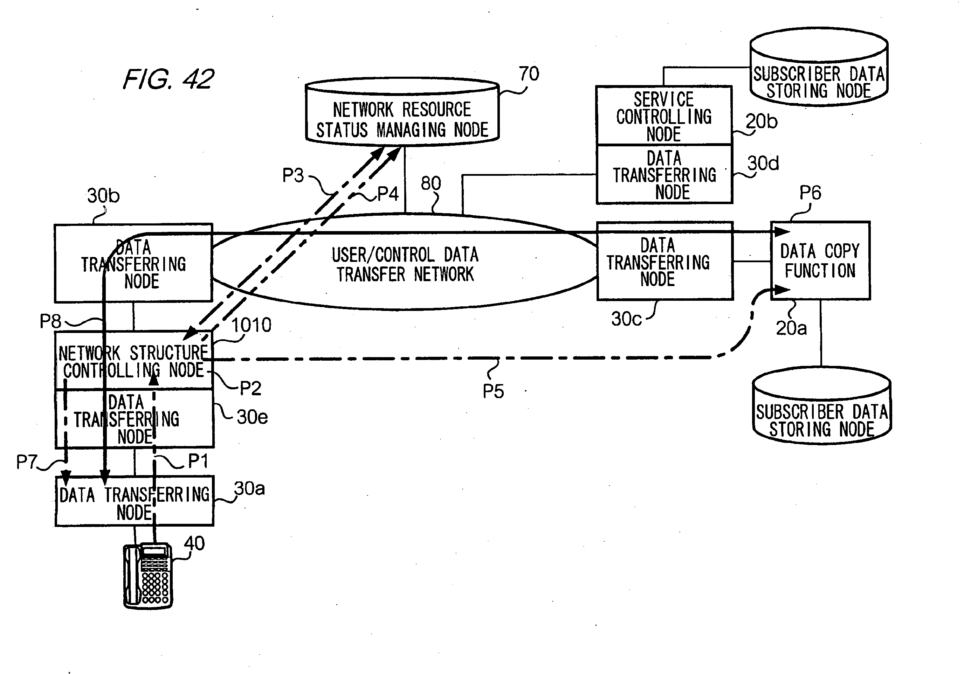

Fig. 42 is a diagram for explaining a series of operations executed in the fourth embodiment when a data copy function is realized at service controlling node 20a in response to data for requesting an adaptive control from user terminal 40. This type of adaptive control is required, for example, for a multicast service with a high efficiency which is realized by an active network technology. Namely, when user terminal 40 of a new user connects with service controlling node 20 which belongs to a multicast tree, the adaptive control is useful.

User terminal 40 transmits data for requesting an adaptive control in response to its user's operation (P1). When adaptive control determining unit 1013 of network structure controlling node 1010 receives the data for requesting an adaptive control, adaptive control determining unit 1013 executes a process for determining necessity of an adaptive control and determines that it is necessary to conduct a relocation of node functions and a restructuring of links and paths (P2). Lock control requesting unit 1014 of network structure controlling node 1010 transmits, to network resource status managing node 70, a request for locking network resources which are employed when a relocation or a restructuring is implemented (P3). In accordance with the request, lock controlling unit 74 of network resource status managing node 70 locks the network resources and avoids the network resources being controlled by any other network structure controlling nodes 1010 redundantly. Then, adaptive control determining unit 1013 transmits instruction data of node function relocation to node function location controlling unit 1011, and instruction data of link-path restructuring to link-path structure controlling unit 1012.

Node function location controlling unit 1011 and link-path structure controlling unit 1012 analyze current statuses of network resources referring to data indicating statuses of network resources, which are stored in network resource status storing unit 73, data indicating draft plans of node function relocations made by node function location controlling unit 1011, and data indicating draft plans of link-path restructurings made by link-path structure controlling unit 1012 (P4), and make optimum plans of relocation and restructuring.

More concretely, node function location controlling unit 1011 checks that service controlling node 20a belongs to a multicast tree and has available resources for processing data. Then, node function location controlling unit 1011 determines to transfer a data copy function to service controlling node 20a. At the same time, link-path structure controlling unit 1012 determines to establish a path between user terminal 40 and service controlling node 20a through data transferring nodes 30a, 30e, 30b and 30c. Node function location controlling unit 1011 transmits instruction data of node function/data acceptance to service controlling node 20a (P5). Service controlling node 20a prepares node function definition data for defining a data copy function to provide a multicast service for user terminal 40 (P6).

Link-path structure controlling unit 1012 transmits instruction data of link-path establishment/release to data transferring node 30a (P7). In response to the instruction data, data transferring node 30a establishes a path between user terminal 40 and service controlling node 20a through data transferring nodes 30e, 30b and 30c (P8).

According to the operations explained above, when, for example, a data transfer function of data transferring node 30 or a service control function of service controlling node 20 halts because of an overload or a failure in communication network system 1C or 1D, the function can be relocated to an other node which has enough data processing capacity. As a result, load can be distributed among nodes, and congestion can be avoided. Moreover, since a statistical multiplexing of network resources can be achieved in the whole of communication network system 1C or 1D, required node resources and equipment cost may be reduced. Since load can be distributed among nodes in the whole of communication network system 1C or 1D, some sorts of restrictions, such as a maximum transaction number, may be mitigated. Moreover, since information on node events such as increases and decreases of node resources and link resources are collected, stored and managed automatically by network resource status managing node 70, the information can be utilized for further effective employment of network resources.

The third and fourth embodiments provide methods for managing and controlling resources where network resources are controlled in an adaptive way in communication network system 1C or 1D, which can be applied to any kinds of network services and applications in a common way. Namely, according to the third and fourth embodiments of the present invention, an adaptive network, which can achieve an optimum employment of network resources, is also realized by controlling both node functions and link-path structures in an adaptive and cooperative way.

### [Modifications]

Some examples of modifications of the third and fourth embodiments will be explained below.
(1) In the embodiments explained above, service controlling nodes 20 and data transferring nodes 30 are programmable nodes which can replace their software and data to be processed by the software. However, service controlling nodes 20 and data transferring nodes 30 are not limited to programmable nodes.
   Flexibility of distribution of transactions for data communications in a network depends on how flexibly each node can change its node functions. For example, if all nodes included in communication network system 1C or 1D are perfect programmable nodes, namely nodes which can define and realize any kinds of node functions, any kinds of transactions for data communications can be realized at any node, namely communication network system 1C or 1D is in a state of being so-called "location-free". On the contrary, if nodes in communication network system 1C or 1D are nodes which can replace only data to be processed but cannot replace their functions, transactions for data communications can be transferred only among the nodes which can realize the common functions.
(2) In the embodiments explained above, network resources are categorized into node resources and link resources. However, network resources are not limited to those may be categorized in such a way, and network resources may include other kinds of resources. Moreover, usage ratios of CPU, congestion, and so on which are mentioned in the embodiments explained above are examples of indexes of statuses of node resources and link resources, or node resources and link resources, and other kinds of indexes or events, such as occurrence ratios of paging and latencies, may also be used.
(3) In the embodiments explained above, when network resources in the whole of communication network system 1C or 1D are controlled in an adaptive way so that the network resources are employed in an optimum condition, numbers of service controlling nodes 20 and data transferring nodes 30 in communication network system 1C or 1D does not change. However, the adaptive control according to the present invention can be applied to a case where new nodes may be added to communication network system 1C or 1D.
   More concretely, when a new node is added to the system, the new node or a node which is a partner of the new node transmits data indicating statuses of network resources of the new node to network resource status managing node 70. Network structure controlling node 1010 executes an adaptive control of network resources in the whole of communication network system 1C or 1D which includes the new node, on the basis of data stored in network resource status storing unit 73 of network resource status managing node 70.
(4) In the third embodiment, lock control requesting unit 1014 transmits a request for locking network resources, which may be employed when an adaptive control is executed following a plan, before the plan of a relocation of node functions or a restructuring of links and paths is made (step Sc502 in Fig. 36 and step Sc602 in Fig. 37). However, timing of transmission of a request is flexible, and lock control requesting unit 1014 may transmit a request for locking network resources after a plan of relocation or a plan of restructuring is made. More concretely, lock control requesting unit 1014 may transmit a request for locking network resources after step Sc507 in Fig. 36 or step Sc607 in Fig. 37, and before step Sc508 in Fig. 36 or step Sc608 in Fig. 37, and transmit a request for unlocking network resources after step Sc517 in Fig. 36 or step Sc620 in Fig. 37. In such a modified embodiment, only the network resources, which are actually employed following a plan of relocation or a plan of restructuring, are locked, and other network resources, which are not eventually employed according to the plan, are not locked uselessly.

## Claims

1. A communication network system (1A; 1B; 1C; 1D) having
a resource managing unit for managing statuses of node resources in a network and statuses of link resources in said network, and
a path structure controlling unit (122; 1012) for restructuring a structure of paths in said network into an optimum condition, in accordance with said statuses of link resources which are managed by said resource managing unit, in response to an instruction of restructuring,
**characterized by** comprising:
a node function location controlling unit (112; 1011) for relocating functions of functional nodes and data used for the functions in said network into an optimum condition, in accordance with said statuses of node resources which are managed by said resource managing unit, in response to an instruction of relocation, and
an adaptive control determining unit (13; 1013) for determining whether or not it is necessary to transmit either or both of said instruction of relocation to said node function location controlling unit (112; 1011) and said instruction of restructuring to said path structure controlling unit (122; 1012) on the basis of said statuses of node resources and said statuses of link resources which are managed by said resource managing unit; transmitting said instruction of relocation when the transmission of said instruction of relocation is determined to be necessary; transmitting said instruction of restructuring when the transmission of said instruction of restructuring is determined to be necessary.

2. A communication network system (1A; 1B; 1C; 1D) according to claim 1, further comprising:
service controlling devices each of which is one of said functional nodes and is capable of changing its own functions and data used for the functions, and comprises resources for providing communication services or data transfer services,
data transferring devices each of which is one of said functional nodes and is capable of changing its own functions, data used for the functions and connection statuses of paths for data communications, and comprises resources for providing communication services or data transfer services, and
a network structure controlling device which is connected to said service controlling devices and to said data transferring devices,
wherein, said network structure controlling device comprises said resource managing unit, said node function location controlling unit (112; 1011), said path structure controlling unit (122; 1012) and said adaptive control determining unit (13; 1013).

3. A communication network system (1A; 1B; 1C; 1D) according to claim 1, further comprising:
service controlling devices each of which is one of said functional nodes and is capable of changing its own functions and data used for the functions, and comprises resources for providing communication services or data transfer services,
data transferring devices each of which is one of said functional nodes and is capable of changing its own functions, data used for the functions and connection statuses of paths for data communications, and comprises resources for providing communication services or data transfer services,
network structure controlling devices which are distributed in said network, each of which comprises said node function location controlling unit (112; 1011), said path structure controlling unit (122; 1012) and said adaptive control determining unit (13; 1013), and
a lock controlling unit (74) for controlling locks of resources, when each of the resources should be controlled by only one of said network structure controlling devices to achieve the relocation or the restructuring, for avoiding each of the resources being controlled by more than one of said network structure controlling devices.

4. A network structure controlling device having
a path structure controlling unit (122; 1012) for restructuring a structure of paths in said network into an optimum condition, in accordance with statuses of link resources in said network, in response to an instruction of restructuring,
**characterized by** comprising:
a node function location controlling unit (112; 1011) for relocating functions of functional nodes and data used for the functions in a network into an optimum condition, in accordance with statutes of node resources in said network, in response to an instruction of relocation, and
an adaptive control determining unit (13; 1013) for determining whether or not it is necessary to transmit either or both of said instruction of relocation to said node function location controlling unit (112; 1011) and said instruction of restructuring to said path structure controlling unit (122; 1012) on the basis of said statuses of node resources and said statuses of link resources in said network; transmitting said instruction of relocation when the transmission of said instruction of relocation is determined to be necessary;
transmitting said instruction of restructuring when the transmission of said instruction of restructuring is determined to be necessary.

5. A network structure controlling device according to claim 4, wherein:
said adaptive control determining unit (13; 1013) makes the determination when said adaptive control determining unit (13; 1013) receives a request for an adaptive control of said node resources or said link resources from an external device.

6. A network structure controlling device according to claim 4, further comprising:
a resource status collecting unit for collecting data on said statuses of node resources and data on said statuses of link resources in said network through said network, and
a resource managing unit for storing said data on said statuses of node resources and said data on said statuses of link resources which are collected by said resource status collecting unit.

7. A network structure controlling device according to claim 4, further comprising:
a lock control requesting unit (1014) which transmits, when said instruction of relocation or said instruction of restructuring is transmitted and a certain resource is controlled by said network structure controlling device, a request for a lock control for avoiding said certain resource being controlled by another network structure controlling device, to a resource managing device for managing resources in said network.

8. A network structure controlling device according to any one of claims 4 to 7, wherein:
said node function location controlling unit (112; 1011) makes an optimum plan of said relocation and said path structure controlling unit (122; 1012) makes an optimum plan of said restructuring by exchanging with each other data on a draft plan of said relocation and data on a draft plan of said restructuring.

9. A network resource status managing device having a resource status collecting unit for collecting data on statuses of node resources and data on statuses of link resources in a network through said network, and
a network resource status storing unit (14; 73) for storing said data on statuses of node resources and said data on statuses of link resources which are collected by said resource status collecting unit,
**characterized by** comprising:
a lock controlling unit (74) for controlling a lock of a certain resource, when said certain resource is controlled by a certain network structure controlling device to achieve a relocation of functions of nodes and data used for the functions in said network or to achieve a restructuring of a structure of paths in said network, for avoiding said certain resource being controlled by another network structure controlling device, in response to a request for a lock control from said certain network structure controlling device.

10. An adaptive control method comprising:
a node resource status monitoring step for a service controlling device and a data transferring device, which are included in a communication network system, to monitor statuses of node resources, which are resources for providing communication services or data transfer services, and to transmit data indicating said statuses of node resources,
a link resource status monitoring step for said data transferring device to monitor statuses of link resources, which are resources for providing data transfer services, and to transmit data indicating said statuses of link resources,
a network resource status collecting step for a network resource status managing device in said communication network system (1A; 1B; 1C; 1D) to receive and store said data indicating said statuses of node resources transmitted in said node resource status monitoring step and to receive and store said data indicating said statuses of link resources transmitted in said link resource status monitoring step, and
an adaptive control determining step for a network structure controlling device in said communication network system (1A; 1B; 1C; 1D) to determine whether or not it is necessary to relocate functions and data for the functions of said service controlling device or of said data transferring device, and/or to restructure paths connected to said data transferring device, on the basis of data indicating said statuses of node resources and data indicating said statuses of link resources which are stored in said network resource status managing device, or in accordance with a request for an adaptive control of said node resources or said link resources from an external device.

11. An adaptive control method according to claim 10, comprising:
a planning step where
said network structure controlling device makes a plan of relocation of the functions and the data for the functions so that said node resources and said link resources can be used in an optimum condition, and transmits an instruction to instruct said relocation of the functions and the data for the functions to said service controlling device or to said data transferring device, when it is determined to be necessary to relocate the functions and the data for the functions in said adaptive control determining step,
or, said network structure controlling device makes a plan of restructuring of the paths so that said node resources and said link resources can be used in an optimum condition, and transmits an instruction to instruct said restructuring of the paths to said service controlling device or to said data transferring device, when it is determined to be necessary to restructure the paths in said adaptive control determining step.

12. An adaptive control method according to claim 10 or 11, comprising:
an optimizing step where
said service controlling device or said data transferring device changes its functions and data for the functions in accordance with said instruction to instruct said relocation of the functions and the data for the functions,
or, said data transferring device changes its paths in accordance with said instruction to instruct said restructuring of the paths.

13. An adaptive control method according to claim 11, wherein:
in said planning step,
said network structure controlling device further transmits, to said network resource status managing device, a request for a lock control for avoiding said node resources and said link resources, which are controlled by said network structure controlling device after the relocation, being controlled by another network structure controlling device, when it is determined to be necessary to relocate the functions and the data for the functions in said adaptive control determining step,
or, said network structure controlling device further transmits, to said network resource status managing device, a request for a lock control for avoiding said node resources and said link resources, which are controlled by said network structure controlling device after the restructuring, being controlled by another network structure controlling device, when it is determined to be necessary to restructure the paths in said adaptive control determining step,
and said adaptive control method further comprises
a lock controlling step for said network resource status managing device to receive the request for a lock control which is transmitted in said planning step, and to control locks of said node resources and said link resources in accordance with the request for a lock control.

14. An adaptive control method according to claim 13, wherein:
in said planning step,
said network structure controlling device makes an optimum plan of relocation of the functions and the data for the functions or an optimum plan of restructuring of the paths, on the basis of data on a draft plan of relocation of the functions and the data for the functions and data on a draft plan of restructuring of the paths.

## Patentansprüche

1. Kommunikationsnetzwerksystem (1A; 1B; 1C; 1D), aufweisend:
eine Ressourcenverwaltungseinheit zum Verwalten von Status von Netzwerkressourcen in einem Netzwerk und Status von Streckenressourcen im Netzwerk, und
eine Wegstruktursteuereinheit (122; 1012) zum Umstrukturieren einer Struktur von Wegen im Netzwerk in einen optimalen Zustand gemäß den Status von Streckenressourcen, welche von der Ressourcenverwaltungseinheit verwaltet werden, als Antwort auf eine Anweisung zur Umstrukturierung,
**dadurch gekennzeichnet, dass** es umfasst:
eine Knotenfunktionsstandort-Steuereinheit (112; 1011) zum Versetzen von Funktionen von Funktionsknoten und von für die Funktionen verwendeten Daten im Netzwerk in einen optimalen Zustand gemäß den Status von Knotenressourcen, welche von der Ressourcenverwaltungseinheit verwaltet werden, als Antwort auf eine Anweisung zur Versetzung,
eine Bestimmungseinheit für adaptive Steuerung (13; 1013) zum Bestimmen auf der Basis der Status von Knotenressourcen und der Status von Streckenressourcen, welche von der Ressourcenverwaltungseinheit verwaltet werden, ob es notwendig ist, eine oder beide von der Anweisung zur Versetzung an die Knotenfunktionsstandort-Steuereinheit (112; 1011) und der Anweisung zur Umstrukturierung an die Wegstruktursteuereinheit (122; 1012) zu senden oder nicht; Senden der Anweisung zur Versetzung, wenn bestimmt wird, dass das Senden der Anweisung zur Versetzung notwendig ist; Senden der Anweisung zur Umstrukturierung, wenn bestimmt wird, dass das Senden der Anweisung zur Umstrukturierung notwendig ist.

2. Kommunikationsnetzwerksystem (1A; 1B; 1C; 1D) nach Anspruch 1, ferner umfassend:
Dienststeuervorrichtungen, bei welchen es sich jeweils um einen der Funktionsknoten handelt und welche imstande sind, ihre eigenen Funktionen und für die Funktionen verwendete Daten zu ändern, und Ressourcen zum Bereitstellen von Kommunikationsdiensten oder Datenübertragungsdiensten umfassen,
Datenübertragungsvorrichtungen, bei welchen es sich jeweils um einen der Funktionsknoten handelt und welche imstande sind, ihre eigenen Funktionen, für die Funktionen verwendete Daten und Verbindungsstatus von Wegen für Datenübertragungen zu ändern, und Ressourcen zum Bereitstellen von Kommunikationsdiensten oder Datenübertragungsdiensten umfassen, und
eine Netzwerkstruktursteuervorrichtung, welche mit den Dienststeuervorrichtungen und mit den Datenübertragungsvorrichtungen verbunden ist,
wobei die Netzwerkstruktursteuervorrichtung die Ressourcenverwaltungseinheit, die Knotenfunktionsstandort-Steuereinheit (112; 1011), die Wegstruktursteuereinheit (122; 1012) und die Bestimmungseinheit für adaptive Steuerung (13; 1013) umfasst.

3. Kommunikationsnetzwerksystem (1A; 1B; 1C; 1D) nach Anspruch 1, ferner umfassend:
Dienststeuervorrichtungen, bei welchen es sich jeweils um einen der Funktionsknoten handelt und welche imstande sind, ihre eigenen Funktionen und für die Funktionen verwendet Daten zu ändern, und Ressourcen zum Bereitstellen von Kommunikationsdiensten oder Datenübertragungsdiensten umfassen,
Datenübertragungsvorrichtungen, bei welchen es sich jeweils um einen der Funktionsknoten handelt und welche imstande sind, ihre eigenen Funktionen, für die Funktionen verwendete Daten und Verbindungsstatus von Wegen für Datenübertragungen zu ändern, und Ressourcen zum Bereitstellen von Kommunikationsdiensten oder Datenübertragungsdiensten umfassen, und
Netzwerkstruktursteuervorrichtungen, welche im Netzwerk verteilt sind und welche jeweils die Knotenfunktionsstandort-Steuereinheit (112; 1011), die Wegstruktursteuereinheit (122; 1012) und die Bestimmungseinheit für adaptive Steuerung (13; 1013) umfassen, und
eine Blockierungssteuereinheit (74) zum Steuern von Blockierungen von Ressourcen, wenn jede der Ressourcen nur von einer der Netzwerkstruktursteuervorrichtungen gesteuert werden sollte, um die Versetzung oder die Umstrukturierung zu erreichen, um zu vermeiden, dass jede der Ressourcen von mehr als einer der Netzwerkstruktursteuervorrichtungen gesteuert wird.

4. Netzwerkstruktursteuervorrichtung, aufweisend:
eine Wegstruktursteuereinheit (122; 1012) zum Umstrukturieren einer Struktur von Wegen im Netzwerk in einen optimalen Zustand gemäß Status von Streckenressourcen im Netzwerk als Antwort auf eine Anweisung zur Umstrukturierung,
**dadurch gekennzeichnet, dass** sie umfasst:
eine Knotenfunktionsstandort-Steuereinheit (112; 1011) zum Versetzen von Funktionen von Funktionsknoten und von für die Funktionen verwendeten Daten in einem Netzwerk in einen optimalen Zustand gemäß Status von Knotenressourcen im Netzwerk als Antwort auf eine Anweisung zur Versetzung,
eine Bestimmungseinheit für adaptive Steuerung (13; 1013) zum Bestimmen auf der Basis der Status von Knotenressourcen und der Status von Streckenressourcen im Netzwerk, ob es notwendig ist, eine oder beide von der Anweisung zur Versetzung an die Knotenfunktionsstandort-Steuereinheit (112; 1011) und der Anweisung zur Umstrukturierung an die Wegstruktursteuereinheit (122; 1012) zu senden oder nicht; Senden der Anweisung zur Versetzung, wenn bestimmt wird, dass das Senden der Anweisung zur Versetzung notwendig ist; Senden der Anweisung zur Umstrukturierung, wenn bestimmt wird, dass das Senden der Anweisung zur Umstrukturierung notwendig ist.

5. Netzwerkstruktursteuervorrichtung nach Anspruch 4, wobei:
die Bestimmungseinheit für adaptive Steuerung (13; 1013) die Bestimmung durchführt, wenn die Bestimmungseinheit für adaptive Steuerung (13; 1013) eine Anforderung für eine adaptive Steuerung der Knotenressourcen oder der Streckenressourcen von einer externen Vorrichtung empfängt.

6. Netzwerkstruktursteuervorrichtung nach Anspruch 4, ferner umfassend:
eine Ressourcenstatuserfassungseinheit zum Erfassen von Daten über die Status von Knotenressourcen und Daten über die Status von Streckenressourcen im Netzwerk durch das Netzwerk, und
eine Ressourcenverwaltungseinheit zum Speichern der Daten über die Status von Knotenressourcen und die Daten über die Status von Streckenressourcen, welche von der Ressourcenstatuserfassungseinheit erfasst werden.

7. Netzwerkstruktursteuervorrichtung nach Anspruch 4, ferner umfassend:
eine Blockierungssteuerungsanforderungseinheit (1014), welche, wenn die Anweisung zur Versetzung oder die Anweisung zur Umstrukturierung gesendet wird und eine bestimmte Ressource von der Netzwerkstruktursteuervorrichtung gesteuert wird, eine Anforderung für eine Blockierungssteuerung an eine Ressourcenverwaltungsvorrichtung zum Verwalten von Ressourcen im Netzwerk sendet, um zu vermeiden, dass die bestimmte Ressource von einer anderen Netzwerkstruktursteuervorrichtung gesteuert wird,

8. Netzwerkstruktursteuervorrichtung nach einem der Ansprüche 4 bis 7, wobei:
die Knotenfunktionsstandort-Steuereinheit (112; 1011) einen optimalen Plan der Versetzung erstellt, und die Wegstruktursteuereinheit (122; 1012) einen optimalen Plan der Umstrukturierung erstellt, indem sie Daten über einen Planentwurf der Versetzung und Daten über einen Planentwurf der Umstrukturierung untereinander austauschen.

9. Netzwerkressourcenstatus-Verwaltungsvorrichtung mit einer Ressourcenstatuserfassungseinheit zum Erfassen von Daten über Status von Knotenressourcen und Daten über Status von Streckenressourcen in einem Netzwerk durch das Netzwerk, und
einer Netzwerkressourcenstatus-Speichereinheit (14; 73) zum Speichern der Daten über Status von Knotenressourcen und der Daten über Status von Streckenressourcen, welche von der Ressourcenstatuserfassungseinheit erfasst werden,
dadurch gekenntzeichnet, dass sie umfasst:
eine Blockierungssteuereinheit (74) zum Steuern einer Blockierung einer bestimmten Ressource, wenn die bestimmte Ressource von einer bestimmten Netzwerkstruktursteuervorrichtung gesteuert wird, um eine Versetzung von Funktionen von Knoten und von für die Funktionen verwendeten Daten im Netzwerk zu erreichen, oder eine Umstrukturierung einer Struktur von Wegen im Netzwerk zu erreichen, um zu vermeiden, dass die bestimmte Ressource von einer anderen Netzwerkstruktursteuervorrichtung gesteuert wird, als Antwort auf eine Anforderung für eine Blockierungssteuerung von der bestimmten Netzwerkstruktursteuervorrichtung.

10. Verfahren zur adaptiven Steuerung, umfassend:
einen Knotenressourcenstatus-Überwachungsschritt für eine Dienststeuervorrichtung und eine Datenübertragungsvorrichtung, welche in einem Kommunikationsnetzwerksystem enthalten sind, um Status von Knotenbetriebsmitteln zu überwachen, welche Ressourcen zum Bereitstellen von Kommunikationsdiensten oder Datenübertragungsdiensten sind, und Daten zu senden, welche die Status von Knotenressourcen anzeigen,
einen Streckenressourcenstatus-Überwachungsschritt für die Datenübertragungsvorrichtung, um Status von Streckenressourcen zu überwachen, welche Ressourcen zum Bereitstellen von Datenübertragungsdiensten sind, und Daten zu senden, welche die Status von Streckenressourcen anzeigen,
einen Netzwerkressourcenstatus-Erfassungsschritt für eine Netzwerkressourcenstatus-Verwaltungsvorrichtung im Kommunikationsnetzwerksystem (1A; 1B; 1C; 1D), um die Daten zu empfangen und zu speichern, welche die Status von Knotenressourcen anzeigen, die im Knotenressourcenstatus-Überwachungsschritt gesendet werden, und die Daten zu empfangen zu speichern, welche die Status von Streckenressourcen anzeigen, die im Streckenressourcenstatus-Überwachungsschritt gesendet werden, und
einen Bestimmungsschritt für adaptive Steuerung für eine Netzwerkstruktursteuervorrichtung im Kommunikationsnetzwerksystem (1A; 1B; 1C; 1D), um auf der Basis von in der Netzwerkressourcenstatus-Verwaltungsvorrichtung gespeicherten Daten, welche die Status von Knotenressourcen anzeigen, und Daten, welche die Status von Streckenressourcen anzeigen, oder gemäß einer Anforderung für eine adaptive Steuerung der Knotenressourcen oder der Streckenressourcen von einer externen Vorrichtung zu bestimmen, ob es notwendig ist, Funktionen und Daten für die Funktionen der Dienststeuervorrichtung oder der Datenübertragungsvorrichtung zu versetzen und/oder Wege umzustrukturieren, die mit der Datenübertragungsvorrichtung verbunden sind, oder nicht.

11. Verfahren zur adaptiven Steuerung nach Anspruch 10, umfassend:
einen Planungsschritt, wobei
die Netzwerkstruktursteuervorrichtung einen Plan zur Versetzung der Funktionen und der Daten für die Funktionen erstellt, so dass die Knotenressourcen und die Streckenressourcen in einem optimalen Zustand verwendet werden können, und eine Anweisung zum Anweisen der Versetzung der Funktionen und der Daten für die Funktionen an die Dienststeuervorrichtung oder die Datenübertragungsvorrichtung sendet, wenn im Bestimmungsschritt für adaptive Steuerung bestimmt wird, dass es notwendig ist, die Funktionen und die Daten für die Funktionen zu versetzen,
oder die Netzwerkstruktursteuervorrichtung einen Plan zur Umstrukturierung der Wege erstellt, so dass die Knotenressourcen und die Streckenressourcen in einem optimalen Zustand verwendet werden können, und eine Anweisung zum Anweisen der Umstrukturierung der Wege an die Dienststeuervorrichtung oder die Datenübertragungsvorrichtung sendet, wenn im Bestimmungsschritt für adaptive Steuerung bestimmt wird, dass es notwendig ist, die Wege umzustrukturieren.

12. Verfahren zur adaptiven Steuerung nach Anspruch 10 oder 11, umfassend:
einen Optimierungsschritt, wobei
die Dienststeuervorrichtung oder die Datenübertragungsvorrichtung ihre Funktionen und Daten für die Funktionen gemäß der Anweisung zum Anweisen der Versetzung der Funktionen und der Daten für die Funktionen ändert,
oder die Datenübertragungsvorrichtung ihre Wege gemäß der Anweisung zum Anweisen der Umstrukturierung der Wege ändert.

13. Verfahren zur adaptiven Steuerung nach Anspruch 11, wobei:
im Planungsschritt
die Netzwerkstruktursteuervorrichtung ferner eine Anforderung für eine Blockierungssteuerung an die Netzwerkressourcenstatus-Verwaltungsvorrichtung sendet, um zu vermeiden, dass die Knotenressourcen und die Streckenressourcen, welche nach der Versetzung von der Netzwerkstruktursteuervorrichtung gesteuert werden, von einer anderen Netzwerkstruktursteuervorrichtung gesteuert werden, wenn im Bestimmungsschritt für adaptive Steuerung bestimmt wird, dass es notwendig ist, die Funktionen und die Daten für die Funktionen zu versetzen,
oder die Netzwerkstruktursteuervorrichtung ferner eine Anforderung für eine Blockierungssteuerung an die Netzwerkressourcenstatus-Verwaltungsvorrichtung sendet, um zu vermeiden, dass die Knotenressourcen und die Streckenressourcen, welche nach der Umstrukturierung von der Netzwerkstruktursteuervorrichtung gesteuert werden, von einer anderen Netzwerkstruktursteuervorrichtung gesteuert werden, wenn im Bestimmungsschritt für adaptive Steuerung bestimmt wird, dass es notwendig ist, die Wege umzustrukturieren, und das Verfahren zur adaptiven Steuerung ferner umfasst:
einen Blockierungssteuerschritt für die Netzwerkressourcenstatus-Verwaltungsvorrichtung, um die Anforderung für eine Blockierungssteuerung zu empfangen, welche im Planungsschritt gesendet wird, und die Knotenressourcen und die Streckenressourcen gemäß der Anforderung für eine Blockierungssteuerung zu blockieren.

14. Verfahren zur adaptiven Steuerung nach Anspruch 13, wobei:
im Planungsschritt
die Netzwerkstruktursteuervorrichtung auf der Basis von Daten über einen Planentwurf zur Versetzung der Funktionen und der Daten für die Funktionen und Daten über einen Planentwurf zur Umstrukturierung der Wege einen optimalen Plan zur Versetzung der Funktionen und der Daten für die Funktionen oder einen optimalen Plan zur Umstrukturierung der Wege erstellt.

## Revendications

1. Système de réseau de communication (1A ; 1B ; 1C ; 1D) ayant
une unité de gestion de ressources pour gérer des états de ressources de noeuds dans un réseau et des états de ressources de liaison dans ledit réseau, et
une unité (122 ; 1012) de commande de structure de trajets pour restructurer une structure de trajets dans ledit réseau dans une condition optimale, conformément auxdits états de ressources de liaison qui sont gérées par ladite unité de gestion de ressources, en réponse à une instruction de restructuration,
**caractérisé par** le fait de comprendre :
une unité (112 ; 1011) de commande d'emplacement de fonctions de noeuds pour déplacer des fonctions de noeuds fonctionnels et des données utilisées pour les fonctions dans ledit réseau dans une condition optimale, conformément auxdits états de ressources de noeuds qui sont gérées par ladite unité de gestion de ressources, en réponse à une instruction de déplacement, et
une unité (13 ; 1013) de détermination de commande adaptative pour déterminer s'il est nécessaire ou pas de transmettre l'une de ladite instruction de déplacement à ladite unité (112 ; 1011) de commande d'emplacement de fonctions de noeuds et de ladite instruction de restructuration à ladite unité (122 ; 1012) de commande de structure de trajets, ou les deux à la fois, sur la base desdits états de ressources de noeuds et desdits états de ressources de liaison qui sont gérées par ladite unité de gestion de ressources ; transmettre ladite instruction de déplacement lorsque la transmission de ladite instruction de déplacement est jugée nécessaire ; transmettre ladite instruction de restructuration lorsque la transmission de ladite instruction de restructuration est jugée nécessaire.

2. Système de réseau de communication (1A ; 1B ; 1C ; 1D) selon la revendication 1, comprenant en outre :
des dispositifs de commande de services dont chacun représente l'un desdits noeuds fonctionnels et est capable de changer ses propres fonctions et les données utilisées pour les fonctions, et comprend des ressources destinées à fournir des services de communication ou des services de transfert de données,
des dispositifs de transfert de données dont chacun représente l'un desdits noeuds fonctionnels et est capable de changer ses propres fonctions, les données utilisées pour les fonctions et les états de connexion des trajets pour les communications de données, et comprend des ressources destinées à fournir des services de communication ou des services de transfert de données, et
un dispositif de commande de structure de réseau qui est connecté auxdits dispositifs de commande de services et auxdits dispositifs de transfert de données,
où, ledit dispositif de commande de structure de réseau comprend ladite unité de gestion de ressources, ladite unité (112 ; 1011) de commande d'emplacement de fonctions de noeuds, ladite unité (122 ; 1012) de commande de structure de trajets et ladite unité (13 ; 1013) de détermination de commande adaptative.

3. Système de réseau de communication (1A ; 1B ; 1C ; 1D) selon la revendication 1, comprenant en outre :
des dispositifs de commande de services dont chacun représente l'un desdits noeuds fonctionnels et est capable de changer ses propres fonctions et les données utilisées pour les fonctions, et comprend des ressources destinées à fournir des services de communication ou des services de transfert de données,
des dispositifs de transfert de données dont chacun représente l'un desdits noeuds fonctionnels et est capable de changer ses propres fonctions, les données utilisées pour les fonctions et les états de connexion des trajets pour les communications de données, et comprend des ressources destinées à fournir des services de communication ou des services de transfert de données,
des dispositifs de commande de structure de réseau qui sont distribués dans ledit réseau, dont chacun comprend ladite unité (112 ; 1011) de commande d'emplacement de fonctions de noeuds, ladite unité (122 ; 1012) de commande de structure de trajets et ladite unité (13 ; 1013) de détermination de commande adaptative, et
une unité (74) de commande de verrouillage pour commander des verrous de ressources, lorsque chacune des ressources ne doit être commandée que par l'un desdits dispositifs de commande de structure de réseau afin d'effectuer le déplacement ou la restructuration, pour empêcher que chacune des ressources ne soit commandée par plus d'un desdits dispositifs de commande de structure de réseau.

4. Dispositif de commande de structure de réseau ayant
une unité (122 ; 1012) de commande de structure de trajets pour restructurer une structure de trajets dans ledit réseau dans une condition optimale, conformément aux états des ressources de liaison dans ledit réseau, en réponse à une instruction de restructuration,
**caractérisé par** le fait de comprendre :
une unité (112 ; 1011) de commande d'emplacement de fonctions de noeuds pour déplacer des fonctions de noeuds fonctionnels et des données utilisées pour les fonctions dans un réseau dans une condition optimale, conformément aux états de ressources de noeuds dans ledit réseau, en réponse à une instruction de déplacement, et
une unité (13 ; 1013) de détermination de commande adaptative pour déterminer s'il est nécessaire ou pas de transmettre l'une de ladite instruction de déplacement à ladite unité (112 ; 1011) de commande d'emplacement de fonctions de noeuds et de ladite instruction de restructuration à ladite unité (122 ; 1012) de commande de structure de trajets ou les deux à la fois, sur la base desdits états de ressources de noeuds et desdits états de ressources de liaison dans ledit réseau ; transmettre ladite instruction de déplacement lorsque la transmission de ladite instruction de déplacement est jugée nécessaire ; transmettre ladite instruction de restructuration lorsque la transmission de ladite instruction de restructuration est jugée nécessaire.

5. Dispositif de commande de structure de réseau selon la revendication 4, dans lequel :
ladite unité (13 ; 1013) de détermination de commande adaptative établit la détermination lorsque ladite unité (13 ; 1013) de détermination de commande adaptative reçoit une demande de commande adaptative desdites ressources de noeuds ou desdites ressources de liaison à partir d'un dispositif externe.

6. Dispositif de commande de structure de réseau selon la revendication 4, comprenant en outre :
une unité de collecte d'états de ressources pour collecter des données sur lesdits états de ressources de noeuds et des données sur lesdits états de ressources de liaison dans ledit réseau à travers ledit réseau, et
une unité de gestion de ressources pour stocker lesdites données sur lesdits états de ressources de noeuds et lesdites données sur lesdits états de ressources de liaison qui sont collectés par ladite unité de collecte d'états de ressources.

7. Dispositif de commande de structure de réseau selon la revendication 4, comprenant en outre :
une unité (1014) de demande de commande de verrouillage qui transmet, lorsque ladite instruction de déplacement ou ladite instruction de restructuration est transmise et lorsqu'une certaine ressource est commandée par ledit dispositif de commande de structure de réseau, une demande de commande de verrouillage pour empêcher que ladite certaine ressource ne soit commandée par un autre dispositif de commande de structure de réseau, à un dispositif de gestion de ressources pour gérer des ressources dans ledit réseau.

8. Dispositif de commande de structure de réseau selon l'une quelconque l'une quelconque des revendications 4 à 7, dans lequel :
ladite unité (112 ; 1011) de commande d'emplacement de fonctions de noeuds établit un plan optimal dudit déplacement et ladite unité (122 ; 1012) de commande de structure de trajets établit un plan optimal de ladite restructuration en échangeant l'une avec l'autre des données sur un plan provisoire dudit déplacement et des données sur un plan provisoire de ladite restructuration.

9. Dispositif de gestion d'états de ressources de réseau ayant une unité de collecte d'états de ressources pour collecter des données sur les états de ressources de noeuds et des données sur les états de ressources de liaison dans un réseau à travers ledit réseau, et
une unité (14 ; 73) de stockage d'états de ressources de réseau pour stocker lesdites données sur les états de ressources de noeuds et lesdites données sur les états de ressources de liaison qui sont collectés par ladite unité de collecte d'états de ressources,
**caractérisé par** le fait de comprendre :
une unité (74) de commande de verrouillage pour commander un verrou d'une certaine ressource, lorsque ladite certaine ressource est commandée par un certain dispositif de commande de structure de réseau afin d'effectuer un déplacement de fonctions de noeuds et de données utilisées pour les fonctions dans ledit réseau ou d'effectuer une restructuration d'une structure de trajets dans ledit réseau, pour empêcher que ladite certaine ressource ne soit commandée par un autre dispositif de commande de structure de réseau, en réponse à une demande de commande de verrouillage à partir dudit certain dispositif de commande de structure de réseau.

10. Procédé de commande adaptative comprenant :
une étape de surveillance d'états de ressources de noeuds pour un dispositif de commande de services et un dispositif de transfert de données, qui sont inclus dans un système de réseau de communication, pour surveiller des états de ressources de noeuds, qui sont des ressources destinées à fournir des services de communication ou des services de transfert de données, et pour transmettre des données indiquant lesdits états de ressources de noeuds,
une étape de surveillance d'états de ressources de liaison pour ledit dispositif de transfert de données pour surveiller des états de ressources de liaison, qui sont des ressources destinées à fournir des services de transfert de données, et pour transmettre des données indiquant lesdits états de ressources de liaison,
une étape de collecte d'états de ressources de réseau pour un dispositif de gestion d'états de ressources de réseau dans ledit système de réseau de communication (1A ; 1B ; 1C ; 1D) pour recevoir et stocker lesdites données indiquant lesdits états de ressources de noeuds transmis dans ladite étape de surveillance d'états de ressources de noeuds et pour recevoir et stocker lesdites données indiquant lesdits états de ressources de liaison transmis dans ladite étape de surveillance d'états de ressources de liaison, et
une étape de détermination de commande adaptative pour un dispositif de commande de structure de réseau dans ledit système de réseau de communication (1A ; 1B ; 1C ; 1D) pour déterminer s'il est nécessaire ou pas de déplacer des fonctions et des données pour les fonctions dudit dispositif de commande de services ou dudit dispositif de transfert de données, et/ou pour restructurer des trajets connectés audit dispositif de transfert de données, sur la base de données indiquant lesdits états de ressources de noeuds et de données indiquant lesdits états des ressources de liaison qui sont stockés dans ledit dispositif de gestion d'états de ressources de réseau, ou conformément à une demande de commande adaptative desdites ressources de noeuds ou desdites ressources de liaison à partir d'un dispositif externe.

11. Procédé de commande adaptative selon la revendication 10, comprenant :
une étape de planification où
ledit dispositif de commande de structure de réseau établit un plan de déplacement des fonctions et des données pour les fonctions de sorte que lesdites ressources de noeuds et lesdites ressources de liaison puissent être utilisées dans une condition optimale, et transmet une instruction pour ordonner ledit déplacement des fonctions et des données pour les fonctions audit dispositif de commande de services ou audit dispositif de transfert de données, lorsque le déplacement des fonctions et des données pour les fonctions dans ladite étape de détermination de commande adaptative est jugé nécessaire,
ou, ledit dispositif de commande de structure de réseau établit un plan de restructuration des trajets de telle sorte que lesdites ressources de noeuds et lesdites ressources de liaison puissent être utilisées dans une condition optimale, et transmet une instruction pour ordonner ladite restructuration des trajets audit dispositif de commande de services ou audit dispositif de transfert de données,
lorsque la restructuration des trajets dans ladite étape de détermination de commande adaptative est jugée nécessaire.

12. Procédé de commande adaptative selon la revendication 10 ou 11, comprenant :
une étape d'optimisation où
ledit dispositif de commande de services ou ledit dispositif de transfert de données change ses fonctions et les données pour les fonctions conformément à ladite instruction pour ordonner ledit déplacement des fonctions et des données pour les fonctions,
ou, ledit dispositif de transfert de données change ses trajets conformément à ladite instruction pour ordonner ladite restructuration des trajets.

13. Procédé de commande adaptative selon la revendication 11, dans lequel :
dans ladite étape de planification,
ledit dispositif de commande de structure de réseau transmet en outre, audit dispositif de gestion d'états de ressources de réseau, une demande de commande de verrouillage pour empêcher que lesdites ressources de noeuds et lesdites ressources de liaison, qui sont commandées par ledit dispositif de commande de structure de réseau après le déplacement, ne soient commandées par un autre dispositif de commande de structure de réseau, lorsque le déplacement des fonctions et des données pour les fonctions dans ladite étape de détermination de commande adaptative est jugé nécessaire,
ou, ledit dispositif de commande de structure de réseau transmet en outre, audit dispositif de gestion d'états de ressources de réseau, une demande de commande de verrouillage afin d'éviter que lesdites ressources de noeuds et lesdites ressources de liaison, qui sont commandées par ledit dispositif de commande de structure de réseau après la restructuration, ne soient commandées par un autre dispositif de commande de structure de réseau, lorsque la restructuration des trajets dans ladite étape de détermination de commande adaptative est jugée nécessaire, et ledit procédé de commande adaptative comprend en outre
une étape de commande de verrouillage pour ledit dispositif de gestion d'états de ressources de réseau pour recevoir la demande de commande de verrouillage qui est transmise dans ladite étape de planification, et commander des verrous desdites ressources de noeuds et desdites ressources de liaison conformément à la demande de commande de verrouillage.

14. Procédé de commande adaptative selon la revendication 13, dans lequel :
dans ladite étape de planification,
ledit dispositif de commande de structure de réseau établit un plan optimal de déplacement des fonctions et des données pour les fonctions ou un plan optimal de restructuration des trajets, sur la base de données sur un plan provisoire de déplacement des fonctions et des données pour les fonctions et de données sur un plan provisoire de restructuration des trajets.
